# EUROPEAN PATENT APPLICATION

(11) **EP 4 793 332 A1**
(43) Date of publication of application: **19.08.2026**
(21) Application number: 26158828.9
(22) Date of filing: 16.02.2026
(51) Int. Cl.: C09K 19/52

(54) **POLYMERIZABLE LIQUID CRYSTAL FORMULATIONS**

(30) Priority: 18.02.2025 EP 25158533
(71) Applicant: Merck Patent GmbH, 64293 Darmstadt (DE)
(72) Inventor: Shargaieva, Oleksandra, 64293 Darmstadt (DE)
(74) Representative: Merck Patent Association

(57) **Abstract**

The invention relates to polymerizable liquid crystal (LC) formulations (as a subcategory of liquid crystal material), especially to polymerizable LC ink formulations for inkjet printing, which are preferably PFAS-free (for enabling the reduction of perfluorocarbons and providing an environment friendly material), and which are comprising one or more polymerizable mesogenic compounds, also known as reactive mesogens (RMs), and three or more organic solvents, to polymers and polymer films obtained from such formulations, and to the use of the formulations, polymers and polymer films in optical or electrooptical components or devices, especially for digital optics or augmented reality or virtual reality (AR/VR) applications like polarizers, optical compensators, reflective films, diffraction or surface gratings, Bragg polarization gratings (Bragg PG), polarization volume gratings (PVG), polarization volume holograms (PVH), Pancharatnam Berry (PB) gratings, nonmechanical beam steering elements, optical waveguides, optical couplers, optical combiners, optical deflectors, polarization beam splitters, partial mirrors or lenses.

## Description

### Field of the Invention

The invention relates to polymerizable liquid crystal (LC) formulations (as a subcategory of liquid crystal material), especially to polymerizable LC ink formulations for inkjet printing, which are preferably PFAS-free (for enabling the reduction of perfluorocarbons and providing an environment friendly material), and which are comprising one or more polymerizable mesogenic compounds, also known as reactive mesogens (RMs), and three or more organic solvents, to polymers and polymer films obtained from such formulations, and to the use of the formulations, polymers and polymer films in optical or electrooptical components or devices, especially for digital optics or augmented reality or virtual reality (AR/VR) applications like polarizers, optical compensators, reflective films, diffraction or surface gratings, Bragg polarization gratings (Bragg PG), polarization volume gratings (PVG), polarization volume holograms (PVH), Pancharatnam Berry (PB) gratings, nonmechanical beam steering elements, optical waveguides, optical couplers, optical combiners, optical deflectors, polarization beam splitters, partial mirrors or lenses.

### Background and Prior Art

Reactive mesogens (RMs) or polymerizable LCs combine the properties of liquid crystals and polymers. RMs can be used for the preparation of functional films or coatings with adjustable refractive indices, polarization, and surface alignment. These materials can be applied to waveguides or optics in AR or VR devices to enhance performance, image quality, field of view, and overall user experience. Furthermore, the polymerized RMs can form thin films with high birefringence that can be integrated into flexible, lightweight devices. The quality of the RM layer is essential for the visual quality as well as device performance.

Inkjet printing (IJP) is one of the most promising methods for the deposition of RM materials from solution since it allows for a selective material deposition in regions of interest. To use an RM formulation in inkjet printing, several requirements such as jettability, stability (shelf life), and process compatibility must be satisfied.

Additionally, substrate-solution interactions define the resulting quality of the device. Solvent selection has a particular influence on the parameters of the formulation and often determines whether a formulation is suitable for use in inkjet printing. In the case of RM formulations, additional requirements related to good LC alignment are also essential.

In prior art, typical solvents proposed for use in RM formulations are selected from short chain, low boiling point ketones, alcohols, glycols, or their esters. Among aromatic compounds, toluene and xylene are also often mentioned. However, the influence of the solvent choice on the quality of the printed film in terms of wetting and shape retention is usually not addressed.

However, the solvent selection has a particular influence on the parameters of a formulation and often determines whether it is suitable for use in inkjet printing onto a specific substrate. In many cases, solvents that are suitable for inkjet printing have poor solubility of the solute or are not suitable for further processing conditions and vice versa. In addition to substrate-liquid interactions, the formulation should also be suitable in terms of solubility and jetting stability.

Moreover, when producing multilayer optical elements where multiple RM layers are deposited directly onto each other, it is important to ensure good and uniform alignment quality, prevent the underlying RM layer from damage when depositing the next RM layer on top of it, and enable strong intermolecular interactions between the RM layers to impart the alignment direction from one RM layer to the next RM layer. At the same time, it should be avoided that the solvents used in the formulation for depositing the second RM layer onto the first RM layer may cause damage to the first layer or allow migration of individual components of the second RM formulation into the first layer.

It is therefore desirable to provide RM formulations which are especially suitable for use as printing inks, and which enable good solubility of the RMs and show further advantageous properties like good wetting, good jettability, high jetting stability, long shelf life and good process compatibility for standard printing processes, especially inkjet printing, which avoid damage to cured RM layers used as substrates, and which can also be used in large scale production.

It is an aim of the present invention to provide RM formulations which show one or more of the above-mentioned advantages. Other aims of the present invention are immediately evident to the person skilled in the art from the following detailed description.

Surprisingly, the inventors of the present invention have found that these aims could be achieved by providing RM formulations according to the invention as described and claimed hereinafter.

Thus, the inventors of the present invention have surprisingly found that by using the solvents and solvent blends in combination with the RMs according to the present invention as described hereinafter, it is possible to obtain formulations which show one or more of optimum solubility, good wetting, good jetting properties, high stability, suitable processing window and good process compatibility, and allow tuning of the parameters needed for inkjet printing. While these RM formulations are especially suitable for inkjet printing, they can also be used for other printing or coating methods as described below.

### Summary of the invention

The present invention relates to a formulation (hereinafter also referred to as "RM formulation") comprising a polymerizable mesogenic compound (hereinafter also referred to as "reactive mesogen" or "RM") or a mixture of two or more polymerizable mesogenic compounds (hereinafter also referred to as "RM mixture"), and further comprising a solvent blend consisting of three or more, preferably three, organic solvents,
wherein the solvent blend comprises a first solvent which is a cycloalkanone with 5, 6, 7 or 8 C atoms, preferably cyclohexanone or cycloheptanone, a second solvent which is an aromatic ketone or an aromatic ester, preferably selected from formulae S1A and S1B, and a third solvent which is an aliphatic ketone, an aliphatic or aromatic alcohol or a glycol, preferably selected from formulae S2A, S2B, S2C and S2D:

   Ar³¹-(CH₂)ₐ-CO-R³¹ S1A

   Ar^{S2}-(CH₂)_{b}-Z^{S}-R^{S2} S1B

   R^{S3}-CO-R^{S4} S2A

   R^{S3}-C(OH)R^{S4}R^{S5} S2B

   R^{S6}-OH S2C

   R^{S7}-O-(CHR^{S8}-CHR^{S9}-O)_{c}-R^{S10} S2D
wherein the individual radicals, independently of each other and on each occurrence identically or differently, have the following meanings
   - Ar^{S1}, Ar^{S2}: aryl or heteroaryl with 5 or 6 ring atoms, which optionally contains one or two hetero atoms selected from N, O and S, preferably phenyl, and which is optionally substituted by one or more groups L^{S},
   - L^{S}: F, Cl, or optionally halogenated alkyl, alkoxy, alkylcarbonyl, alkoxycarbonyl, alkylcarbonyloxy or alkoxycarbonyloxy with 1 to 5 C atoms, preferably alkyl with 1 to 5 C-atoms,
   - R^{S1}: alkyl with 1 to 8, preferably 1 to 6, C atoms, very preferably methyl, ethyl, n-propyl, sec-propyl, isopropyl, n-butyl, sec-butyl, isobutyl or tert-butyl, most preferably ethyl or isobutyl,
   - Z^{S}: -CO-O- or -O-CO-,
   - R^{S2}: alkyl with 1 to 8, preferably 1 to 6, C atoms, very preferably methyl, ethyl, propyl or butyl, most preferably methyl or ethyl,
   - R^{S3}: alkyl with 1 to 7, preferably 1 to 5, C atoms, very preferably methyl, ethyl, propyl or butyl, most preferably methyl or ethyl,
   - R^{S4}: alkyl with 1 to 15, preferably 5 to 11, C atoms,
   - and R^{S3} and R^{S4}: may also together with the hydroxy-C-atom form an optionally substituted cycloalkyl group with 5 to 8, preferably 5 or 6, ring atoms,
   - R^{S5}: H or alkyl with 1 to 6 C atoms, preferably H,
wherein the total number of C atoms in formula S2A and S2B is from 5 to 16, very preferably from 5 to 12,
   - R^{S6}: alkyl with 1 to 12, preferably 4 to 11, C atoms, or phenylalkyl with 1 to 4 alkyl-C-atoms, preferably phenylmethyl, 2-phenylethyl or 3-phenylpropyl,
   - R^{S7}: H, methyl, acetyl or phenyl, very preferably H, acetyl or phenyl,
   - R^{S8}, R^{S9}: H, methyl or ethyl, very preferably H or methyl,
   - R^{S10}: H, methyl or ethyl,
   - a: 0 or 1,
   - b: 0 or 1,
   - c: 1, 2 or 3.

The invention further relates to an RM formulation as described above and below, which further comprises one or more additives, preferably selected from the group consisting of polymerization initiators, surfactants, stabilisers, catalysts, sensitizers, inhibitors, chain-transfer agents, co-reacting monomers, reactive thinners, surface-active compounds, lubricating agents, wetting agents, dispersing agents, hydrophobing agents, adhesive agents, flow improvers, degassing or defoaming agents, deaerators, diluents, reactive diluents, auxiliaries, colourants, dyes, pigments and nanoparticles.

The invention further relates to a polymer or polymer film obtainable or obtained from an RM formulation as described above and below.

The invention further relates to a process of preparing a polymer or polymer film from an RM formulation containing an RM or RM mixture and a solvent or solvent blend as described above and below, comprising the steps of depositing a layer of the RM formulation onto a substrate, preferably removing the solvents, optionally annealing the layer, and polymerizing the RM or RM mixture, preferably at a temperature where it exhibits a liquid crystal phase, and wherein the RM formulation is preferably deposited onto the substrate by a printing method, very preferably by inkjet printing.

The invention further relates to the use of the RM formulation, polymer or polymer film as described above and below in optical, electrooptical or electronic components or devices.

The invention further relates to an optical, electrooptical or electronic device or a component comprising an RM formulation, polymer or polymer film as described above and below.

Said components include, without limitation, optical retardation films like quarter-wave plates (QWP) or half-wave plates (HWP), polarizers, optical compensators, reflective films, diffraction or surface gratings such as Bragg polarization gratings (Bragg PG), polarization volume gratings (PVG), polarization volume holograms (PVH), Pancharatnam Berry (PB) gratings, furthermore nonmechanical beam steering elements, optical waveguides, optical couplers, deflectors or combiners, polarization beam splitters, partial mirrors, reflective films, alignment layers, colour filters, antistatic protection sheets, electromagnetic interference protection sheets, lenses for light guides, focusing and optical effects, polarization controlled lenses, PB deflectors, PB lenses and IR reflection films; for example for use in LC displays (LCDs), organic light emitting diodes (OLEDs), autostereoscopic 3D displays, see-through near-eye displays, augmented reality( AR) or virtual reality (VR) systems, switchable windows, spatial light modulators, optical data storage, remote optical sensing, holography, spectroscopy, optical telecommunications, polarimetry or front/back-lighting.

Said devices include, without limitation, electro optical displays, especially LCDs, OLEDs, non-linear optic (NLO) devices, autostereoscopic 3D displays, see-through near-eye displays, head-up-displays, AR/VR systems, goggles for AR/VR applications, switchable windows, spatial light modulators, optical data storage devices, optical sensors, holographic devices, spectrometers, optical telecommunication systems, polarimeters or front-/backlights.

### Brief Description of the Drawings

**Fig. 1** shows a test pattern of 9 squares with different amount of deposited material to test the quality of the printed films as described in the examples below in terms of shape.
**Fig. 2a****-d** (x2 magnification) show stitched microscopic images between crossed polarizers of polymer films prepared from inkjet-printed RM reference formulations (a-c) and RM formulations according to the invention (d) as described in Example 1.
**Fig. 3a****&b** (x2 magnification) show stitched microscopic images between crossed polarizers of polymer films prepared from inkjet-printed RM formulations according to the invention as described in Example 2.
**Fig. 4a****&b** (x2 magnification) show stitched microscopic images between crossed polarizers of polymer films prepared from inkjet-printed RM formulations according to the invention as described in Example 3.
**Fig. 5a****-c** (x2 magnification) show stitched microscopic images between crossed polarizers of polymer films prepared from inkjet-printed RM reference formulations (a) and RM formulations according to the invention (b&c) as described in Example 4.

### Definitions of Terms

Throughout the description and claims of this specification, the words "comprise" and "contain" and variations of the words, for example "comprising" and "comprises", mean "including but not limited to", and are not intended to (and do not) exclude other components.

Unless the context clearly indicates otherwise, as used herein plural forms of the terms herein are to be construed as including the singular form and vice versa.

The term "film" as used herein includes rigid or flexible, self-supporting or freestanding films with mechanical stability, as well as coatings or layers on a supporting substrate or between two substrates.

As used herein, the terms "reactive mesogen" and "RM" will be understood to mean a compound containing a mesogenic or liquid crystalline skeleton, and one or more functional groups attached thereto, optionally via spacer groups, which are suitable for polymerization and are also referred to as "polymerizable group" or "P".

Unless stated otherwise, the term "polymerizable compound" as used herein will be understood to mean a polymerizable monomeric compound.

Polymerizable compounds or RMs with one polymerizable group are also referred to as "monoreactive" compounds, polymerizable compounds or RMs with two polymerizable groups as "direactive" compounds, and polymerizable compounds or RMs with more than two polymerizable groups as "multireactive" compounds. Compounds without a polymerizable group are also referred to as "non-reactive" compounds.

The terms "liquid crystal", "mesogen" and "mesogenic compound" as used herein mean a compound that under suitable conditions of temperature, pressure and concentration can exist as a mesophase or in particular as a LC phase.

The term "clearing point" means the temperature at which the transition between the mesophase with the highest temperature range and the isotropic phase occurs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerization. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerizable group(s) in a polymerizable mesogenic compound.

As used herein, the term "RM formulation" means a formulation comprising at least one RM or an RM mixture, and further comprising one or more solvents, preferably selected from organic solvents, as described above and below.

As used herein, the term "RM mixture" means a mixture comprising one or more, preferably two or more, more preferably two to ten, very preferably two to six RMs, The RM mixture optionally further comprises one or more solid additives including, without being limited to, polymerization initiators, inhibitors, surfactants and adhesion promoters, etc. as described in more detail below.

Unless stated otherwise, the percentage of a compound in an RM mixture as given above and below means % by weight of all solids in the RM mixture.

Unless stated otherwise, the percentage of a compound in an RM formulation as given above and below means % by weight of all solids in the RM formulation, including liquid additives as described below but excluding solvents.

The term "per- and/or polyfluoroalkyl substance (PFAS)" as used herein (following the definition by the OECD) means a substance or compound that contains at least one fully fluorinated methyl or methylene C atom (without any H/Cl/Br/I atom attached to it), i.e., a compound with at least one CF₃ or CF₂ group.

The expression "polyfluorinated alkyl or aryl group" as used herein means an alkyl or aryl group which is substituted by two or more F atoms (wherein the F atoms may be attached either to the same or different C atoms), thus including perfluorocarbon groups.

As used herein, the term "polymer" will be understood to mean a molecule that encompasses a backbone of one or more distinct types of repeating units (the smallest constitutional unit of the molecule) and is inclusive of the commonly known terms "oligomer", "copolymer", "homopolymer" and the like. Further, it will be understood that the term polymer is inclusive of, in addition to the polymer itself, residues from initiators, catalysts, and other elements attendant to the synthesis of such a polymer, where such residues are understood as not being covalently incorporated thereto. Further, such residues and other elements, while normally removed during post-polymerization purification processes, are typically mixed or co-mingled with the polymer such that they generally remain with the polymer when it is transferred between vessels or between solvents or dispersion media.

The term "polymerization" means the chemical process to form a polymer by bonding together multiple polymerizable groups or polymer precursors (polymerizable compounds) containing such polymerizable groups.

The term "chiral" in general is used to describe an object that is non-superimposable on its mirror image.

"Achiral" (non- chiral) objects are objects that are identical to their mirror image.

The terms "chiral nematic" and "cholesteric" are used synonymously in this application, unless explicitly stated otherwise.

The term "isomerizable / photoisomerizable compound" means a compound comprising one or more isomerizable or photoisomerizable groups, respectively.

The term "isomerizable group" means a functional group of a molecule that causes a change of the geometry of the molecule, i.e. isomerization, either by bond rotation, skeletal rearrangement or atom- or group- transfer, or by dimerization, which can be induced, e.g., thermally or photochemically or by adding a catalyst.

The term "photoisomerizable group" means a functional group of a molecule that causes a change of the geometry of the molecule, i.e. isomerization, either by bond rotation, skeletal rearrangement or atom- or group- transfer, or by dimerization, upon irradiation with light of a suitable wavelength that can be absorbed by the molecule (photoisomerization).

Examples of photoisomerizable groups are -C=C- double bonds and azo groups (-N=N-). Examples of molecular structures and sub-structures comprising such photoisomerizable groups are stilbene, (1,2-difluoro-2-phenyl-vinyl)-benzene, cinnamate, α-cyanocinnamate, 4-phenylbut-3-en-2-one, Schiff base (i.e., a group RⁱRⁱⁱC=NRⁱⁱⁱ, wherein Rⁱⁱⁱ is different from H, and is for example alkyl or aryl), 2-benzyliden-1-indanone, chalcone, coumarin, chromone, pentalenone and azobenzene.

A chiral RM formulation in accordance with the present invention can be prepared, for example, by doping a host mixture comprising one or more RMs with a chiral compound having a high twisting power.

The pitch p (in nm) of the induced cholesteric helix, hereinafter also referred to as "chiral pitch" or "helical pitch" is then given by the concentration c (in %) and the helical twisting power HTP (in nm⁻¹) of the chiral compound in accordance with the following equation:
p = (HTP c)⁻¹

A low value of the pitch is hereinafter also referred to as "short pitch", and a high value of the pitch is hereinafter also referred to as "long pitch". Also, a short pitch corresponds to a highly twisted structure, i.e., a higher twist angle, and a long pitch corresponds to a slowly twisted structure, i.e., a lower twist angle, around the helix axis within a given distance.

In case more than one chiral compound is used, the total HTP of the chiral compounds having the same configuration or twist sense (HTPₜₒₜₐₗ) holds then approximately the following equation: ${HTP}_{total} = {\sum }_{i} {c}_{i} {HTP}_{i}$ wherein cᵢ is the concentration of each individual chiral compound and HTP is the helical twisting power of each individual chiral compound.

The HTP of all chiral compounds within a mixture of different configurations or different twist sense (IHTP_{Δ}I) holds then approximately the following equation: $\left|{HTP}_{Δ}\right| = \left({\sum }_{s} {c}_{s} {HTP}_{s}\right) - \left(\left({\sum }_{r} {c}_{r} {HTP}_{r}\right)\right.$

wherein cₛ is the concentration of each individual chiral compound with S configuration, HTPₛ is the helical twisting power of each individual chiral compound having S configuration and wherein cᵣ is the concentration of each individual chiral compound with R configuration and HTP_{R} is the helical twisting power of each individual chiral compound having R configuration.

The birefringence Δn is defined as follows $Δn = {n}_{e} - {n}_{o}$ wherein nₑ is the extraordinary refractive index and nₒ is the ordinary refractive index, and the effective average refractive index nₐᵥ. is given by the following equation: ${n}_{av .} = {\left(\left(2{{n}_{o}}^{2}+{{n}_{e}}^{2}\right)/3\right)}^{\frac{1}{2}}$

The average refractive index nₐᵥ. and the ordinary refractive index nₒ can be measured using an Abbe refractometer. Δn can then be calculated from the above equations.

The term "visible light" means electromagnetic radiation with a wavelength in a range from about 400 nm to about 740 nm. "Ultraviolet (UV) light" means electromagnetic radiation with a wavelength in a range from about 200 nm to about 450 nm.

According to the present application, the term "linearly polarised light" means light, which is at least partially linearly polarized. Preferably, the aligning light is linearly polarized with a degree of polarization of more than 5:1. Wavelengths, intensity and energy of the linearly polarised light are chosen depending on the photosensitivity of the photoalignable material. Typically, the wavelengths are in the UV-A, UV-B and/or UV-C range or in the visible range. Preferably, the linearly polarised light comprises light of wavelengths less than 450 nm, more preferably less than 420 nm at the same time the linearly polarised light preferably comprises light of wavelengths longer than 280nm, preferably more than 320nm, more preferably over 350nm.

On the molecular level, the birefringence of a liquid crystal depends on the anisotropy of the polarizability (Δα= 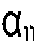 -α⊥). "Polarisability" means the ease with which the electron distribution in the atom or molecule can be distorted. The polarizability increases with greater number of electrons and a more diffuse electron cloud. The polarizability can be calculated using a method described in e.g. Jap. J. Appl. Phys. 42, (2003) p. 3463.

The term "director" is known in prior art and means the preferred orientation direction of the long molecular axes (in case of calamitic compounds) or short molecular axes (in case of discotic compounds) of the liquid-crystalline or RM molecules. In case of uniaxial ordering of such anisotropic molecules, the director is the axis of anisotropy.

The term "alignment" or "orientation" relates to alignment (orientational ordering) of anisotropic units of material such as small molecules or fragments of big molecules in a common direction named "alignment direction". In an aligned layer of liquid-crystalline or RM material the liquid-crystalline director coincides with the alignment direction so that the alignment direction corresponds to the direction of the anisotropy axis of the material.

The terms "uniform orientation" or "uniform alignment" of a liquid-crystalline or RM material, for example in a layer of the material, mean that the long molecular axes (in case of calamitic compounds) or the short molecular axes (in case of discotic compounds) of the liquid-crystalline or RM molecules are oriented substantially in the same direction. In other words, the lines of liquid-crystalline director are parallel.

The terms "homeotropic structure / alignment / orientation" refer to a film wherein the optical axis is substantially perpendicular to the film plane.

The terms "planar structure /alignment / orientation" refer to a film wherein the optical axis is substantially parallel to the film plane.

All temperatures, such as, for example, the melting point T(C,N) or T(C,S), the transition from the smectic (S) to the nematic (N) phase T(S,N) and the clearing point T(N,I) of the liquid crystals, are quoted in degrees Celsius. All temperature differences are quoted in differential degrees.

In case of doubt the definitions as given in C. Tschierske, G. Pelzl and S. Diele, Angew. Chem. 2004, 116, 6340-6368 shall apply.

If in the formulae shown above and below a group R, including any variations thereof such as R¹, R⁰, R⁰⁰, R^{0*}, R¹¹, R*, R**, R^{C}, R³, R⁴ etc., or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If in the formulae shown above and below a group R including any variations thereof such as R¹, R⁰, R⁰⁰, R*⁰, R¹¹, R²², R^{C}, R³, R⁴ etc., or L denotes an alkyl radical and/or an alkoxy radical, this may be straight-chain or branched. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

If in the formulae shown above and below a group R including any variations thereof such as R¹, R⁰, R⁰⁰, R^{0*}, R¹¹, R²², R^{C}, R³, R⁴etc., or L denotes an alkyl radical wherein one or more CH₂ groups are replaced by S, this may be straight-chain or branched. It is preferably straight-chain, has 1, 2, 3, 4, 5, 6 or 7 C atoms and accordingly preferably denotes thiomethyl, thioethyl, thiopropyl, thiobutyl, thiopentyl, thiohexyl or thioheptyl.

Oxaalkyl preferably denotes straight-chain 2-oxapropyl (= methoxymethyl), 2-oxabutyl (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

If in the formulae shown above and below a group R including any variations thereof such as R¹, R⁰, R⁰⁰, R*⁰, R¹¹, R²², R^{C}, R³, R⁴ etc., or L denotes an alkoxy or oxaalkyl group it may also contain one or more additional oxygen atoms, provided that oxygen atoms are not linked directly to one another.

In another preferred embodiment, one or more of R including any variations thereof such as R¹, R⁰, R⁰⁰, R*⁰, R¹¹, R²², R^{C}, R³, R⁴ etc., or L are selected from the group consisting of 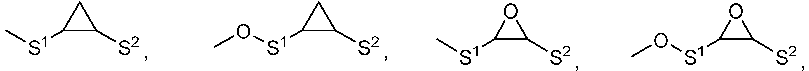 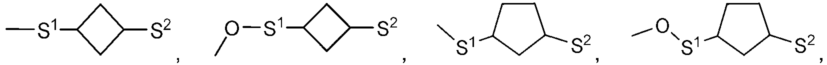 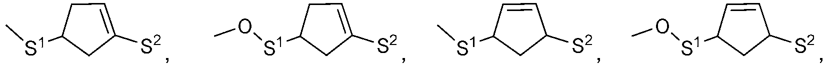 -S¹-F, -O-S¹-F, -O-S₁-O-S₂, wherein S¹ is C₁₋₁₂-alkylene or C₂₋₁₂-alkenylene and S² is H, C₁₋₁₂-alkyl or C₂₋₁₂-alkenyl, and very preferably are selected from the group consisting of 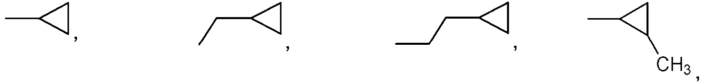 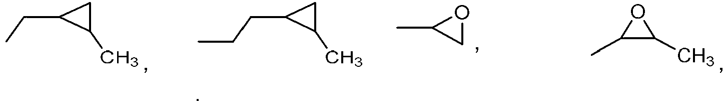 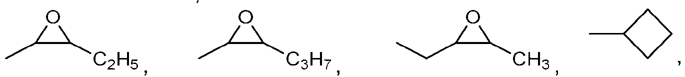 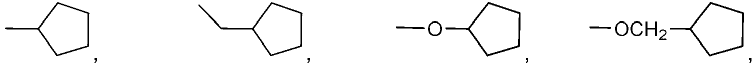 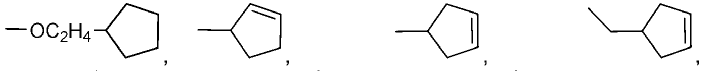 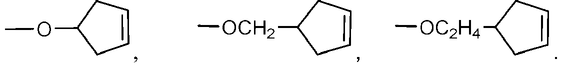 -OCH₂OCH₃, -O(CH₂)₂OCH₃, -O(CH₂)₃OCH₃, -O(CH₂)₄OCH₃, -O(CH₂)₂F, -O(CH₂)₃F and -O(CH₂)₄F.

If in the formulae shown above and below a group R including any variations thereof such as R¹, R⁰, R⁰⁰, R*⁰, R¹¹, R²², R^{C}, R³, R⁴ etc., or L denotes an alkyl radical in which one CH₂ group has been replaced by -CH=CH-, this may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or - 6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

If in the formulae shown above and below a group R including any variations thereof such as R¹, R⁰, R⁰⁰, R*⁰, R¹¹, R²², R^{C}, R³, R⁴ etc., or L denotes an alkyl or alkenyl radical which is at least monosubstituted by halogen, this radical is preferably straight-chain, and halogen is preferably F or CI. In the case of polysubstitution, halogen is preferably F. The resultant radicals also include perfluorinated radicals. In the case of monosubstitution, the fluorine or chlorine substituent may be in any desired position, but is preferably in the ω-position.

Above and below, 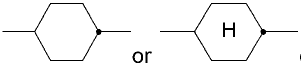 denotes a trans-1,4-cyclohexylene ring, and 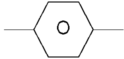 denotes a 1,4-phenylene ring.

Halogen is preferably F or Cl, very preferably F.

The group -CR⁰=CR⁰⁰- is preferably -CH=CH-.

-OC-, -CO-, -C(=O)- and -C(O)- denote a carbonyl group, i.e.

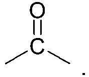

Preferred substituents L, are, for example, F, Cl, Br, I, -CN, -NO₂, -NCO, -NCS, - OCN, -SCN, -C(=O)N(R^{x})₂, -C(=O)Y¹, -C(=O)R^{x}, -N(R^{x})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, or optionally substituted aryl having 6 to 25, preferably 6 to 15, C atoms,
wherein R^{x} denotes H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O-and/or S-atoms are not directly connected with each other, and wherein one or more H atoms are each optionally replaced by F, Cl, P- or P-Sp-, and Y¹ denotes halogen.

Particularly preferred substituents L are, for example, F, Cl, CN, NO₂, CH₃, C₂H₅, OCH₃, SCH₃, OC₂H₅, SC₂H₅, COCH₃, COC₂H₅, COOCH₃, COOC₂H₅, CF₃, OCF₃, OCHF₂, OC₂F₅, furthermore phenyl. 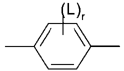 is preferably 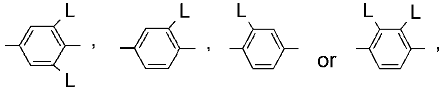 in which L has one of the meanings indicated above. 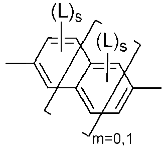 means

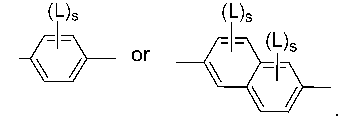

Throughout the application, the term "aryl and heteroaryl groups" encompass groups, which can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings. Heteroaryl groups contain one or more heteroatoms, preferably selected from O, N, S and Se. Particular preference is given to mono-, bi- or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5-, 6-or 7-membered aryl and heteroaryl groups, in which, in addition, one or more CH groups may be replaced by N, S or O in such a way that O atoms and/or S atoms are not linked directly to one another. Preferred aryl groups are, for example, phenyl, biphenyl, terphenyl, [1,1':3',1"]¬¬terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, more preferably 1,4-phenylene, 4,4'-biphenylene, 1, 4-terphenylene.

Preferred heteroaryl groups are, for example, 5 membered rings, such as pyrrole, pyrazole, imidazole, 1,2,3-triazole, 1,2,4-triazole, tetrazole, furan, thiophene, selenophene, oxazole, isoxazole, 1,2 thiazole, 1,3-thiazole, 1,2,3-oxadiazole, 1,2,4 oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6 membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, iso-indole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phen-anthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]-thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

In a group 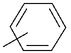 the single bond shown between the two ring atoms can be attached to any free position of the benzene ring. -OC-, -CO-, -C(=O)- and -C(O)- denote a carbonyl group, i.e.

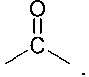

The polymerizable group P, including any variations thereof such as P⁰, P¹, P², P*⁰, is a group which is suitable for a polymerization reaction, such as, for example, free-radical or ionic chain polymerization, polyaddition or polycondensation, or for a polymer-analogous reaction, for example addition or condensation onto a main polymer chain. Particular preference is given to groups for chain polymerization, in particular those containing a C=C double bond or -C≡C- triple bond, and groups which are suitable for polymerization with ring opening, such as, for example, oxetane or epoxide groups.

Preferred groups P, including any variations thereof such as P⁰, P¹, P², P*⁰, are selected from the group consisting of CH₂=CW¹-CO-O-, CH₂=CW¹-CO-, 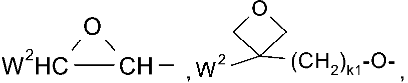 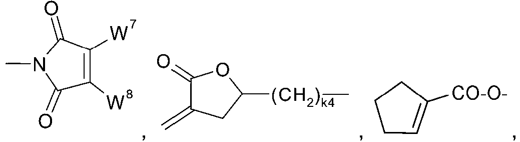 CH₂=CW²-(O)ₖ₃-, CW¹=CH-CO-(O)ₖ₃-, CW1=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH-, HOOC-, OCN- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P, including any variations thereof such as P⁰, P¹, P², P*⁰, are selected from the group consisting of CH₂=CW¹-CO-O-, CH₂=CW¹-CO-, 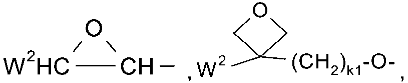 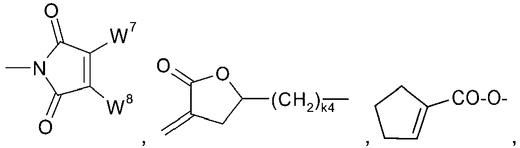 CH₂=CW²-O-, CH₂=CW²-, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, Cl, CN, CF₃, phenyl or alkyl having 1 to 5 C atoms, in particular H, F, Cl or CH₃, W² and W³ each, independently of one another, denote H or alkyl having 1 to 5 C atoms, in particular H, methyl, ethyl or n-propyl, W⁴, W⁵ and W⁶ each, independently of one another, denote Cl, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P, including any variations thereof such as P⁰, P¹, P², P*⁰, are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, 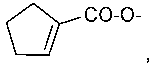 (CH₂=CH)₂CH-O-, 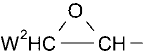 and

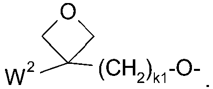

Further preferred polymerizable groups P, including any variations thereof such as P⁰, P¹, P², P*⁰, are selected from the group consisting of vinyloxy, acrylate, methacrylate, fluoroacrylate, chloroacrylate, oxetane and epoxide, most preferably from acrylate and methacrylate.

In another preferred embodiment of the invention, in a polymerizable compound as disclosed above and below, including compounds of formule D, M, T, A, I* and their subformulae, all polymerizable groups have the same meaning, and preferably denote acrylate or methacrylate, very preferably acrylate.

The spacer group, including any variations thereof such as Sp⁰, Sp¹, Sp², Sp*⁰, when being different from a single bond, is preferably of the formula Sp"-X", so that the respective radical P-Sp- etc. conforms to the formula P-Sp"-X"-, wherein
Sp" denotes linear or branched alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, -Si(R⁰R⁰⁰)-, -CO-, -CO-O-, -O-CO-, -O-CO-O-, -S-CO-, -CO-S-, -N(R⁰⁰)-CO-O-, -O-CON(R⁰)-, -N(R⁰)-CO-N(R⁰⁰)-, -CH=CH- or -C≡C- in such a way that O and/or S atoms are not linked directly to one another,
X" denotes -O-, -S-, -CO-, -CO-O-, -O-CO-, -O-CO-O-, -CO-N(R⁰)-, -N(R⁰)-CO-, - N(R⁰)-CO-N(R⁰⁰)-, -OCH₂-, -CH₂O-, -SCH₂-, -CH₂S-, -CF₂O-, -OCF₂-, -CF₂S-, - SCF₂-, -CF₂CH₂-, -CH₂CF₂-, -CF₂CF₂-, -CH=N-, -N=CH-, -N=N-, -CH=CR⁰-, - CY²=CY³-, -C≡C-, -CH=CH-CO-O-, -O-CO-CH=CH- or a single bond,
R⁰ and R⁰⁰ each, independently of one another, denote H or alkyl having 1 to 20 C atoms, and
Y² and Y³ each, independently of one another, denote H, F, Cl or CN.
X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp, including any variations thereof such as Sp⁰, Sp¹, Sp², Sp*⁰, and -Sp"-X"- are, for example, -(CH₂)ₚ₁-, -(CH₂)ₚ₁-O-, -(CH₂)ₚ₁-O-CO-, -(CH₂)ₚ₁-CO-O-, - (CH₂)ₚ₁-O-CO-O-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp, including any variations thereof such as Sp⁰, Sp¹, Sp², Sp*⁰, and -Sp"-X"- are -(CH₂)ₚ₁-, -(CH₂)ₚ₁-O-, -(CH₂)ₚ₁-O**-**CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

In another preferred embodiment of the invention, the polymerizable compounds as disclosed above and below, including compounds of formulae D, M, T, A, I* and their subformulae, contain a spacer group Sp, including any variations thereof such as Sp⁰, Sp¹, Sp², Sp*⁰, that is substituted by one or more polymerizable groups P, so that the group Sp-P etc. corresponds to Sp(P)ₛ, with s being ≥2 (branched polymerizable groups).

Preferred polymerizable compounds according to this preferred embodiment are those wherein s is 2, i.e., compounds which contain a group Sp(P)₂. Very preferred polymerizable compounds according to this preferred embodiment contain a group selected from the following formulae:

-X-alkyl-CHPP Sp1

-X-alkyl-CH((CH₂)ₐₐP)((CH₂)_{bb}P) Sp2

-X-N((CH₂)ₐₐP)((CH₂)_{bb}P) Sp3

-X-alkyl-CHP-CH₂-CH₂P Sp4

-X-alkyl-C(CH₂P)(CH₂P)-CₐₐH₂ₐₐ₊₁ Sp5

-X-alkyl-CHP-CH₂P Sp6

-X-alkyl-CPP-CₐₐH₂ₐₐ₊₁ Sp7

-X-alkyl-CHPCHP-CₐₐH₂ₐₐ₊₁ Sp8

in which P is as defined above,
- alkyl: denotes a single bond or straight-chain or branched alkylene having 1 to 12 C atoms which is unsubstituted or mono- or polysubstituted by F, Cl or CN and in which one or more non-adjacent CH₂ groups may each, independently of one another, be replaced by -C(R⁰)=C(R⁰)-, -C≡C-, -N(R⁰)-, -O-, -S-, -CO-, -CO-O-, -O-CO-, -O-CO-O- in such a way that O
- aa and bb: and/or S atoms are not linked directly to one another, where R⁰ has the meaning indicated above, each, independently of one another, denote 0, 1, 2, 3, 4, 5 or 6,
- X: has one of the meanings indicated for X", and is preferably O, CO, SO₂, O-CO-, CO-O or a single bond.

Preferred groups Sp(P)₂ are selected from formulae Sp1, Sp2 and Sp3.

Very preferred groups Sp(P)₂ are selected from the following subformulae:

-CHPP Sp1a

-O-CHPP Sp1b

-CH₂-CHPP Sp1c

-OCH₂-CHPP Sp1d

-CH(CH₂-P)(CH₂-P) Sp2a

-OCH(CH₂-P)(CH₂-P) Sp2b

-CH₂-CH(CH₂-P)(CH₂-P) Sp2c

-OCH₂-CH(CH₂-P)(CH₂-P) Sp2d

-CO-NH((CH₂)₂P)((CH₂)₂P) Sp3a

### Detailed Description

The RM formulations according to the present invention contain a solvent blend as described above and below which, in combination with the RMs as described above and below, enables to provide an RM formulation that shows advantageous properties like good solubility, good wetting, good jetting properties, high stability, suitable processing window and good process compatibility, and allows tuning of the parameters needed for printing, especially for inkjet printing.

In particular, the inventors of the present invention were able to identify solvent blends that allow for formulation of an RM ink that is suitable both for printing application and for deposition onto substrates of choice. High-quality RM thin films deposited by inkjet printing can thus be obtained by optimization of key parameters such as solubility, jetting, process compatibility, and wetting.

By careful optimization of the solvent blend, the inventors of the present invention were able to develop RM formulations with optimum jetting, processing window, and wetting. Importantly and surprisingly, the solvent blends according to the present invention show a synergy of the individual components during the processing steps, which could not be expected from prior art and common knowledge.

Thus, when using a single solvent having very good wetting properties, this may lead to strong spreading of the printed RM formulation on the substrate, but may also lead to an overflow and thus a poor shape retention of the printed pattern, as demonstrated in the comparison examples below. On the other hand, when using a single solvent having less pronounced wetting properties, this may lead to poor spreading of the printed RM formulation on the substrate or even partial dewetting. By using a solvent blend as described above and below, which preferably contains one or more solvents showing good wetting and one or more solvents showing less pronounced wetting, the inventors of the present invention could formulate a solvent blend which enables sufficient wetting to ensure strong spreading and high layer homogeneity of the printed RM formulation, while avoiding overflow and threreby ensuring high shape retention of the printed pattern.

The RM formulations using a solvent blend according to the present invention have been found to be especially suitable for inkjet printing on cinnamate photoalignment layers where they show better film quality than when using solvents from prior art as hitherto known and used for this purpose.

Moreover, the RM formulations according to the present invention are also suitable for other printing or coating methods, as will be further specified below.

In particular, the RM formulations according to the present invention show one or more of the following preferred properties, which are relevant for a good inkjet printing process:
- the RMs are soluble at 15-30 wt% of solids, and are soluble at max. 70°C,
- the RM formulation is stable at room temperature (RT) over several days,
- the RM formulation is jettable with a viscosity at least above 3.5 cP (at 20°C) to be compatible for inkjet printing,
- the solvent or solvent blend has a boiling temperature Tb ≥ 180°C to enable easy evaporation after the printing process,
- the solvent or solvent blend is removable at processing conditions, preferably at max. 100°C during max. 5 min, to allow for the alignment of the RMs,
- the solvent or solvent blend does not damage the photoalignment layer or another layer, for example another RM layer, underneath, onto which the RM formulation is deposited,
- the solvent choice allows for coalescence of individual droplets at the target film thickness and shows preferably less than 15% dimension difference from the intended design (e.g. width of square).

The RM formulation according to the present invention preferably consists of a solvent component, which contains a solvent or solvent blend of three or more solvents as described above and below, and an RM component, which comprises an RM or RM mixture and optionally one or more additives.

Preferably all solvents in the RM formulations and solvent blends according to the present invention are selected from organic solvents.

The first solvent is a cycloalkanone with 5, 6, 7 or 8 C atoms, preferably cyclohexanone or cycloheptanone, very preferably cyclohexanone.

The second solvent is selected from formulae S1A and S1B, preferably from formula S1A.

In formula S1A, Ar³¹ is preferably selected from phenyl, pyrrole, furan, thiophene, pyridine, pyran or 2,2-, 2,4- or 2,6-thiopyran, very preferably from phenyl, all of which are optionally substituted by one or more groups L^{S}.

In formula S1A, R^{S1} is preferably selected from methyl, ethyl, n-propyl, isopropyl, n-butyl, sec-butyl, isobutyl and tert-butyl, very preferably from ethyl and isopropyl.

In formula S1B, Ar^{S2} is preferably selected from phenyl, pyrrole, furan, thiophene, pyridine, pyran or 2,2-, 2,4- or 2,6-thiopyran, very preferably from phenyl, all of which are optionally substituted by one or more groups L^{S}.

In formula S1B, R^{S2} is preferably selected from methyl, ethyl, propyl and butyl, very preferably from methyl and ethyl.

In formula S1A, L^{S} is preferably selected from alkyl, alkoxy or alkyl carbonyl with 1 to 5 C atoms.

Preferred solvents of formula S1A are selected of the following subformula: 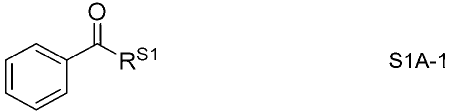 wherein R^{S1} has the meanings given in formula S1A or one of the preferred meanings given above and below, and is preferably selected from methyl, ethyl, n-propyl, isopropyl, n-butyl, sec-butyl, isobutyl and tert-butyl, very preferably from ethyl and isopropyl.

Very preferably the solvent of formula S1A is selected from acetophenone, propiophenone, butyrophenone and isobutyrophenone, very preferably from propiophenone, butyrophenone and isobutyrophenone.

In formula S1B, Ar^{S2} is preferably selected from phenyl, pyrrole, furan, thiophene, pyridine, pyran or 2,2-, 2,4- or 2,6-thiopyran, very preferably from phenyl, all of which are optionally substituted by one or more groups L^{S}.

In formula S1B, R^{S2} is preferably selected from methyl, ethyl, propyl and butyl, very preferably from methyl and ethyl.

In formula S1B, L^{S} is preferably selected from alkyl, alkoxy or alkyl carbonyl with 1 to 5 C atoms.

Very preferred solvents of formula S1B are selected from the following subformulae: 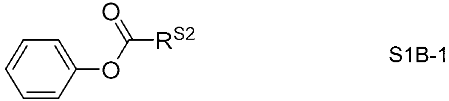 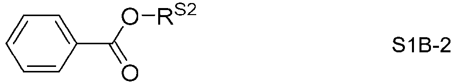 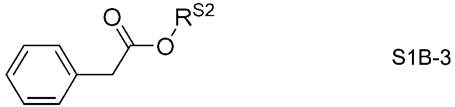 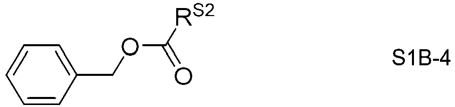 wherein R^{S2} has the meanings given in formula S1B or one of the preferred meanings given above and below, and is preferably methyl or ethyl.

Preferably the solvent of formula S1B is selected from methyl benzoate, ethyl benzoate, methyl phenylacetate, butyl benzoate, benzyl propionate and phenyl proprionate, very preferably from methyl benzoate, methyl phenylacetate and ethyl benzoate.

The third solvent is an aliphatic ketone, an aliphatic or aromatic alcohol or a glycol, preferably selected from formulae S2A, S2B, S2C and S2D. The aliphatic or aromatic alcohol can be a primary, secondary or tertiary alcohol, and can be a linear or cyclic aliphatic alcohol or an aromatic alcohol, i.e., containing a hydroxyl group bonded indirectly to an aromatic hydrocarbon group, preferably via an alkyl group.

Preferred solvents of formula S2A are selected from 2-nonanone, 2-decanone and 2-undecanone, very preferably from 2-decanone and 2-undecanone.

Preferred solvents of formula S2B are selected from2-heptanol, 2-octanol, 2-nonanol, cyclopentanol and cyclohexanol, very preferably from cyclopentanol and cyclohexanol.

Preferred solvents of formula S2C are selected from 1-hexanol, 1-heptanol, 1-octanol, 1-nonanol, phenylmethanol, 2-phenylethanol and 3-phenyl-1-propanol, very preferably 2-phenylethanol.

In formula S2D, preferably one of R^{S8} and R^{S9} is methyl or H and the other is H.

Preferred solvents of formula S2D are selected from propylene glycol monomethyl ether (PGME, 1-methoxy-2-propanol), dipropylene glycol monomethyl ether (DPM, typically an isomeric mixture), tripropylene glycol monomethyl ether (TPM, typically an isomeric mixture), propylene glycol monomethyl ether acetate (PGEMA, 1-methoxy-2-propanol acetate), di(propylene glycol) methyl ether acetate (DPMA, typically an isomeric mixture), diethylene glycol monoethyl ether acetate (DEGMEA), triethylene glycol monomethyl ether (TEGME) and phenoxyethanol, very preferably from PGME, PGMEA, DEGMEA, TEGME and phenoxyethanol.

Preferably the solvent blend, as used in the RM formulation according to the present invention has a boiling point ≥180°C, very preferably from 190°C to 300°C, most preferably from 195°C to 260°C.

The ratio (by weight) of the first solvent and the sum of the second and third solvent in the solvent blend of the RM formulation is preferably from 5:1 to 1:2, very preferably from 4:1 to 1:1.

The ratio (by weight) of the second and the third solvent in the solvent blend of the RM formulation is preferably from 1:1 to 8:1, very preferably from 2:1 to 7:1.

Preferably the solvent blend in the RM formulation according to the present invention is a ternary solvent blend.

In a preferred embodiment the solvent blend consists of cyclohexanone or cycloheptanone, preferably cycloheptanone, one solvent of formula S1A or its subformulae, preferably butyrophenone or isobutyrophenone, and one solvent of formula S2A, preferably 2-undecanone.

In another preferred embodiment the solvent blend consists of cyclohexanone or cycloheptanone, preferably cyclohexanone, one solvent of formula S1A or its subformulae, preferably butyrophenone or isobutyrophenone, and one solvent of formula S2B, preferably 2-nonanol or cyclopentanol.

In another preferred embodiment the solvent blend consists of cyclohexanone or cycloheptanone, preferably cyclohexanone, one solvent of formula S1A or its subformulae, preferably butyrophenone or isobutyrophenone, and one solvent of formula S2C, preferably 1-hexanol, 1-octanol or 2-phenylethanol.

In another preferred embodiment the solvent blend consists of cyclohexanone or cycloheptanone, preferably cyclohexanone, one solvent of formula S1A or its subformulae, preferably butyrophenone or isobutyrophenone, and one solvent of formula S2D, preferably selected from PGME, DPM, TPM, PGMEA, DPMA and DEGMEA.

Further preferably the RM formulation and solvent blend do not contain any solvents other than the first, second and third solvents as defined above and below.

Unless stated otherwise, the concentrations of the RMs and additives as give above and below refer to the RM component or RM mixture of the RM formulation and may also expressed as "% by weight of total solids" or "% by weight of all solids".

The proportion of all solvents in the RM formulation according to the present invention is preferably from 50 to 95%, very preferably from 60 to 95%, most preferably from 65 to 90% by weight.

The total concentration of all solids, including the RMs, in the RM formulation is preferably from 5 to 50%, more preferably from 5 to 40%, most preferably from 10 to 35% by weight.

Preferably, the RM formulation comprises one or more RMs having one polymerizable functional group (monoreactive RMs) and/or one or more RMs having two or more polymerizable functional groups (di- or multireactive RMs).

In a preferred embodiment the RM formulation comprises one or more di- or multireactive RMs. These di-or multireactive RMs are preferably selected of formula D

P¹-Sp¹-MG-Sp²-P² D

wherein the individual radicals, independently of each other and on each occurrence identically or differently, have the following meanings
- P¹, P²: a polymerizable group,
- Sp¹, Sp²: a spacer group or a single bond, and
- MG: a rod-shaped mesogenic group, which is preferably selected of formula MG

-(A¹-Z¹)ₙ-A²- MG

- A¹ and A²: an aromatic or alicyclic group, which optionally contains one or more heteroatoms selected from N, O and S, and is optionally mono- or polysubstituted by L,
- L: P-Sp-, F, Cl, Br, I, -CN, -NO₂ , -NCO, -NCS, -OCN, -SCN, - C(=O)NR^{x}R^{y}, -C(=O)OR^{x}, -C(=O)R^{x}, -NR^{x}R^{y}, -OH, -SF₅, optionally substituted silyl, aryl or heteroaryl with 1 to 12, preferably 1 to 6 C atoms, and straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl,
- R^{x} and R^{y}: H or alkyl with 1 to 12 C-atoms,
- Z¹: -O-, -S-, -CO-, -COO-, -OCO-, -S-CO-, -CO-S-, -O-COO-, -CO-NR⁰⁰-, -NR⁰⁰-CO-, -NR⁰⁰-CO-NR⁰⁰⁰, -NR⁰⁰-CO-O-, -O-CO-NR⁰⁰-, -OCH₂-, - CH₂O-, -SCH₂-, -CH₂S-, -CF₂O-, -OCF₂-, -CF₂S-, -SCF₂-, -CH₂CH₂-, - (CH₂)ₙ₁, -CF₂CH₂-, -CH₂CF₂-, -CF₂CF₂-, -CH=N-, -N=CH-, -N=N-, - CH=CR⁰⁰-, -CY¹=CY²-, -C≡C-, -CH=CH-COO-, -OCO-CH=CH- or a single bond, preferably -COO-, -OCO- or a single bond,
- R⁰⁰ and R⁰⁰⁰: H or alkyl having 1 to 12 C atoms,
- Y¹ and Y²: H, F, Cl or CN,
- n: 1, 2, 3 or 4, preferably 1 or 2, most preferably 2,
- n1: an integer from 1 to 10, preferably 1, 2, 3 or 4.

Preferred groups A¹ and A² include, without limitation, furan, pyrrol, thiophene, oxazole, thiazole, thiadiazole, imidazole, phenylene, cyclohexylene, bicyclooctylene, cyclohexenylene, pyridine, pyrimidine, pyrazine, azulene, indane, fluorene, naphthalene, tetrahydronaphthalene, anthracene, phenanthrene and dithienothiophene, all of which are unsubstituted or substituted by 1, 2, 3 or 4 groups L as defined above.

Particular preferred groups A¹ and A² are selected from 1,4-phenylene, pyridine-2,5-diyl, pyrimidine-2,5-diyl, thiophene-2,5-diyl, naphthalene-2,6-diyl, 1,2,3,4-tetrahydronaphthalene-2,6-diyl, indane-2,5-diyl, bicyclooctylene or 1,4-cyclohexylene wherein one or two non-adjacent CH₂ groups are optionally replaced by O and/or S, wherein these groups are unsubstituted or substituted by 1, 2, 3 or 4 groups L as defined above.

Preferred RMs of formula D are selected of formula Da 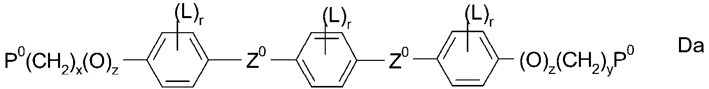 wherein the individual radicals, independently of each other and on each occurrence identically or differently, have the following meanings
- P⁰: a polymerizable group, preferably an acryl, methacryl, oxetane, epoxy, vinyl, heptadiene, vinyloxy, propenyl ether or styrene group,
- Z⁰: -COO-, -OCO-, -CH₂CH₂-, -CF₂O-, -OCF₂-, -C≡C-, -CH=CH-,-OCO-CH=CH-, -CH=CH-COO-, or a single bond,
- L: has one of the meanings given in formula D, and is preferably selected from F, Cl, CN or optionally halogenated alkyl, alkoxy, alkylcarbonyl, alkoxycarbonyl, alkylcarbonyloxy or alkoxycarbonyloxy with 1 to 5 C atoms,
- r: 0, 1, 2, 3 or 4,
- x and y: 0 or identical or different integers from 1 to 12,
- z: 0 or 1, with z being 0 if the adjacent x or y is 0.

Very preferred RMs of formula D are selected from the following formulae: 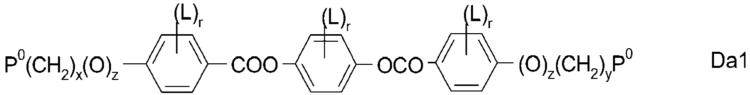 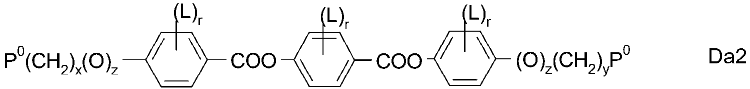 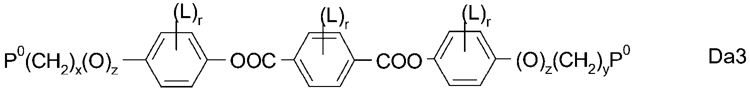 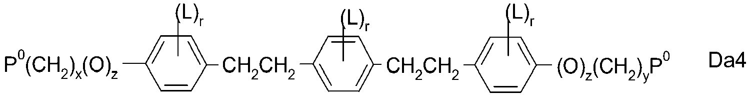 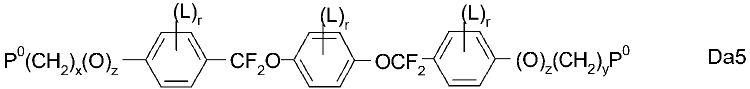 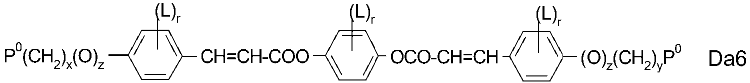 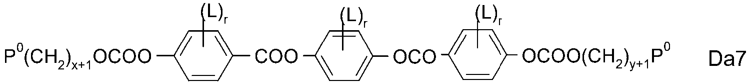 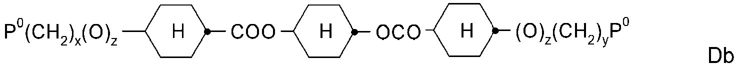 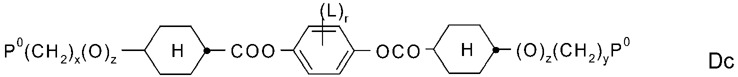 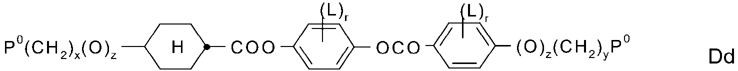 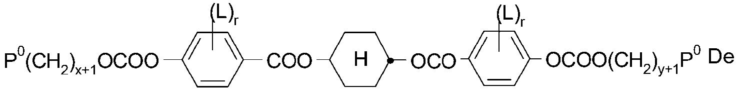 wherein P⁰, L, r, x, y and z are as defined in formula Da, s is 0, 1, 2 or 3 and t is 0, 1 or 2.

Especially preferred are compounds of formula Da1, Da2 and Da3, in particular those of formula Da1.

In another preferred embodiment the RM formulation contains one or more direactive RMs of formula D wherein at least one group Z¹ denotes -C≡C, very preferably selected from formulae Df, Dg, Dh, Di, Dk and Dm.

In another preferred embodiment the RM formulation comprises one or more monoreactive RMs. These monoreactive RMs are preferably selected from formula M:

P¹-Sp¹-MG-R²² M

wherein P¹, Sp¹ and MG have the meanings given in formula D, but wherein L in formula MG is different from P-Sp-,
- R²²: denotes P-Sp-, F, Cl, Br, I, -CN, -NO₂ , -NCO, -NCS, -OCN, -SCN, - C(=O)NR^{x}R^{y}, -C(=O)X, -C(=O)OR^{x}, -C(=O)R^{y}, -NR^{x}R^{y}, -OH, -SF₅, optionally substituted silyl, straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or CI,
- X: is halogen, preferably F or Cl, and
- R^{x} and R^{y}: are independently of each other H or alkyl with 1 to 12 C-atoms.

Preferably the RMs of formula M are selected from the following formulae. 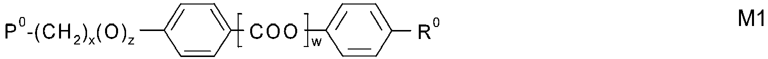 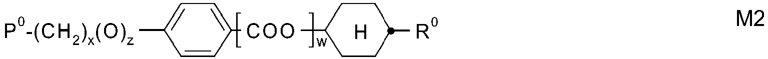 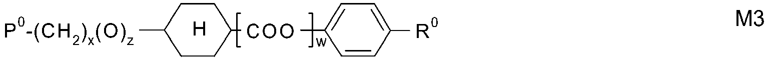 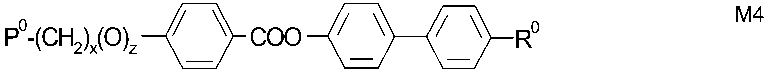 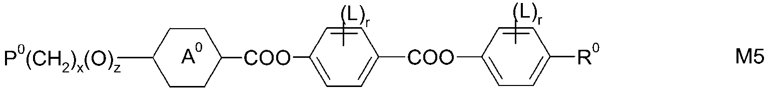 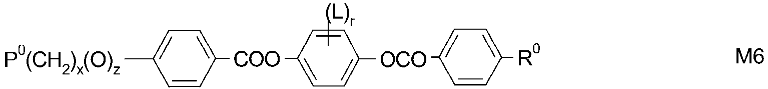 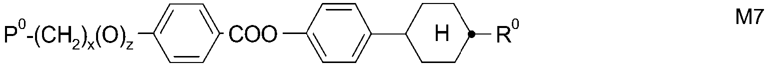 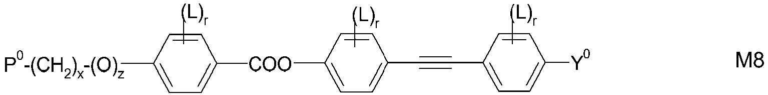 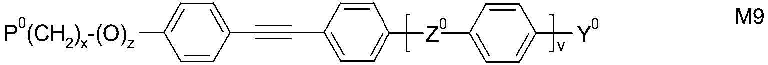 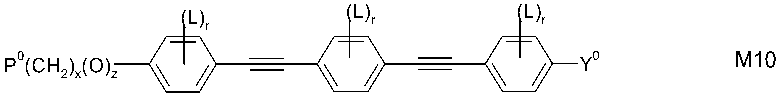 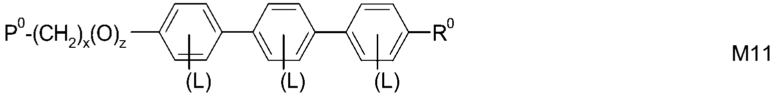 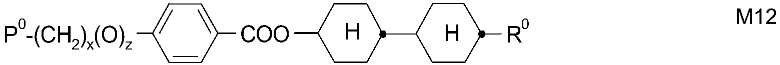 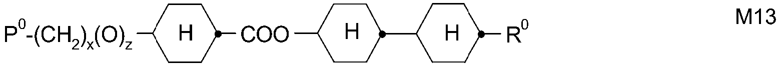 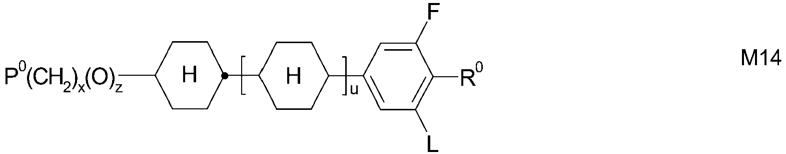 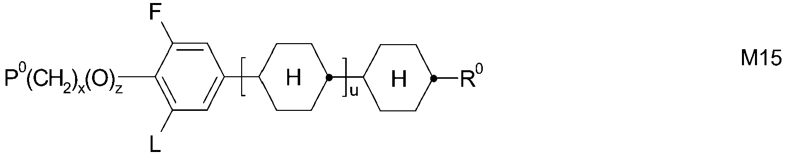 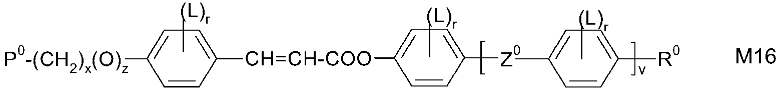 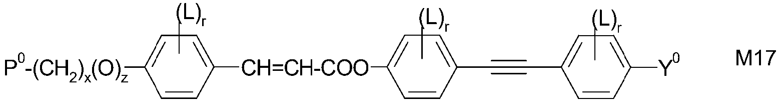 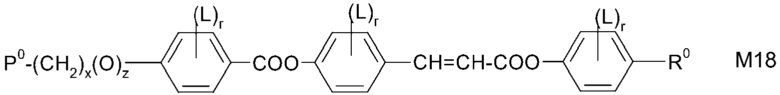 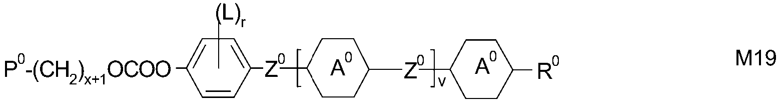 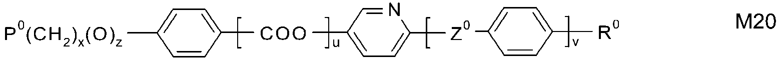 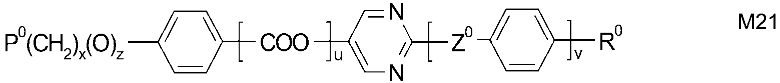 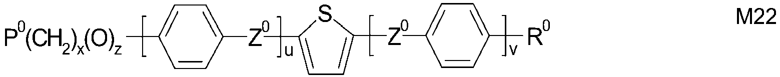 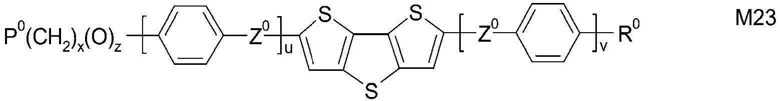 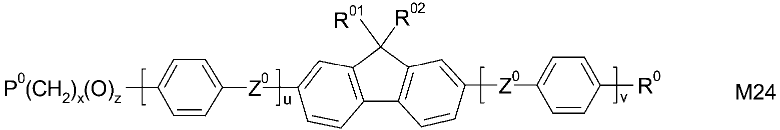 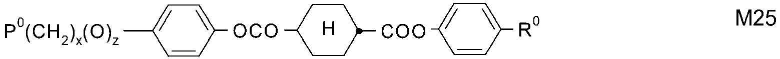 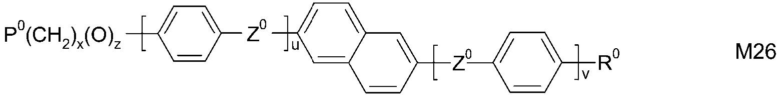 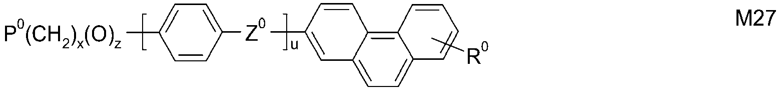 wherein P⁰, L, r, x, y, z, s and t are as defined in formula Da and Dk, but wherein L is different from P-Sp-.
- R⁰: is alkyl, alkoxy, thioalkyl, alkylcarbonyl, alkoxycarbonyl, alkylcarbonyloxy or alkoxycarbonyloxy with 1 or more, preferably 1 to 15 C atoms or denote Y⁰ or P-(CH₂)_{y}-(O)_{z}-,
- X⁰: is -O-, -S-, -CO-, -COO-, -OCO-, -O-COO-, -CO-NR⁰¹-, -NR⁰¹-CO-, -NR⁰¹-CO-NR⁰¹-, -OCH₂-, -CH₂O-, -SCH₂-, -CH₂S-, -CF₂O-, -OCF₂-, -CF₂S-, -SCF₂-, -CF₂CH₂-, -CH₂CF₂-, -CF₂CF₂-, -CH=N-, -N=CH-, -N=N-, -CH=CR⁰¹-, -CF=CF-, -C≡C-, -CH=CH-COO-, -OCO-CH=CH- or a single bond
- Y⁰: is F, Cl, CN, NO₂, OCH₃, OCN, SCN, SF₅, or mono- oligo- or polyfluorinated alkyl or alkoxy with 1 to 4 C atoms,
- Z⁰: is -COO-, -OCO-, -CH₂CH₂-, -CF₂O-, -OCF₂-, -CH=CH-,-OCO-CH=CH-, -CH=CH-COO-, or a single bond,
- A⁰: is, in case of multiple occurrence independently of one another, 1,4-phenylene that is unsubstituted or substituted with 1, 2, 3 or 4 groups L, or trans-1,4-cyclohexylene,
- R^{01,02}: are independently of each other H, R⁰ or Y⁰,
- u and v: are independently of each other 0, 1 or 2,
- w: is 0 or 1,
and wherein the benzene and naphthalene rings can additionally be substituted with one or more identical or different groups L.

Especially preferred are compounds of formula M1, M4, M7, M8, M9, M10, M11, in particular those of formula M1, M4 and M7, further more those of formula M8, M9 and M10.

In another preferred embodiment the RM formulation contains one or more monoreactive RMs of formula M wherein the group MG¹ contains at least one group Z¹ that denotes -C≡C, very preferably selected from formulae M8 to M10.

In formulae D, M and their preferred subformulae, L is preferably selected from F, Cl, CN, NO₂ or straight chain or branched alkyl, alkoxy, alkylcarbonyl, alkoxycarbonyl, alkylcarbonyloxy or alkoxycarbonyloxy with 1 to 12 C atoms, wherein the alkyl groups are optionally perfluorinated, or P-Sp-.

Very preferably L is selected from F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, in particular F, Cl, CN, CH₃, C₂H₅, C(CH₃)₃, CH(CH₃)₂, OCH₃, COCH₃ or OCF₃, most preferably F, Cl, CH₃, C(CH₃)₃, OCH₃ or COCH₃, or P-Sp-.

In another preferred embodiment the present invention, the RM formulation contains one or more RMs of formula T 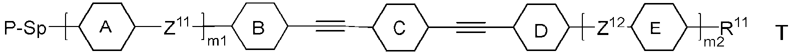 wherein the individual radicals, independently of each other and on each occurrence identically or differently, have the following meanings
- P: a polymerizable group,
- Sp: a spacer group or a single bond,
- R¹¹: H, F, Cl, CN, alkyl, alkoxy, thioalkyl, alkylcarbonyl, alkoxycarbonyl, alkylcarbonyloxy or alkoxycarbonyloxy with 1 to 15, preferably with 1 to 5, C atoms which is optionally optionally fluorinated, or P-Sp,
- A, B, D, and E: are selected from the group consisting of 1,4-phenylene, naphthalene-1,4-diyl, naphthalene-2,6-diyl, phenanthrene-2,7-diyl, anthracene-9,10-diyl, fluorene-2,7-diyl, dibenzothiophene-2,7-diyl, dibenzofuran-2,7-diyl, benzo[1,2-b:4,5-b']dithiophene-2,5-diyl, indole-4,7-diyl, benzothiophene-4,7-diyl, 9,10-dihydro-phenanthrene-2,7-diyl, 1,2,3,4-tetrahydronaphthalene-5,8-diyl or indane-2,5-diyl, where, in addition, one or more CH groups in these groups may be replaced by N, all of which are optionally substituted by one or more groups L or P-Sp-.
- C: is selected from the group consisting of benzene-1,4-diyl, naphthalene-1,4-diyl, anthracene-9,10-diyl, fluorene-2,7-diyl, dibenzofuran-2,7-diyl, dibenzothiophene-2,7-diyl, benzo[1,2-b:4,5-b']dithiophene-2,5-diyl, indole-4,7-diyl, benzothiophene-4,7-diyl, all of which are optionally substituted by one or more groups L or P-Sp. and one of rings C and D may also denote a single bond,
- L: F, Cl, -CN, -SCN, P-Sp-, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 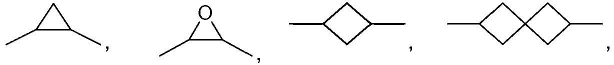 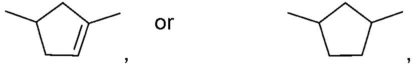 in such a manner that O- and/or S-atoms are not directly connected with each other, and wherein one or more H atoms are each optionally replaced by P-Sp-, F or Cl, or two substituents L that are connected to directly adjacent C atoms may also form a cycloalkyl or cycloalkenyl group with 5, 6, 7 or 8 C atoms,
- Z¹¹, Z¹²: -O-, -S-, -CO-, -COO-, -OCO-, -S-CO-, -CO-S-, -O-COO-, -CO-NR⁰-, -NR⁰-CO-, -NR⁰-CO-NR⁰⁰, -NR⁰-CO-O-, -O-CO-NR⁰-, -OCH₂-, -CH₂O-, -SCH₂-, -CH₂S-, -CF₂O-, -OCF₂-, -CF₂S-, -SCF₂-, -CH₂CH₂-, -(CH₂)ₙ₁, -CF₂CH₂-, -CH₂CF₂-, -CF₂CF₂-, -CH=N-, -N=CH-, -N=N-, -CH=CR⁰-, -CY¹=CY²-, -C≡C-, -CH=CH-COO-, -OCO-CH=CH- or a single bond, preferably -COO-, -OCO-, -C≡C-, or a single bond, most preferably a single bond,
- R⁰, R⁰⁰: H or alkyl having 1 to 12 C atoms,
- Y¹, Y²: H, F, Cl, NCS, or CN,
- m1, m2: 0, 1, 2, 3 or 4, preferably 0, 1 or 2, very preferably 0 or 1, most preferably 0,
- n1: 1, 2, 3 or 4.

The RMs of formula T show a high extraordinary refractive index nₑ and a high birefringence.

Preferably A, B, D and E in formula T are selected from the group consisting of 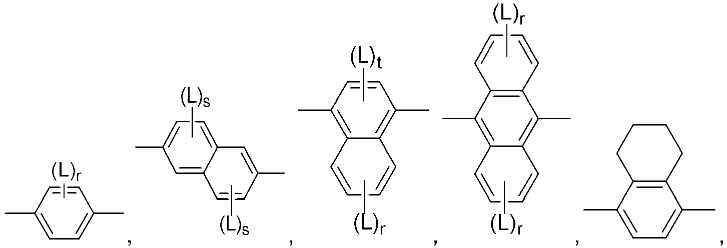 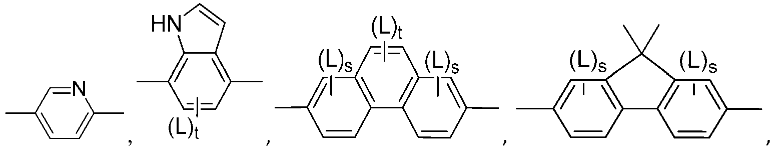 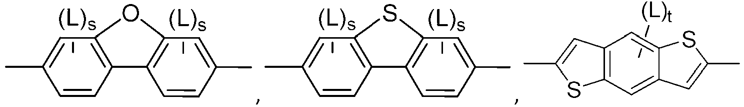 wherein the individual radicals, independently of each other and on each occurrence identically or differently, have the following meanings
- L: P-Sp-, -CN, F, Cl, or alkyl, alkoxy or thioalkyl which is optionally fluorinated and has 1 to 6, preferably 1 to 3, more preferably 1 or 2 C atoms, preferably P-Sp-, -CN, F, Cl, OCH₃, SCH₃, C₂H₅, OC₂H₅, SC₂H₅,
- r: 0, 1, 2, 3 or 4, preferably 0, 1 or 2,
- s: 0, 1, 2 or 3, preferably 0 or 1,
- t: 0, 1 or 2, preferably 0 or 1.

More preferably rings A, B, D and/or E in formula T are selected from the group consisting of benzene-1,4-diyl, naphthalene-1,4-diyl, naphthalene 2,6-diyl, phenanthrene-2,7-diyl, anthracene-9,10-diyl, fluorene-2,7-diyl, dibenzofuran-2,7-diyl, dibenzothiophene-2,7-diyl, benzo[1,2-b:4,5-b']dithiophene-2,5-diyl, indole-4,7-diyl, benzothiophene-4,7-diyl, all of which are optionally substituted by one or more groups L and/or P-Sp-.

Very preferably one, two, three, four or more of rings A, B, D and/or E in formula T are selected from the group consisting of 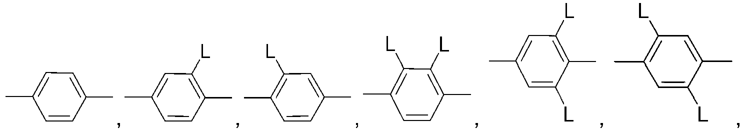 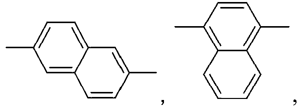 wherein L, on each occurrence identically or differently, denotes P-Sp-, -CN, F, Cl, or alkyl, alkoxy or thioalkyl which is optionally fluorinated and has 1 to 6, preferably 1 to 3, more preferably 1 or 2 C atoms, preferably P-Sp-, -CN, F, Cl, OCH₃, SCH₃, C₂H₅, OC₂H₅, SC₂H₅.

Especially preferred are compounds of formula T, in particular wherein n=m=0, wherein the rings B and D are selected from the group consisting of benzene-1,4-diyl, naphthalene-1,4-diyl, naphthalene-2,6-diyl or anthracene-9,10-diyl, all of which are optionally mono- or disubstituted by L and/or P-Sp-.

Preferably ring C in formula T is selected from the group consisting of 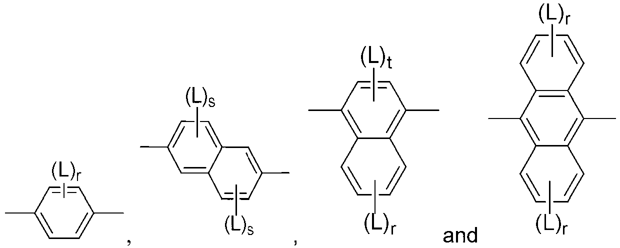 wherein the individual radicals, independently of each other and on each occurrence identically or differently, have the following meanings
- L: P-Sp-, -CN, F, Cl, or alkyl, alkoxy or thioalkyl which is optionally fluorinated and has 1 to 6, preferably 1 to 3, more preferably 1 or 2 C atoms, preferably P-Sp-, -CN, F, Cl, OCH₃, SCH₃, C₂H₅, OC₂H₅, SC₂H₅,
- r: 0, 1, 2, 3 or 4, preferably 0, 1 or 2,
- s: 0, 1, 2 or 3, preferably 0 or 1,
- t: 0, 1 or 2, preferably 0 or 1.

More preferably C in formula T is selected from the group consisting of 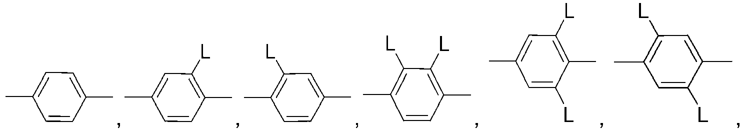 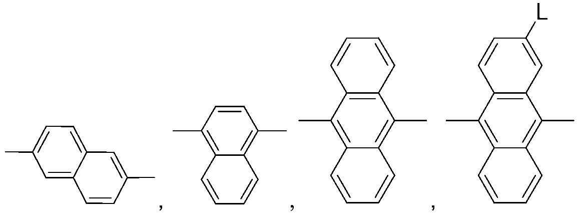 wherein L, on each occurrence identically or differently, denotes P-Sp-, -CN, F, CI, or alkyl, alkoxy or thioalkyl which is optionally fluorinated and has 1 to 6, preferably 1 to 3, more preferably 1 or 2 C atoms, preferably P-Sp-, -CN, F, Cl, OCH₃, SCH₃, C₂H₅, OC₂H₅, SC₂H₅.

Very preferably ring C in formula T is selected from the group consisting of benzene-1,4-diyl, naphthalene-1,4-diyl or anthracene-9,10-diyl, all of which are optionally mono- or disubstituted by L and/or P-Sp-.

Further preferred are compounds of formula T, preferably those wherein n=m=0, wherein the rings B, C and D form a mesogenic group selected from the following formulae or their mirror images: 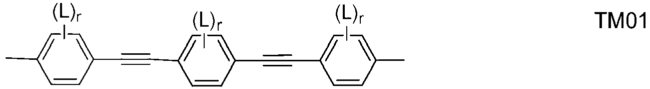 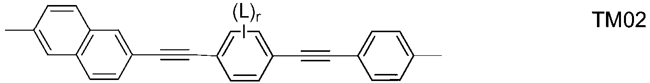 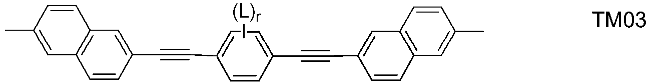 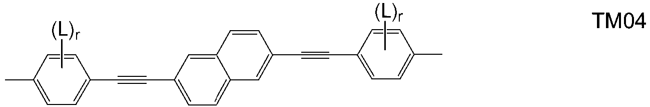 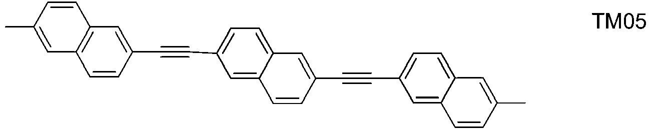 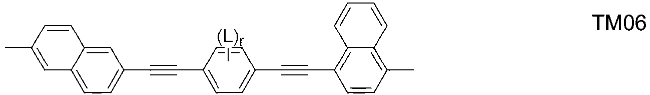 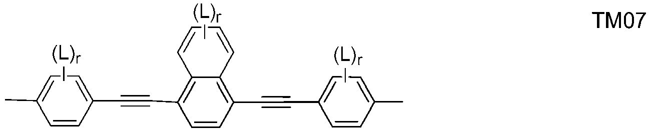 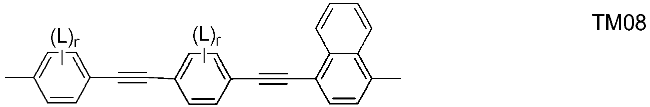 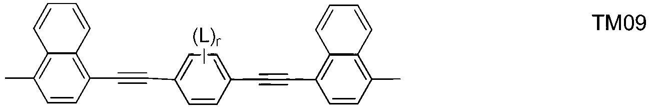 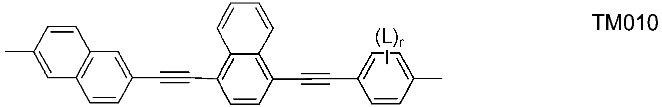 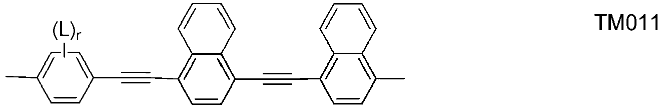 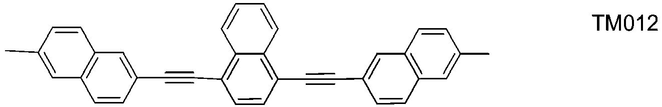 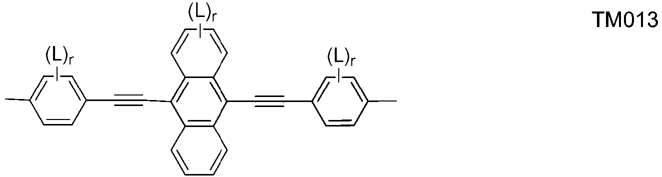 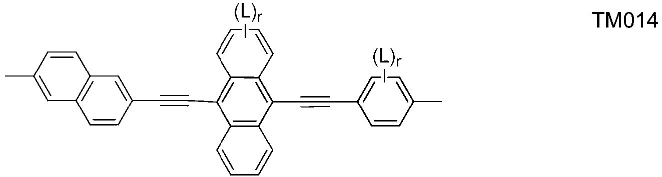 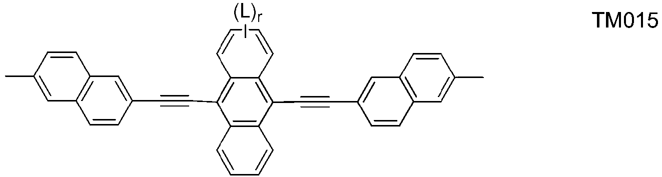 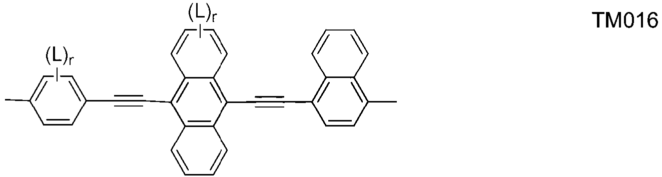 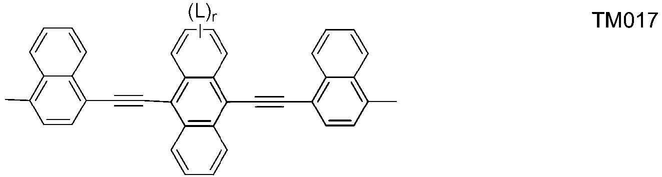 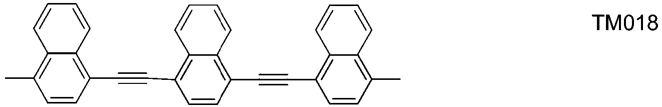 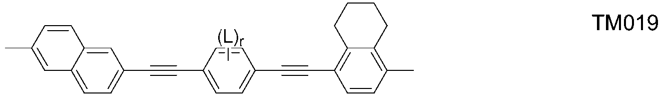 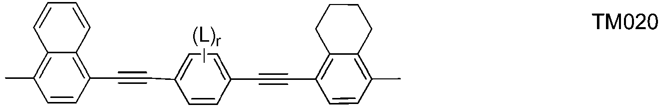 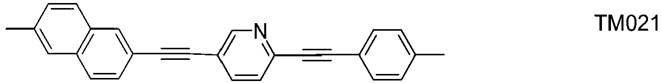 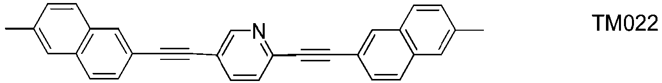 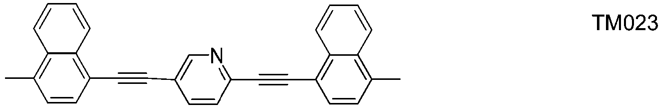 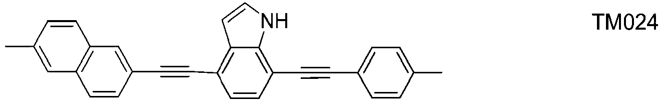 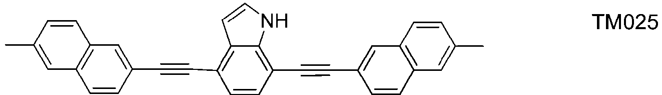 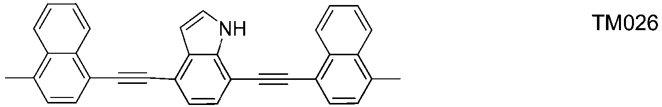 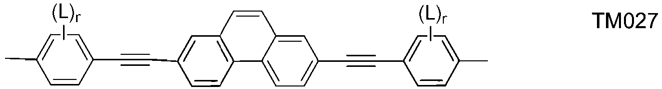 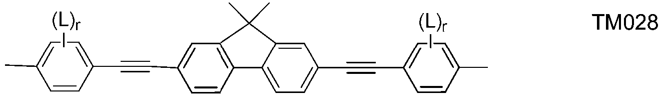 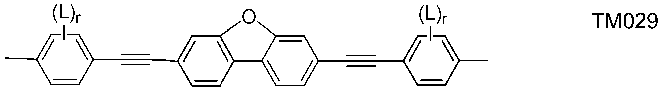 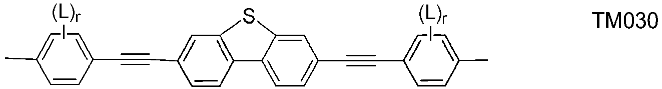 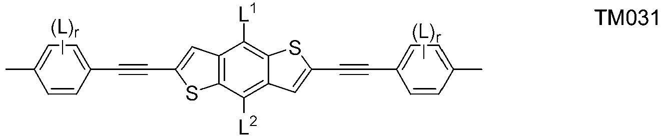 wherein the naphthalene and phenanthrene groups are optionally substituted with one or two groups L, and L and r are as defined in formula T.

In formulae TM1 to TM28, preferably L on each occurrence identically or differently denotes P-Sp-, -CN, F, Cl, or alkyl, alkoxy or thioalkyl which is optionally fluorinated and has 1 to 6, preferably 1 to 3, more preferably 1 or 2 C atoms, very preferably P-Sp-, methyl, ethyl, methoxy, ethoxy, thiomethyl or thioethyl, most preferably methyl or ethyl, and r is preferably 0, 1, 2 or 3, very preferably 0, 1 or 2.

Very preferred are the groups of formulae TM01 to TM10, especially the groups of formula TM01 to TM07.

Very preferred compounds of formula T are selected from the following subformulae: 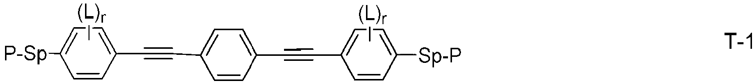 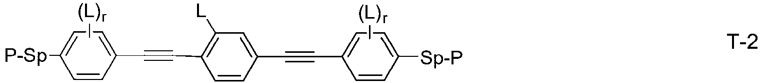 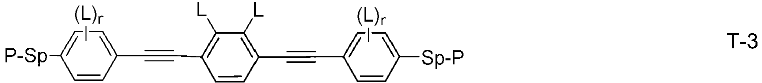 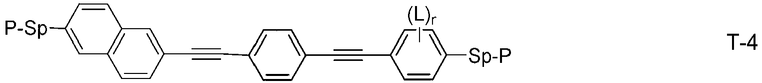 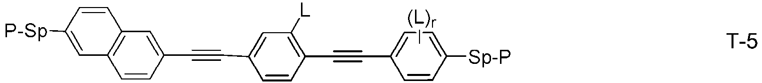 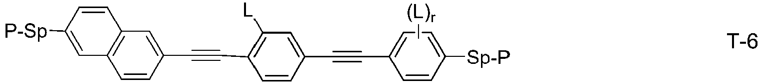 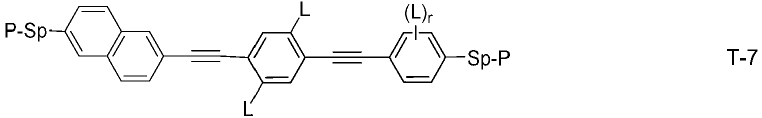 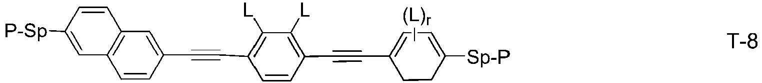 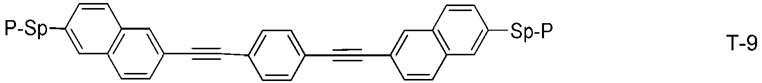 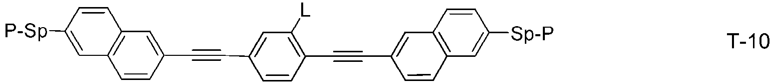 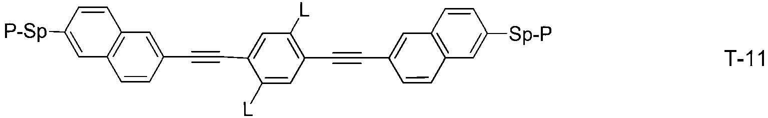 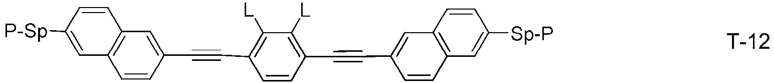 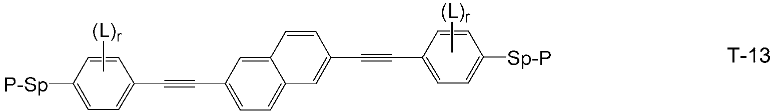 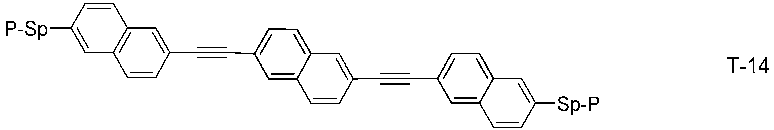 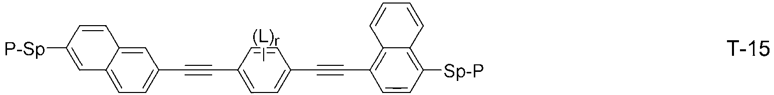 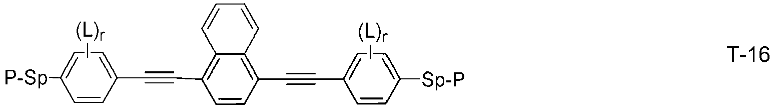 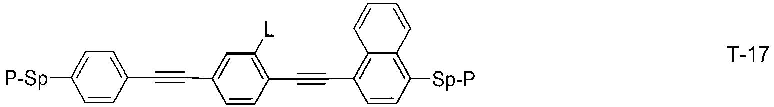 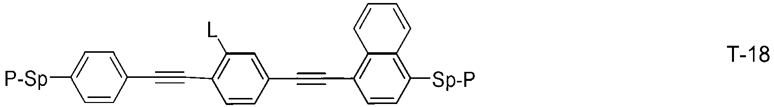 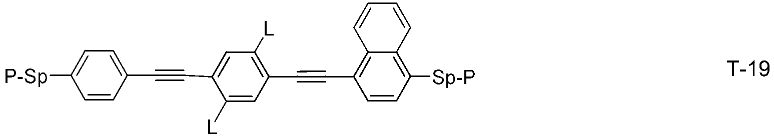 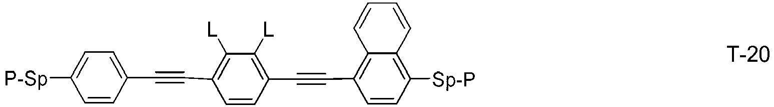 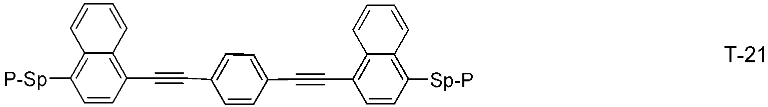 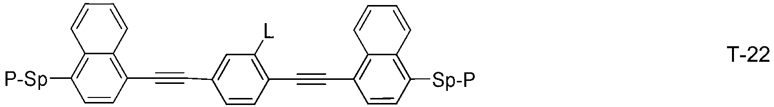 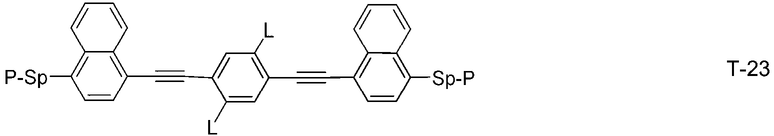 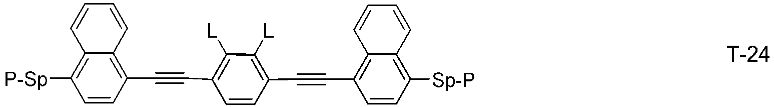 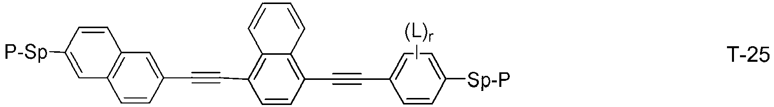 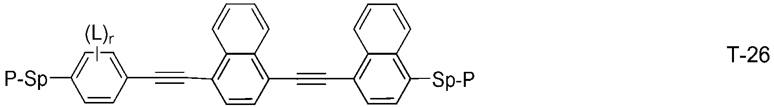 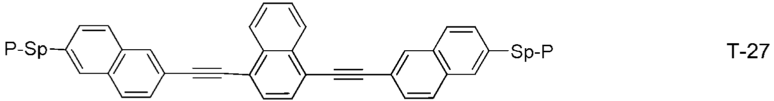 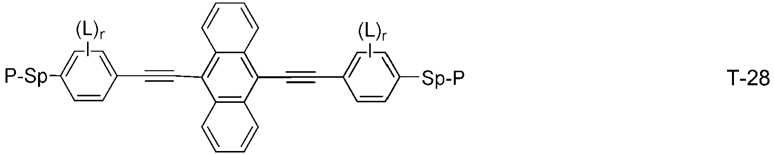 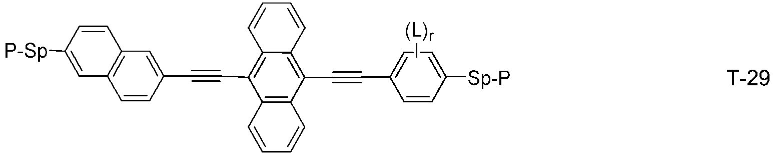 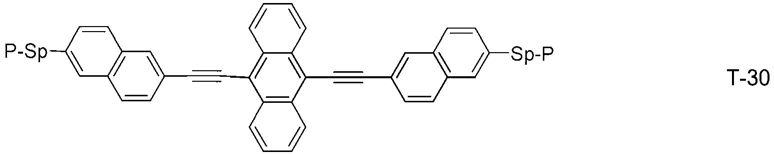 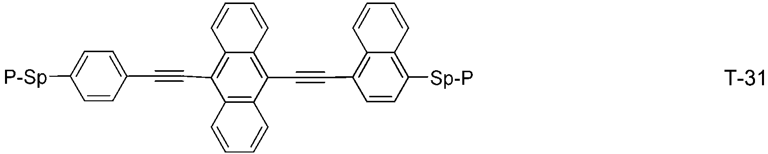 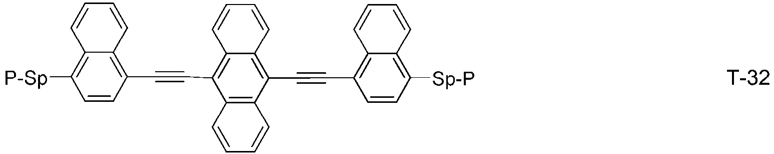 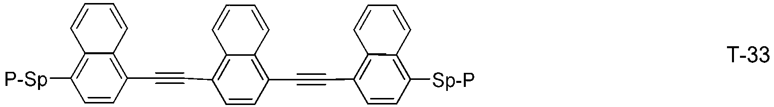 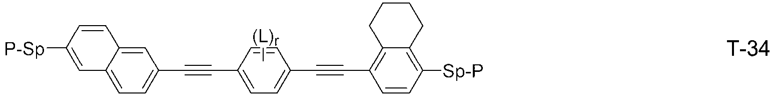 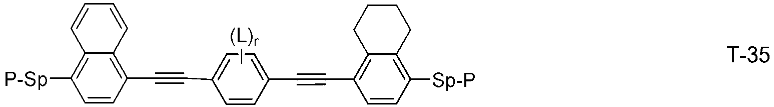 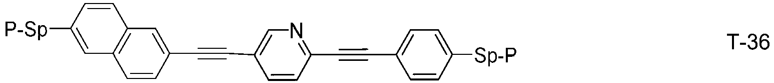 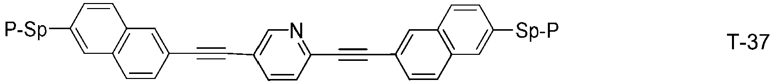 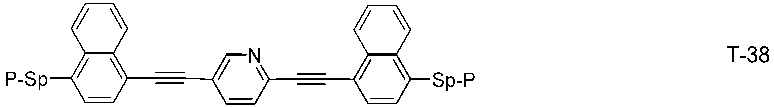 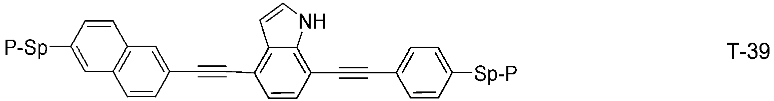 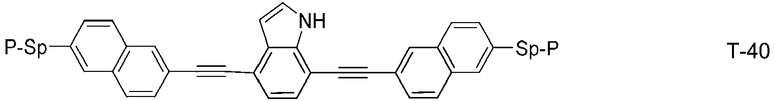 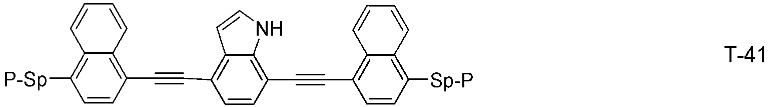 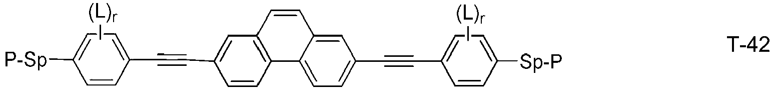 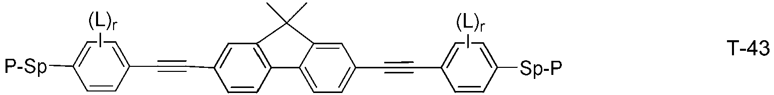 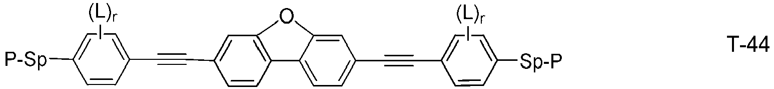 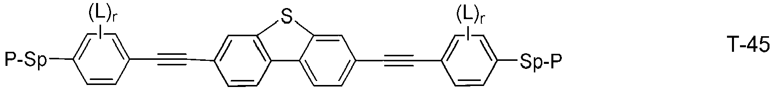 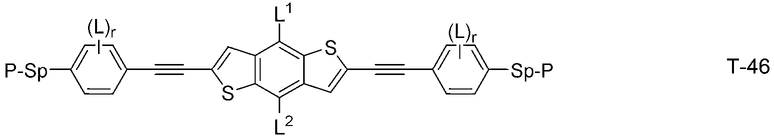 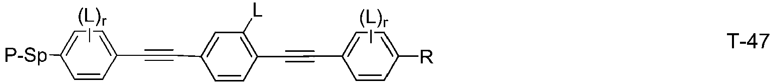 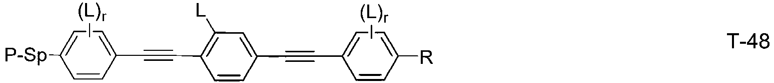 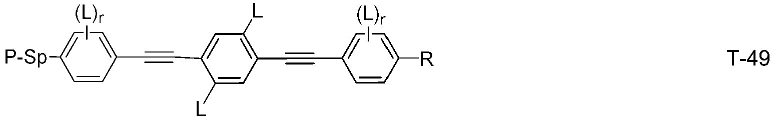 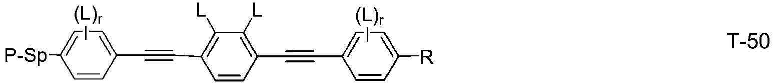 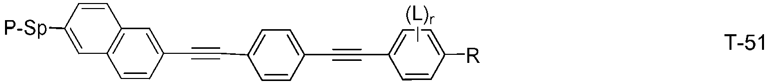 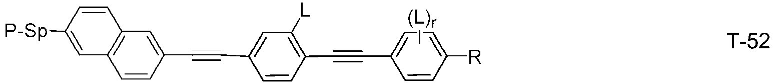 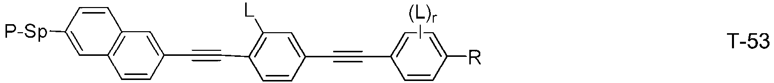 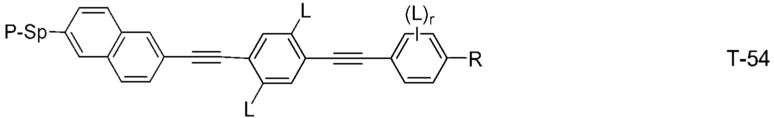 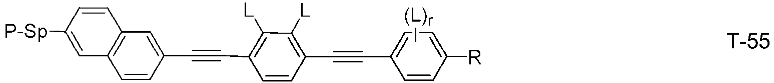 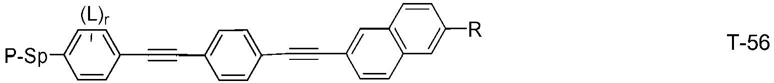 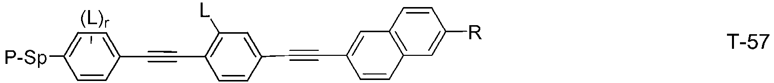 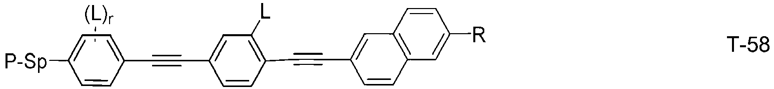 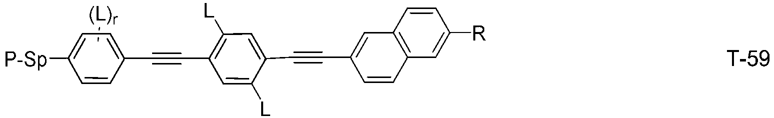 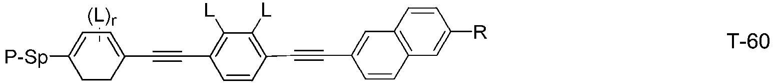 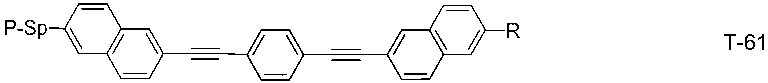 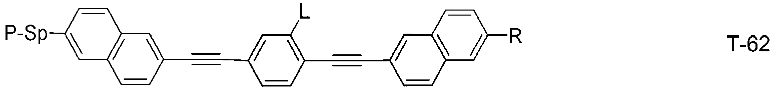 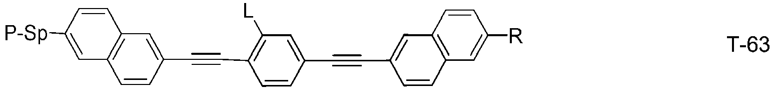 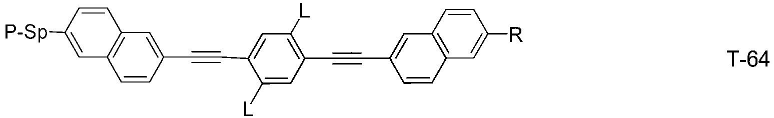 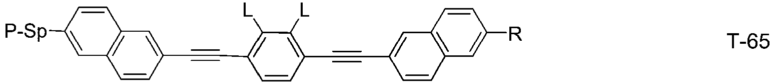 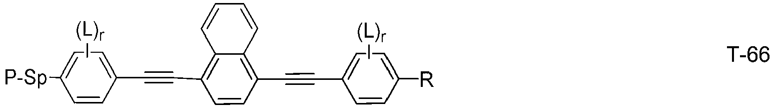 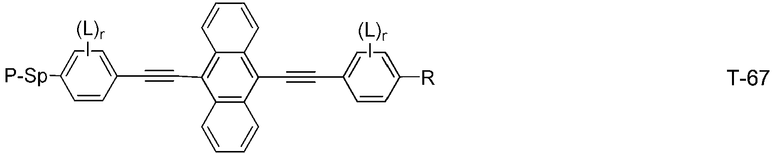 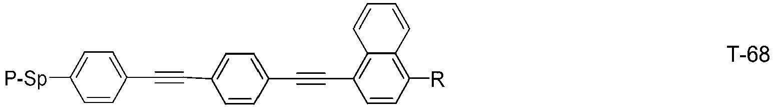 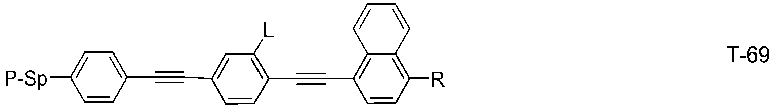 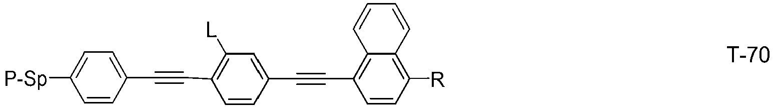 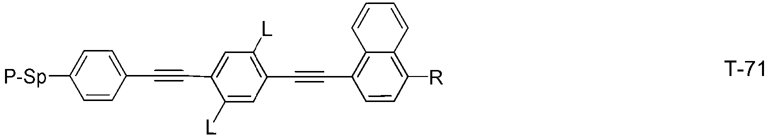 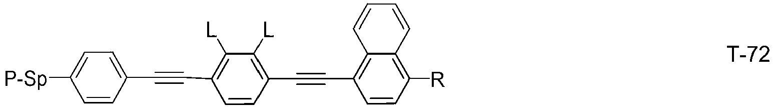 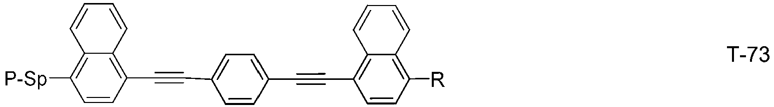 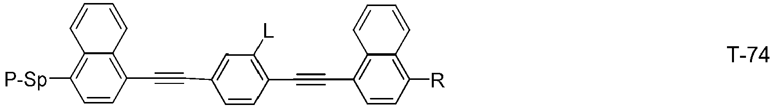 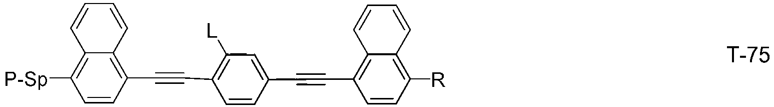 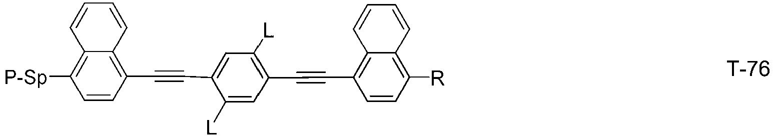 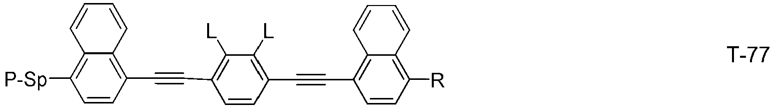 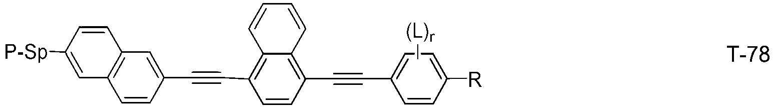 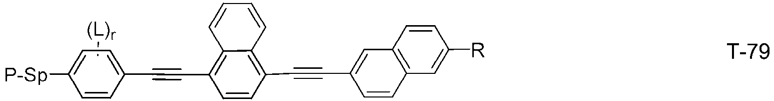 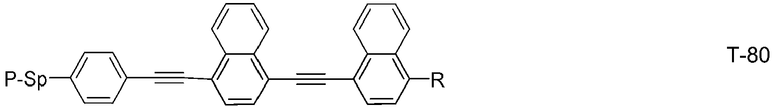 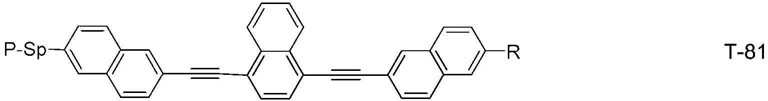 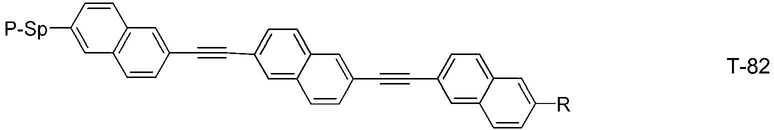 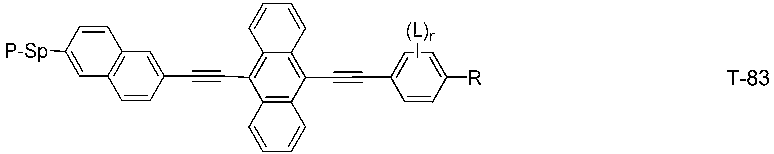 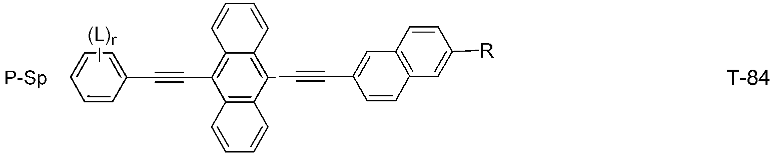 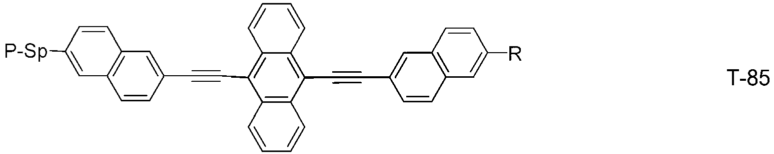 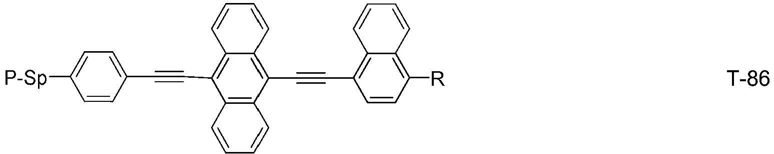 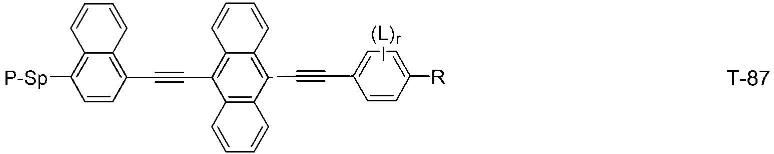 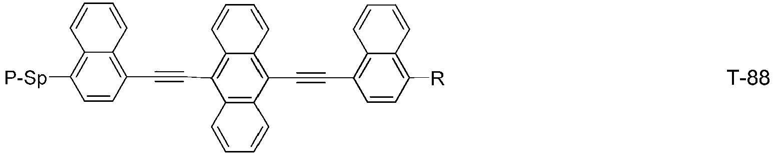 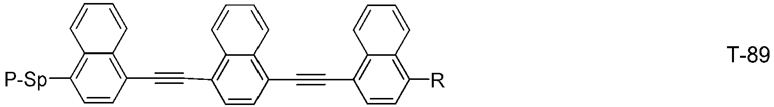 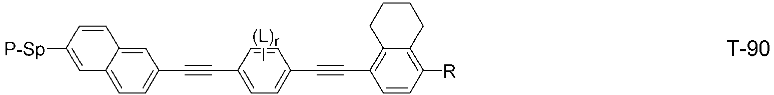 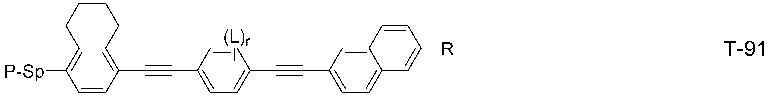 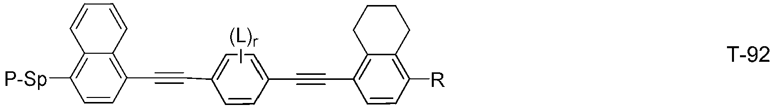 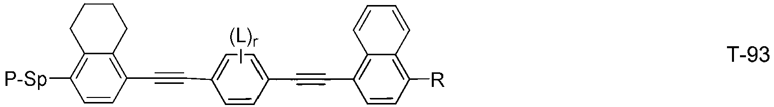 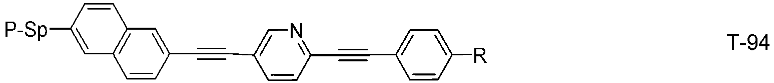 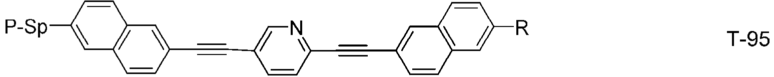 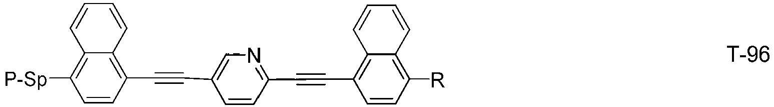 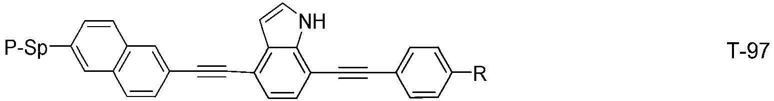 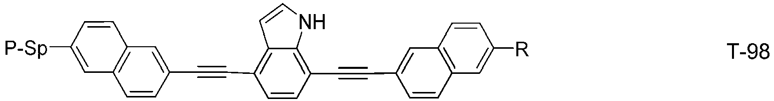 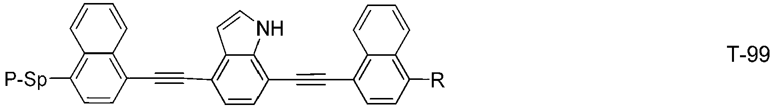 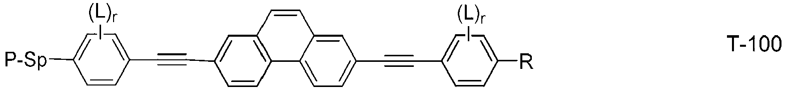 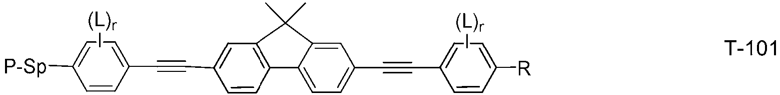 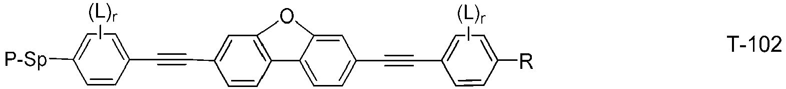 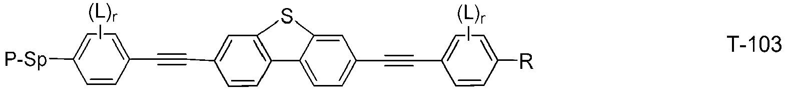 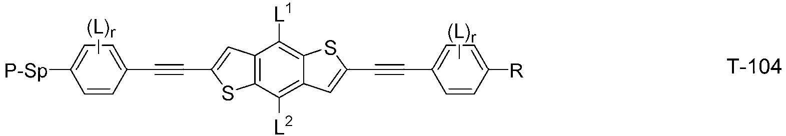 wherein the naphthalene and phenanthrene groups are optionally substituted with one or two groups L, and P, Sp, L and r, independently of each other and on each occurrence identically or differently, have the meanings given in formula T or one of the preferred meanings given above and below, and R has one of the meanings given for R¹¹ in formula T, and preferably denotes OCH₃ or SCH₃, very preferably OCH₃. L is preferably selected from alkyl, alkoxy or thioalkyl having 1 to 6, more preferably 1, 2 or 3 C atoms, very preferably from methyl or ethyl. P is preferably acrylate.

Very preferred are the compounds of formulae T-1 to T-20, especially the compounds of formulae T-1 to T-16.

In another preferred embodiment of the present invention, the RM formulation contains one or more RMs of formula T which contain a -C≡C- group (acetylene group) in the spacer, preferably a -C≡C- group that is directly attached to an outer benzene or naphthalene group of the mesogenic core. These RMs are preferably selected from formula A: 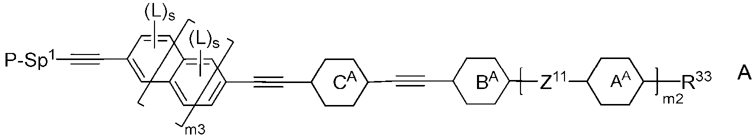 wherein the individual radicals, independently of each other and on each occurrence identically or differently, have the following meanings
- P: a polymerizable group,
- Sp: a spacer group or a single bond,
- Sp¹: a spacer group or a single bond, preferably alkylene with 1 to 12, more preferably with 3 to 6, C atoms,
- R³³: H, F, Cl, CN, CH=CH₂, alkyl, alkoxy, thioalkyl, alkylcarbonyl, alkoxycarbonyl, alkylcarbonyloxy or alkoxycarbonyloxy with 1 to 6, preferably with 1 to 3, C atoms which is optionally fluorinated or chlorinated, or P-Sp,
- A^{A}, B^{A}: phenylene-1,4-diyl, naphthalene-1,4-diyl, naphthalene-2,6-diyl, fluorene-2,7-diyl, dibenzothiophene-2,7-diyl, dibenzofuran-2,7-diyl, benzo[1,2-b:4,5-b']dithiophene-2,5-diyl, indole-4,7-diyl, benzothiophene-4,7-diyl, 9,10-dihydro-phenanthrene-2,7-diyl or 1,2,3,4-tetrahydronaphthalene-5,8-diyl where, in addition, one or more CH groups in these groups may be replaced by N, all of which are optionally substituted by one or more groups L or P-Sp-.
- C^{A}: phenylene-1,4-diyl, naphthalene-1,4-diyl, or naphthalene-2,6-diyl, preferably phenylene-1,4-diyl or naphthalene-2,6-diyl, in which, in addition, one or more CH groups in these groups may be replaced by N, and which are optionally substituted by one or more groups L or P-Sp-, wherein preferably not more than one of A^{A}, B^{A} and C^{A} denote naphthalene-1,4-diyl,
- L: F, Cl, -CN, -SCN, P-Sp-, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 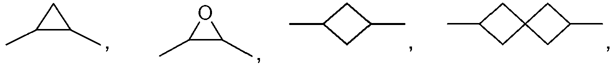 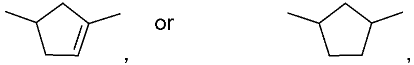 in such a manner that O- and/or S-atoms are not directly connected with each other, and wherein one or more H atoms are each optionally replaced by P-Sp-, F or Cl, or two substituents L that are connected to directly adjacent C atoms may also form a cycloalkyl or cycloalkenyl group with 5, 6, 7 or 8 C atoms,
- Z¹¹: -O-, -S-, -CO-, -COO-, -OCO-, -S-CO-, -CO-S-, -O-COO-, -CO-NR⁰-, -NR⁰-CO-, -NR⁰-CO-NR⁰⁰, -NR⁰-CO-O-, -O-CO-NR⁰-, -OCH₂-, -CH₂O-, -SCH₂-, - CH₂S-, -CF₂O-, -OCF₂-, -CF₂S-, -SCF₂-, -CH₂CH₂-, -(CH₂)ₙ₁, -CF₂CH₂-, - CH₂CF₂-, -CF₂CF₂-, -CH=N-, -N=CH-, -N=N-, -CH=CR⁰-, -CY¹=CY²-, -C≡C-, - CH=CH-COO-, -OCO-CH=CH- or a single bond, preferably -COO-, -OCO-, - C≡C-, or a single bond, most preferably a single bond,
- R⁰, R⁰⁰: H or alkyl having 1 to 12 C atoms,
- Y¹, Y²: H, F, Cl, NCS, or CN,
- m2: 0, 1, 2, 3 or 4, preferably 0, 1 or 2, more preferably 0 or 1, most preferably 0,
- m3: 0 or 1,
- n1: 1, 2, 3 or 4,
- s: 0, 1, 2 or 3, preferably 0, 1 or 2.

The RMs of formula A show a very high extraordinary refractive index nₑ and a very high birefringence. Moreover, their maximum absorbance peak is shifted towards lower wavelengths, with a steepened pitch of the UV absorbance curve, which results in less coloring of the RMs and polymer films made thereof.

In the compounds of formula A, preferably A^{A} and B^{A} are selected from the group consisting of 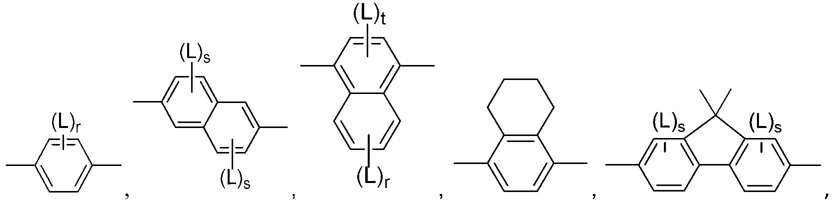 wherein at least one of A^{A} and B^{A} is selected from phenylene-1,4-diyl and napththalene-2,6-diyl, and wherein the individual radicals, independently of each other and on each occurrence identically or differently, have the following meanings
- L: P-Sp-, -CN, F, Cl, or alkyl, alkoxy or thioalkyl which is optionally fluorinated and has 1 to 6, preferably 1 to 3, more preferably 1 or 2 C atoms, preferably P-Sp-, -CN, F, Cl, OCH₃, SCH₃, C₂H₅, OC₂H₅, SC₂H₅, CHO, COCH₃, COOCH₃ or COOH,
- r: 0, 1, 2, 3 or 4, preferably 0, 1 or 2,
- s: 0, 1, 2 or 3, preferably 0 or 1,
- t: 0, 1 or 2, preferably 0 or 1.

More preferably rings A^{A} and B^{A} in formula A are selected from the group consisting of phenylene-1,4-diyl, naphthalene-1,4-diyl and naphthalene 2,6-diyl, all of which are optionally substituted by one or more groups L and/or P-Sp-, wherein not more than one of A and B may denote naphthalene-1,4-diyl.

Very preferably one, two, three, four or more of rings A^{A} and B^{A} in formula A are selected from the group consisting of 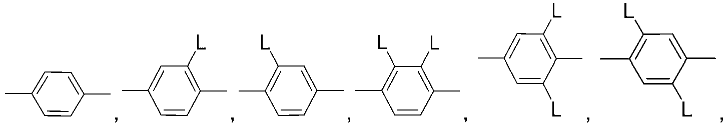 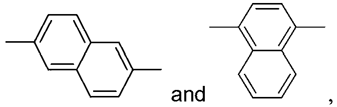 wherein not more than one of A^{A} and B^{A} may denote naphthalene-1,4-diyl and wherein L, on each occurrence identically or differently, denotes P-Sp-, -CN, F, CI, or alkyl, alkoxy or thioalkyl which is optionally fluorinated and has 1 to 6, preferably 1 to 3, more preferably 1 or 2 C atoms, preferably P-Sp-, F, Cl, CN, CH₃, OCH₃, SCH₃, C₂H₅, OC₂H₅ or SC₂H₅.

Especially preferred are compounds of formula A, in particular wherein n=m=0, wherein the ring B^{A} is selected from the group consisting of phenylene-1,4-diyl, naphthalene-1,4-diyl and naphthalene-2,6-diyl, preferably phenylene-1,4-diyl, naphthalene-1,4-diyl and naphthalene-2,6-diyl, all of which are optionally mono- or disubstituted by L and/or P-Sp-.

Preferably ring C^{A} in formula A is selected from the group consisting of 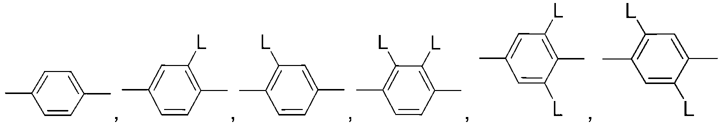 and 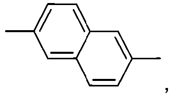 wherein L, on each occurrence identically or differently, denotes P-Sp-, -CN, F, CI, or alkyl, alkoxy or thioalkyl which is optionally fluorinated and has 1 to 6, preferably 1 to 3, more preferably 1 or 2 C atoms, preferably P-Sp-, F, Cl, CN, CH₃, OCH₃, SCH₃, C₂H₅, OC₂H₅ or SC₂H₅.

Further preferred are compounds of formula A wherein m=1 and/or at least one of rings B^{A} and C^{A} denotes naphthalene-2,6-diyl.

Further preferred are compounds of formula A wherein m=0, preferably those wherein n=0, wherein rings B^{A} and C^{A} together with the phenylene-1,4-diyl group form a group selected from the following formulae or their mirror images, wherein * denotes the linkage to the acetylene group in formula A: 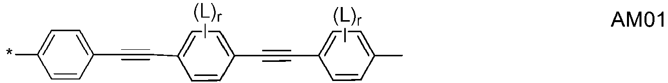 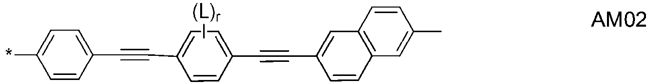 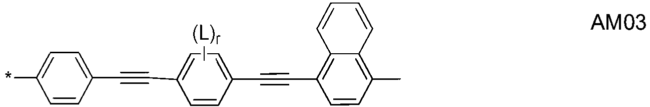 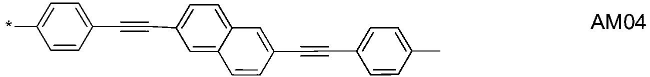 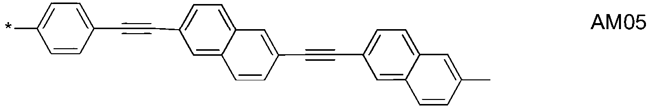 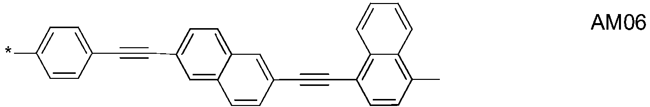 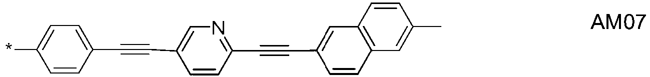 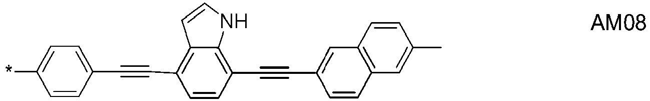 wherein the naphthalene groups are optionally substituted with one or two groups L, r is 0, 1, 2, 3 or 4, preferably 0, 1 or 2, and L is as defined in formula A.

Further preferred are compounds of formula A wherein m=1, preferably those wherein n=0, wherein rings B^{A} and C^{A} together with the naphthalene-2,6-diyl group form a group selected from the following formulae or their mirror images, wherein * denotes the linkage to the acetylene group in formula A: 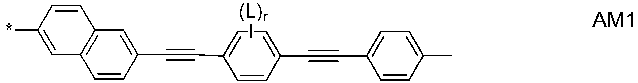 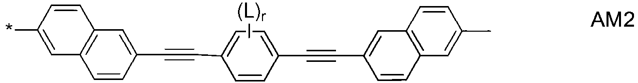 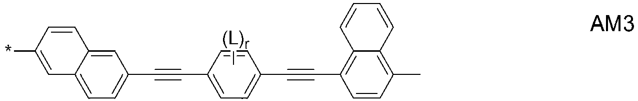 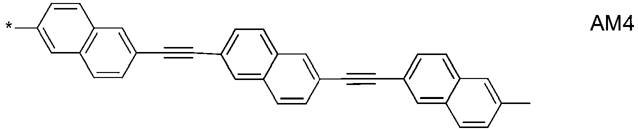 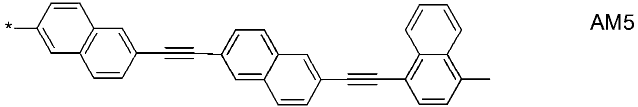 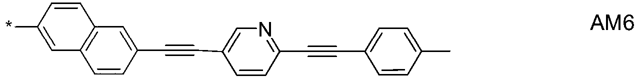 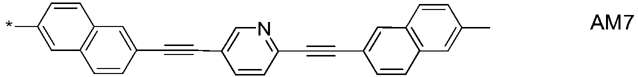 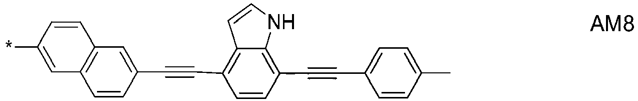 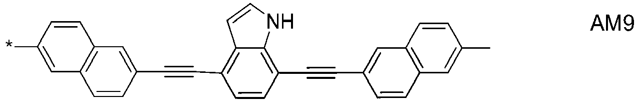 wherein the naphthalene groups are optionally substituted with one or two groups L, r is 0, 1, 2, 3 or 4, preferably 0, 1 or 2, and L is as defined in formula A.

In formulae AM01 to AM08 and AM1 to AM9, preferably L on each occurrence identically or differently denotes P-Sp-, -CN, F, Cl, or alkyl, alkoxy or thioalkyl which is optionally fluorinated and has 1 to 6, preferably 1 to 3, more preferably 1 or 2 C atoms, very preferably P-Sp-, F, Cl, CN, CH₃, OCH₃, SCH₃, C₂H₅, OC₂H₅ or SC₂H₅, most preferably CH₃ or C₂H₅, and r is preferably 0, 1, 2 or 3, very preferably 0, 1 or 2.

Especially preferred are the groups of formulae AM01, AM02, AM03, AM04, AM1, AM2 and AM3.

Very preferred compounds of formula A are selected from the following subformulae: 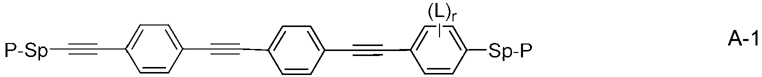 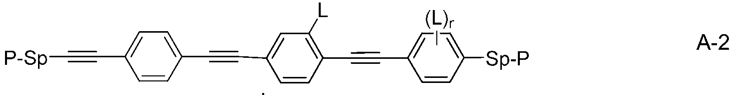 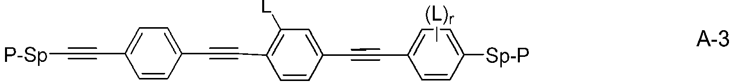 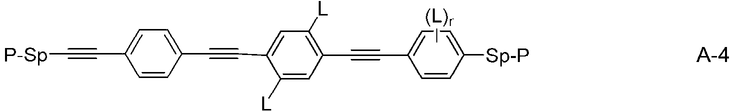 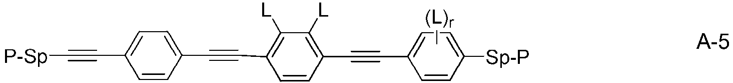 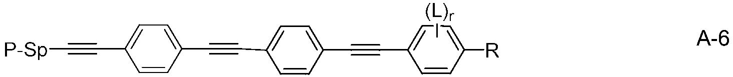 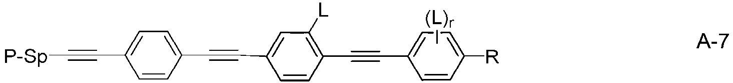 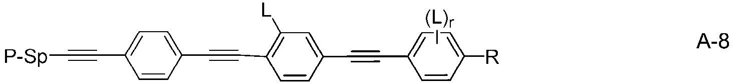 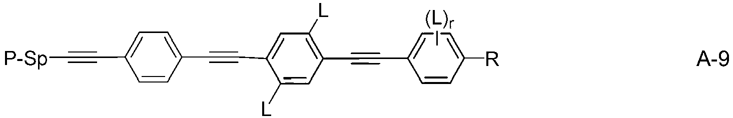 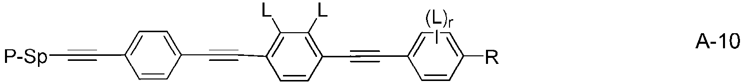 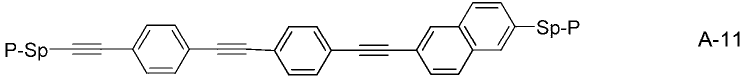 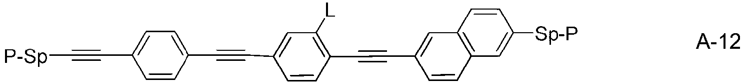 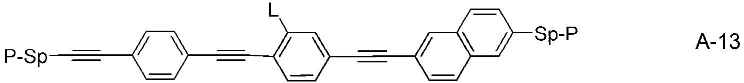 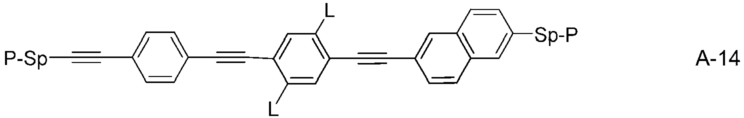 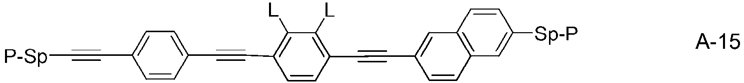 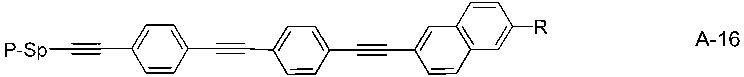 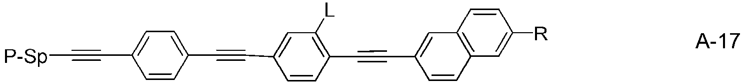 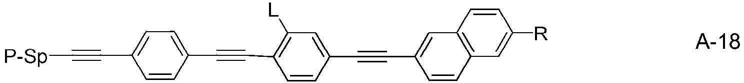 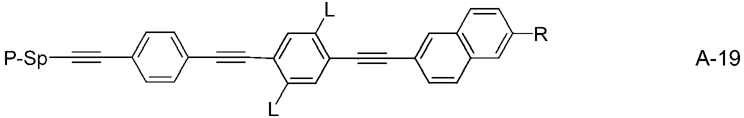 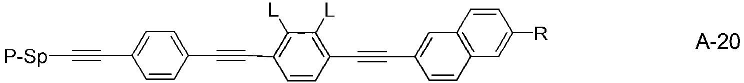 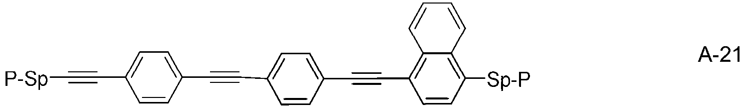 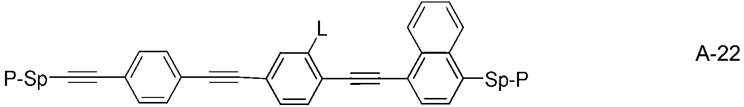 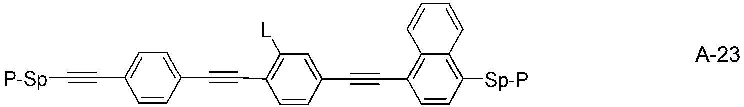 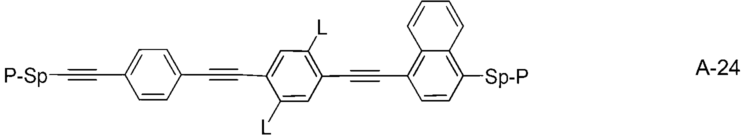 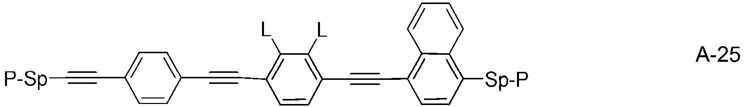 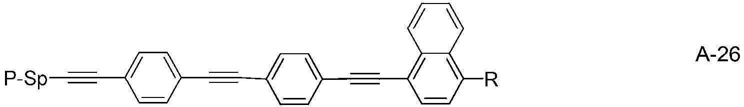 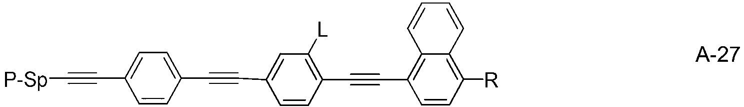 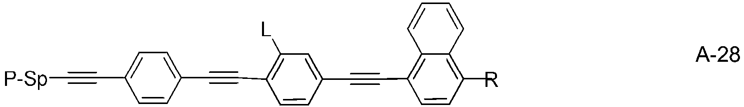 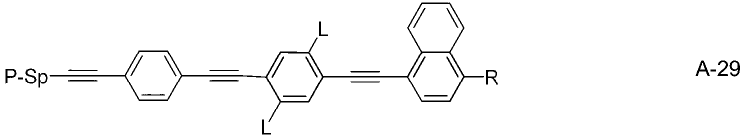 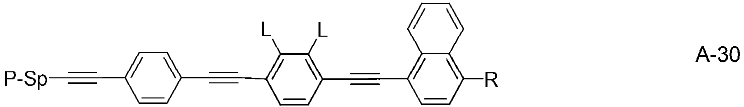 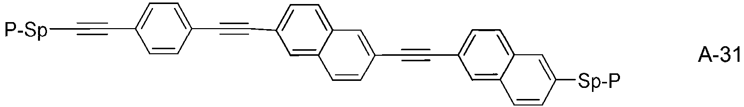 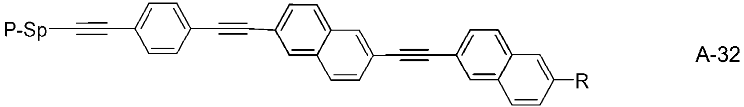 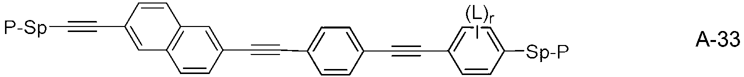 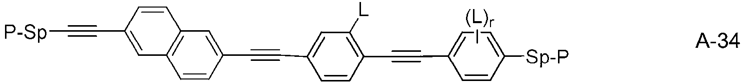 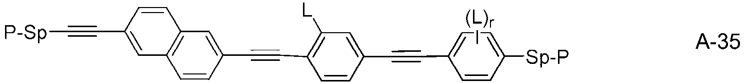 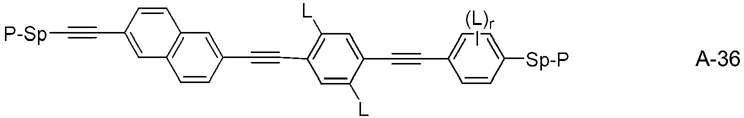 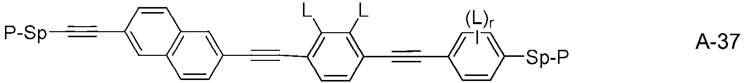 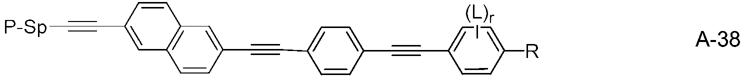 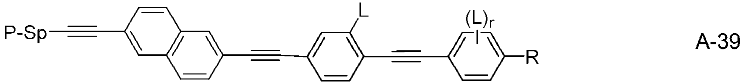 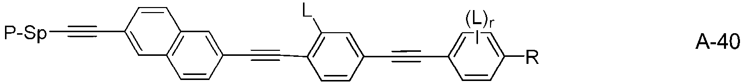 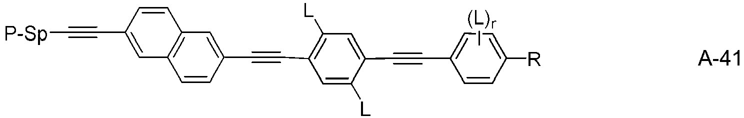 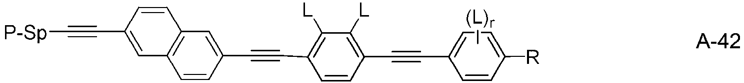 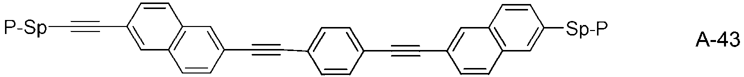 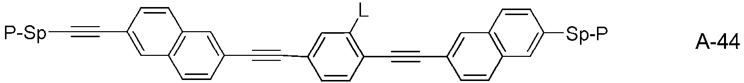 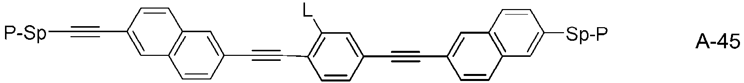 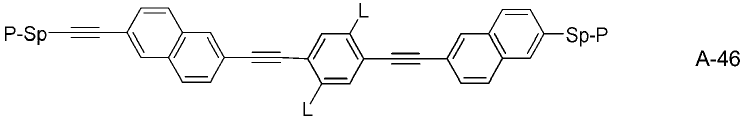 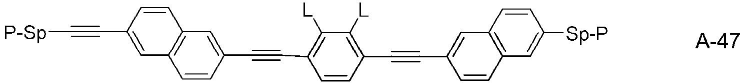 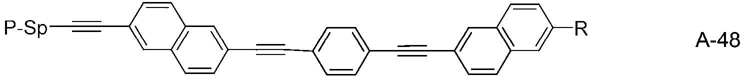 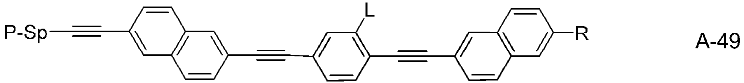 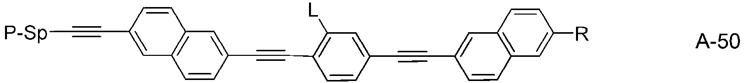 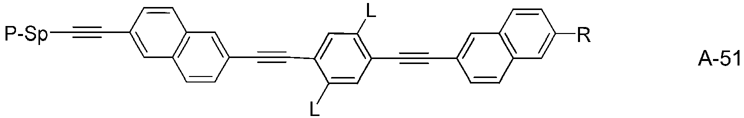 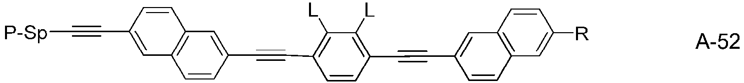 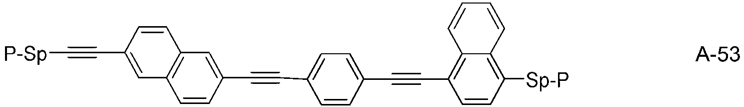 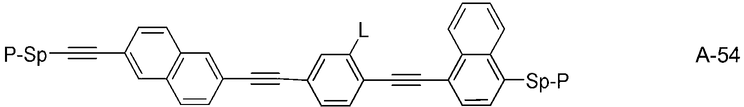 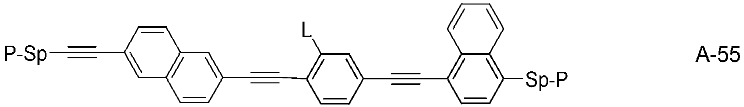 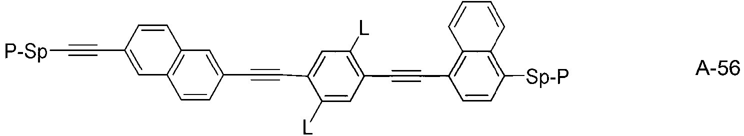 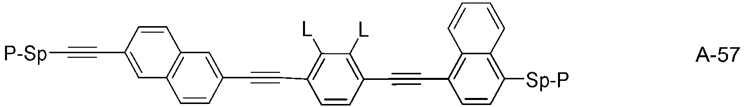 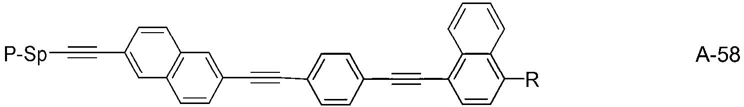 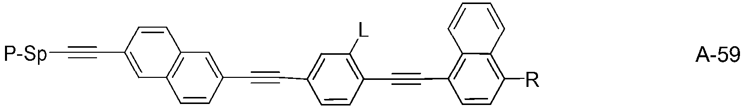 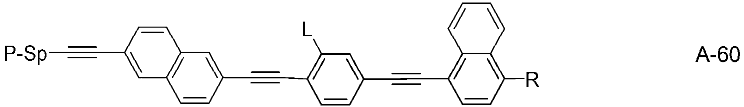 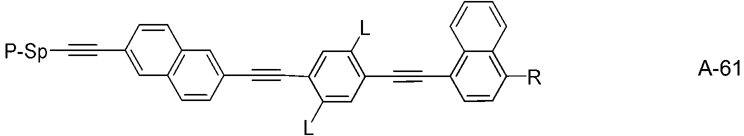 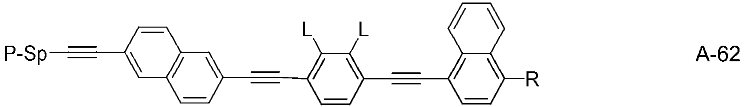 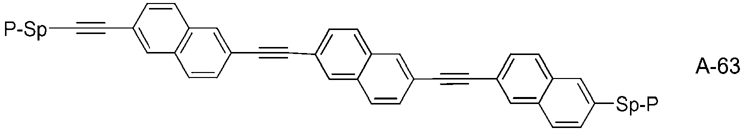 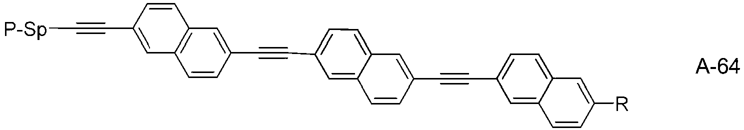 wherein the naphthalene groups are optionally substituted with one or two groups L, and P, Sp, L and r, independently of each other and on each occurrence identically or differently, have the meanings given above, and R has one of the meanings given for R¹¹ in formula A, and preferably denotes OCH₃ or SCH₃, very preferably OCH₃. L is preferably selected from F, Cl, CN, CH₃, OCH₃, SCH₃, C₂H₅, OC₂H₅ or SC₂H₅. P is preferably acrylate.

Further preferred are the direactive compounds of the formulae A and A-1 to A-64 wherein one of the two groups Sp is a single bond and the other group Sp is different from a single bond.

In the compounds of formula D, M, T, A and their subformulae as described above and below, P is preferably selected from the group consisting of vinyloxy, acrylate, methacrylate, fluoroacrylate, chloroacrylate, oxetane and epoxide, very preferably from acrylate and methacrylate, most preferably acrylate.

Further preferred are compounds of formula D, M, T, A and their subformulae as described above and below, wherein all polymerizable groups P that are present in the compound have the same meaning, and very preferably denote acrylate or methacrylate, most preferably acrylate.

Further preferred are compounds of formula D, M, T, A and their subformulae as described above and below, which contain one, two, three or four groups P-Sp, very preferably two or three groups P-Sp.

Further preferred are compounds of formula T, A and their subformulae as described above and below, wherein R¹¹ is P-Sp-.

Further preferred are compounds of formula M, T, A and their subformulae as described above and below, wherein R²² or R¹¹, respectively, is selected from F, Cl, CN, CF₃, CCl₃, CH=CH₂, or alkoxy, thioalkyl, alkylcarbonyl, alkoxycarbonyl, alkylcarbonyloxy or alkoxycarbonyloxy with 1 to 3 C atoms which is optionally fluorinated, more preferably from F, Cl, CN, OCH₃, SCH₃, OCF₃, CF₃, CH=CH₂, CHO, COCH₃, COOCH₃, COOC₂H₅ and CCl₃, very preferably from OCH₃, OCF₃ or CHO, most preferably from OCH₃ or OCF₃.

Further preferred are compounds of formula D, M, T, A and their subformulae as described above and below, wherein Sp¹, and/or Sp² if present, denotes -(CH₂)ₛ₁-, wherein s1 is an integer from 1 to 12, more preferably 3, 4, 5 or 6.

Further preferred are compounds of formula D, M, T, A and their subformulae as described above and below, wherein Sp¹, and/or Sp² if present, denotes a single bond or -(CH₂)ₚ₁-, -O-(CH₂)ₚ₁-, -O-CO-(CH₂)ₚ₁, or -CO-O-(CH₂)ₚ₁, wherein p1 is 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

Further preferred are compounds of formula D, M, T, A and their subformulae as described above and below, wherein Sp¹, and/or Sp² if present, is a single bond.

Further preferred are compounds of formula D, M, T, A and their subformulae as described above and below, wherein Sp¹, and/or Sp² if present, is different from a single bond.

Further preferred are compounds of formula D, M, T, A and their subformulae as described above and below, wherein m is 1.

Further preferred are compounds of formula T, A and their subformulae as described above and below, wherein at least one of B and C denotes naphthalene-2,6-diyl or naphthalene-1,4-diyl, very preferably naphthalene-2,6-diyl, which is optionally substituted by one or more groups L or P-Sp-.

Further preferred are compounds of formula T, A and their subformulae as described above and below, wherein L is P-Sp-, F, Cl, -CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 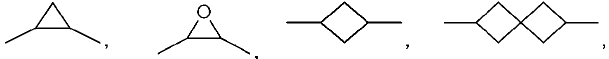 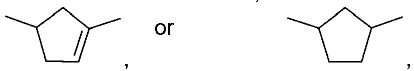 in such a manner that O- and/or S-atoms are not directly connected with each other, and wherein one or more H atoms are each optionally replaced by P-Sp-, F or Cl, or two substituents L that are connected to directly adjacent C atoms may also form a cycloalkyl or cycloalkenyl group with 5, 6, 7 or 8 C atoms, and wherein R⁰ and R⁰⁰ independently of each other denote H or alkyl with 1 to 12 C atoms.

Very preferred are compounds of formula T, A and their subformulae as described above and below, wherein L is F, Cl, CN or straight chain alkyl, alkoxy or thioalkyl having 1 to 6 C atoms or branched or cyclic alkyl, alkoxy or thioalkyl having 3 to 8 C atoms, most preferably F, Cl, CN, CH₃, OCH₃, SCH₃, C₂H₅, OC₂H₅ or SC₂H₅.

Further preferred are compounds of formula T, A and their subformulae as described above and below, wherein Z¹¹ and Z¹² denote -COO-, -OCO-, -C≡C- or a single bond, more preferably -C≡C- or a single bond, most preferably a single bond.

Further preferred compounds of the formulae T and A and their subformulae are selected from the following preferred embodiments, including any combination thereof:
- n = 0, and/or
- ring C or C^{A}, respectively, denotes phenylene-1,4-diyl which is substituted by alkyl, alkoxy or thioalkyl with 1 to 3, preferably 1 or 2 C atoms, more preferably methyl or ethyl, most preferably ethyl, or
- ring C or C^{A}, respectively, denotes naphthalene-2,6-diyl, which is optionally substituted by one or more groups L or P-Sp-, and/or
- ring B or B^{A}, respectively, denotes naphthalene-2,6-diyl, which is optionally substituted by one or more groups L or P-Sp-, and/or
- m=1 and/or at least one of B and C, or at least one of B^{A} and C^{A}, respectively, denotes naphthalene-2,6-diyl, which is optionally substituted by one or more groups L or P-Sp-,
- m=0 and at least one of B and C, or at least one of B^{A} and C^{A}, respectively, denotes naphthalene-2,6-diyl, which is optionally substituted by one or more groups L or P-Sp-,
- P denotes acrylate or methacrylate and/or
- Sp¹ denotes -(CH₂)ₛ₁-, wherein s1 is an integer from 1 to 1, preferably 3, 4, 5 or 6, and/or
- Sp denotes Sp"-X", preferably, -Sp"-X"- denotes -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, -(CH₂CH₂O)_{q1}-CH₂CH₂-, -CH₂CH₂-S-CH₂CH₂-, or -CH₂CH₂-NH-CH₂CH₂-, in which p1 is an integer from 1 to 12, q1 is an integer from 1 to 3, and/or
- L is selected from P-Sp-, F, Cl, CN, CH₃, OCH₃, SCH₃, C₂H₅, OC₂H₅ or SC₂H₅, very preferably CH₃ or C₂H₅, and r denotes 1, and/or
- ring C is substituted by one L which denotes P-Sp-, preferably acrylate, and/or
- R¹¹ is P-Sp-, or
- R¹¹ is F, Cl, CN, OCH₃ or SCH₃, preferably OCH₃ or SCH₃, very preferably OCH₃.

Very preferred compounds of formula T are listed below:

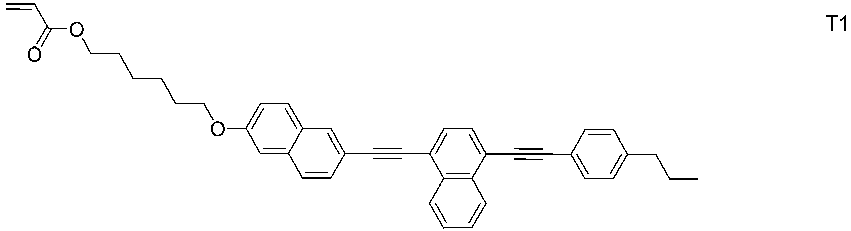

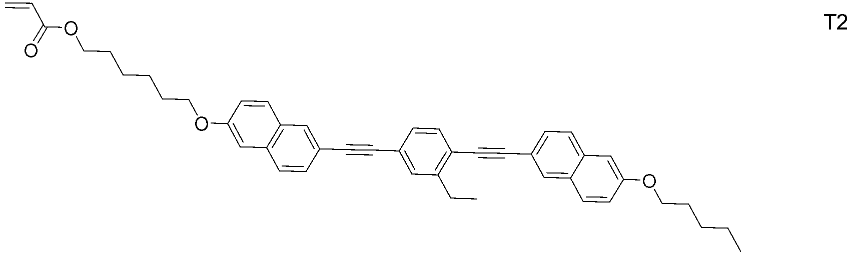

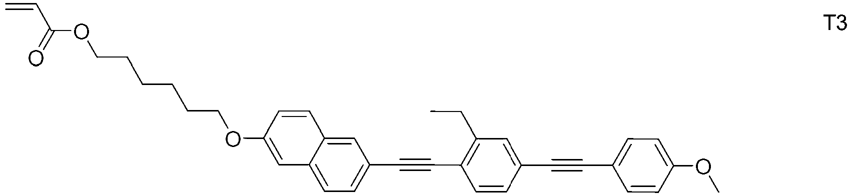

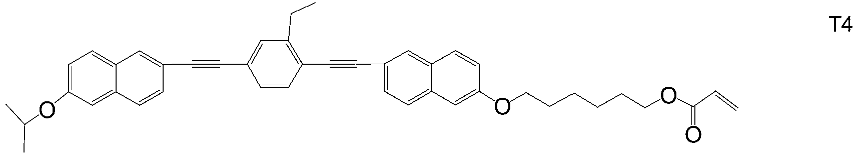

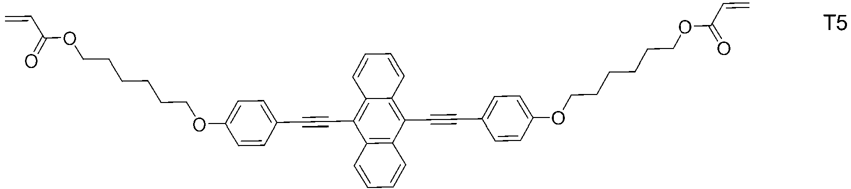

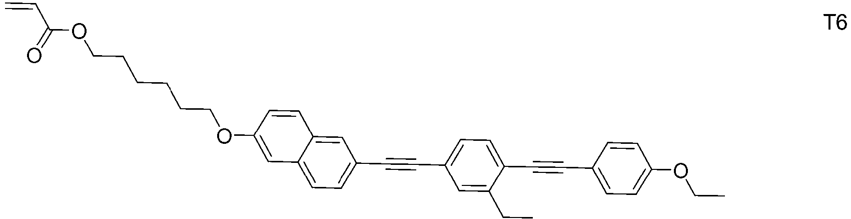

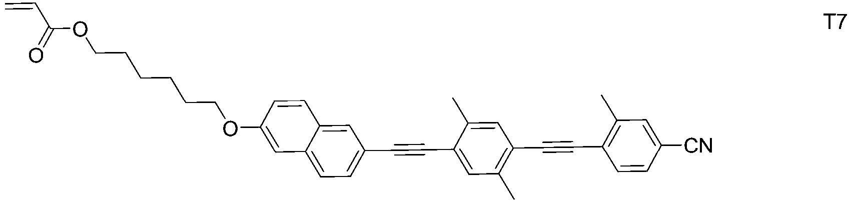

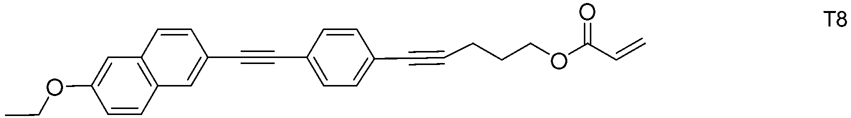

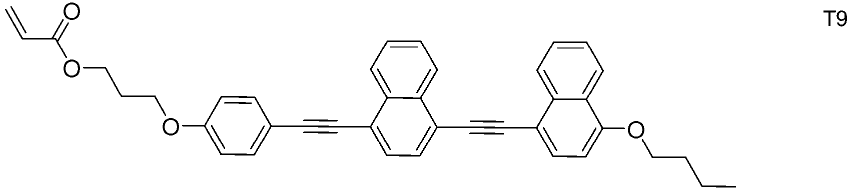

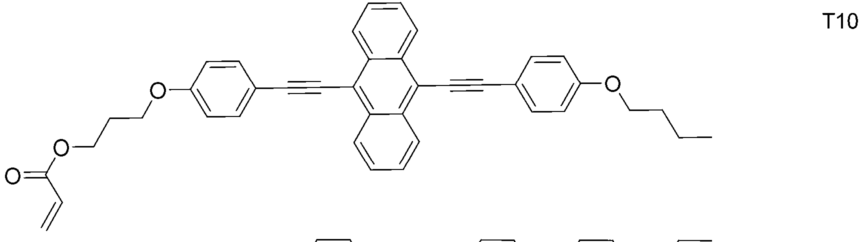

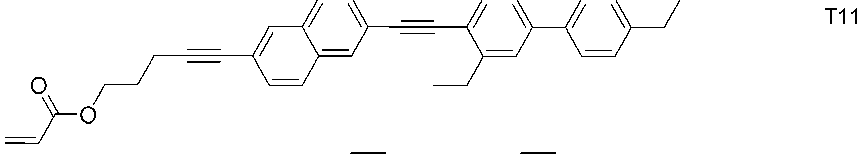

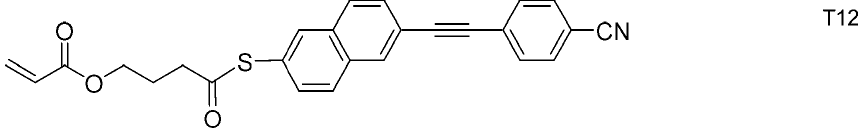

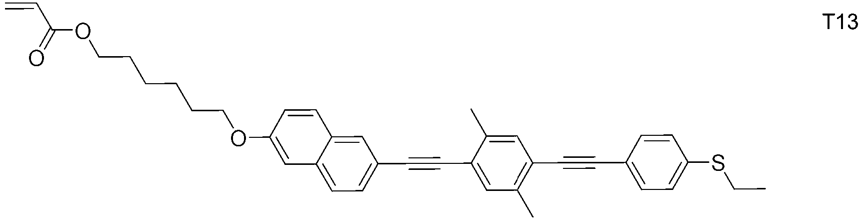

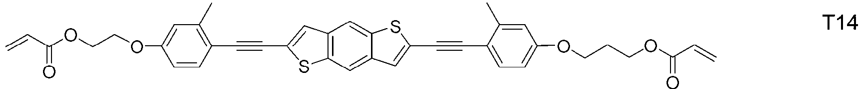

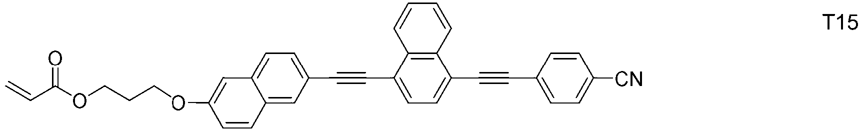

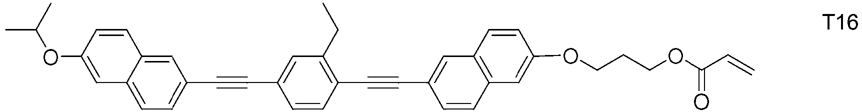

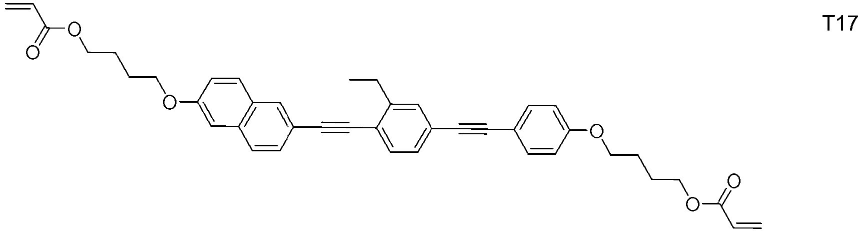

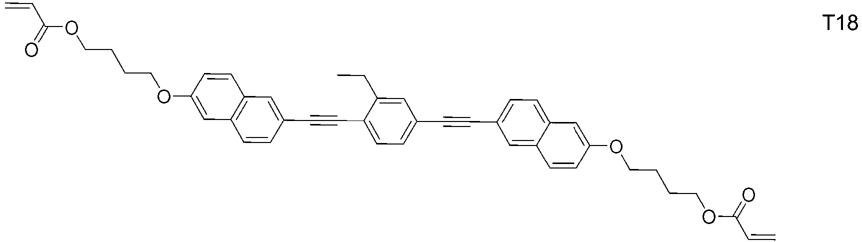

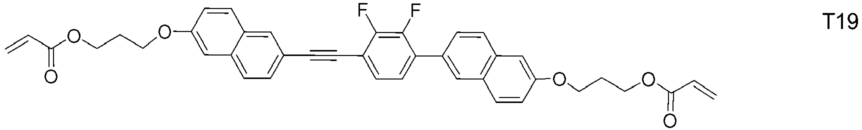

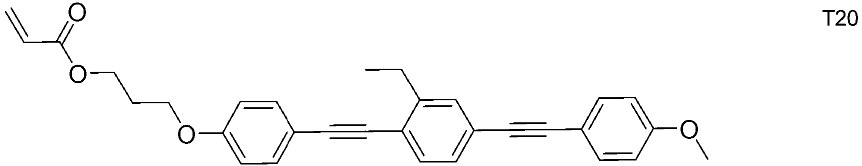

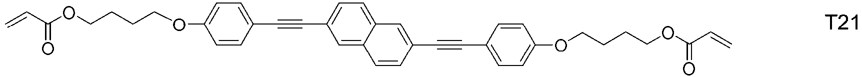

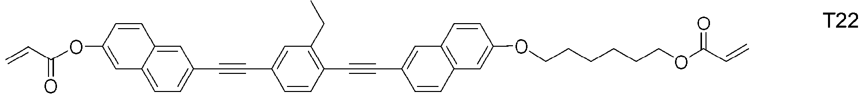

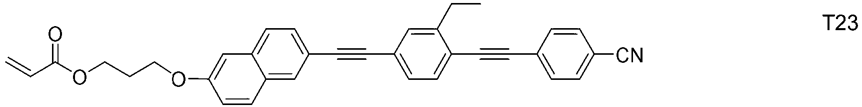

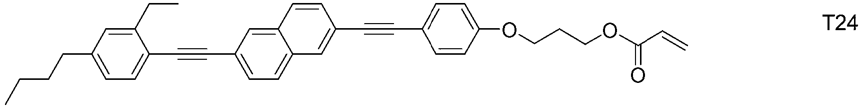

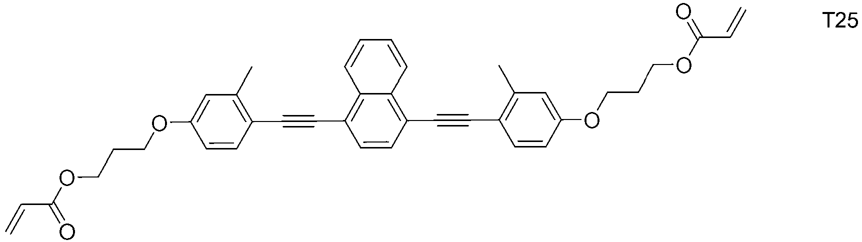

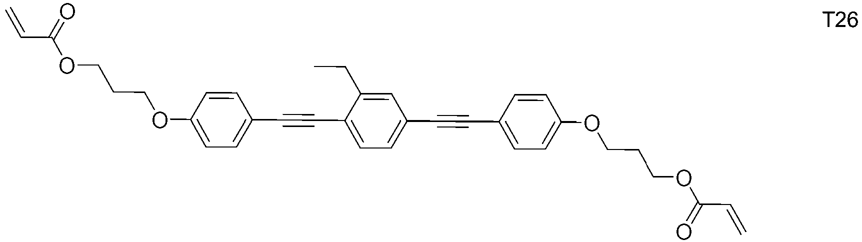

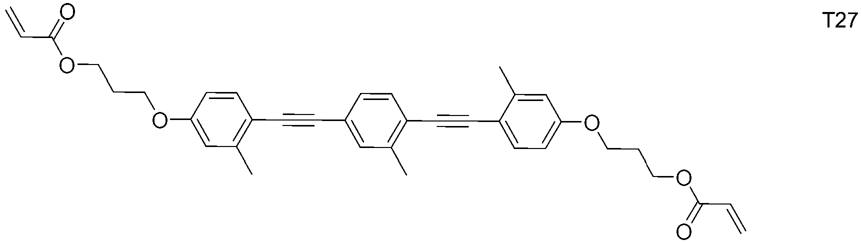

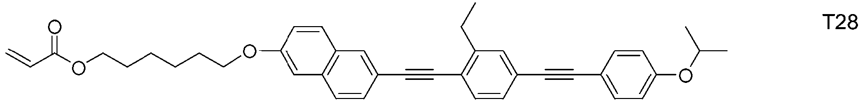

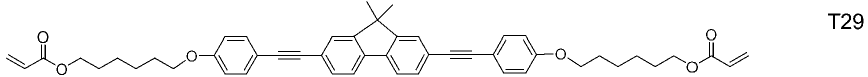

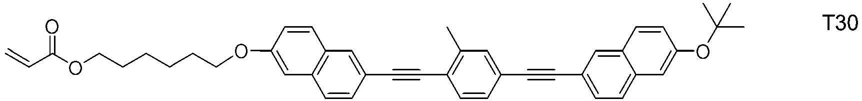

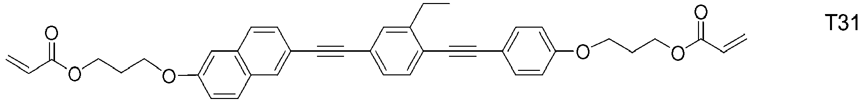

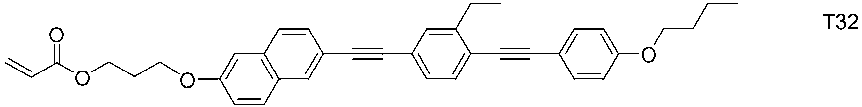

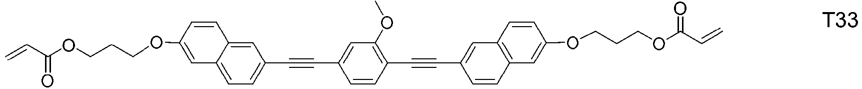

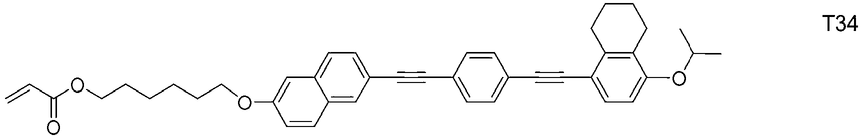

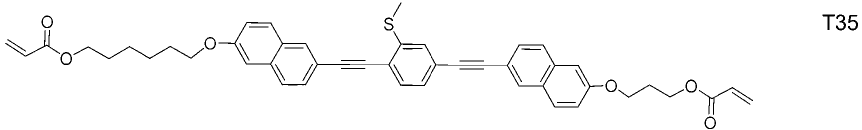

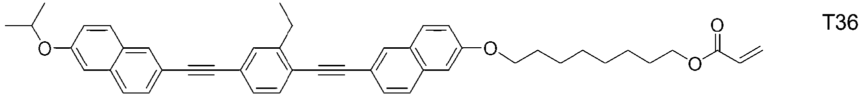

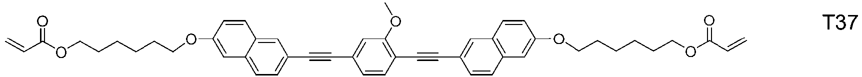

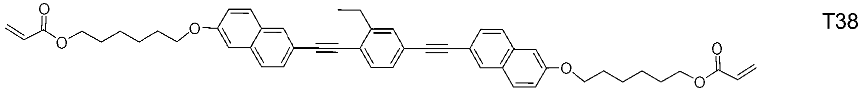

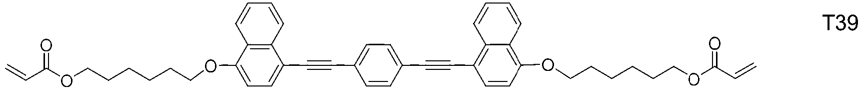

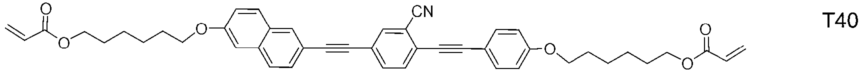

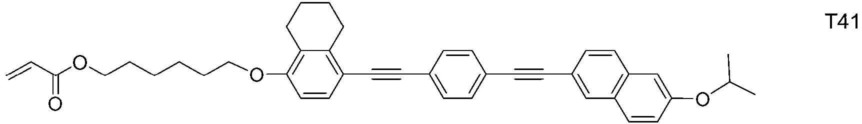

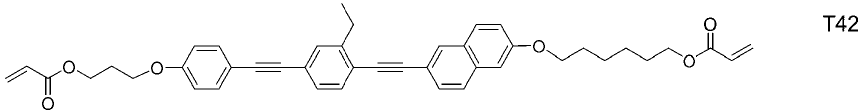

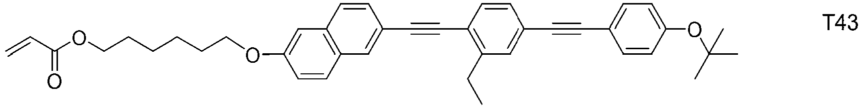

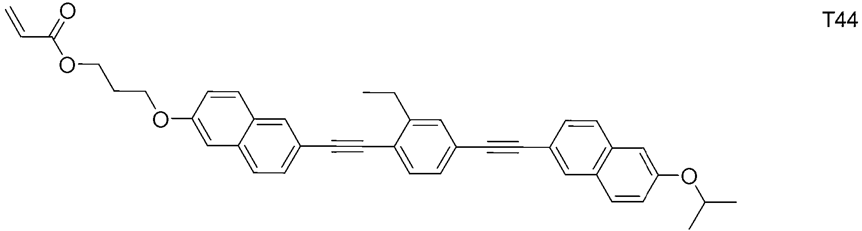

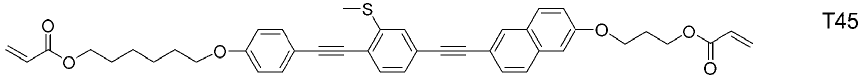

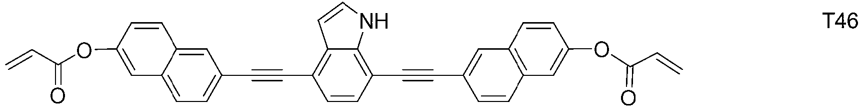

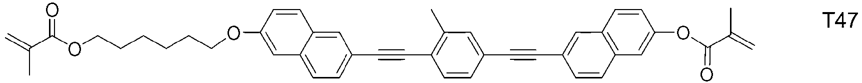

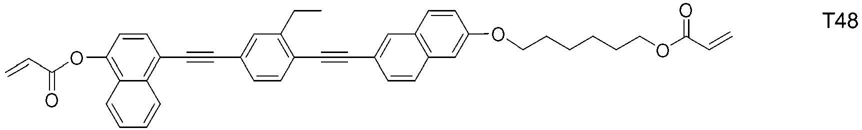

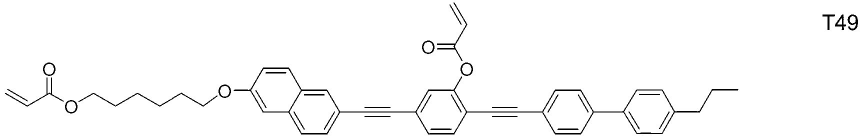

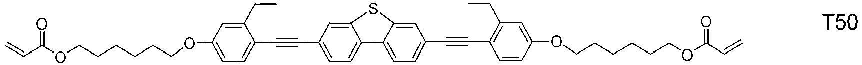

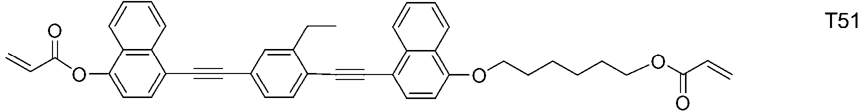

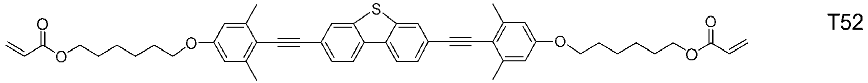

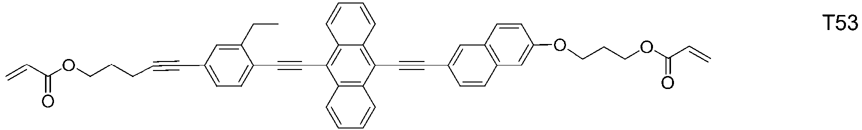

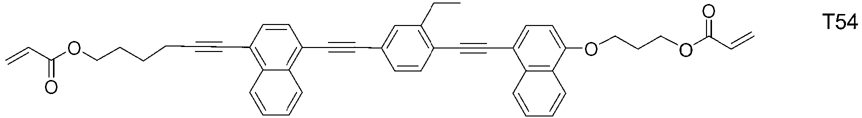

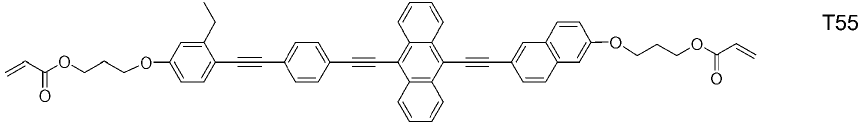

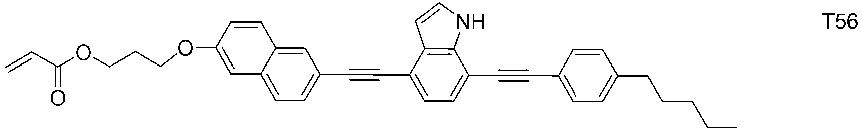

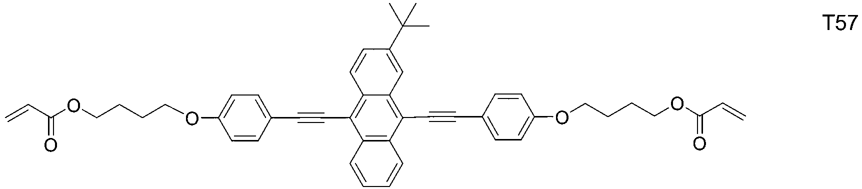

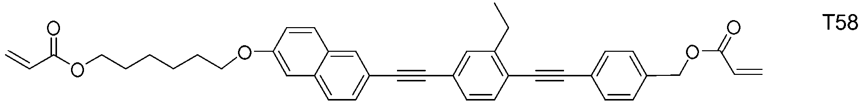

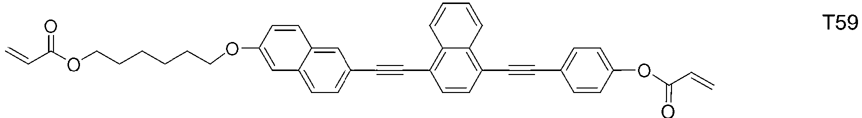

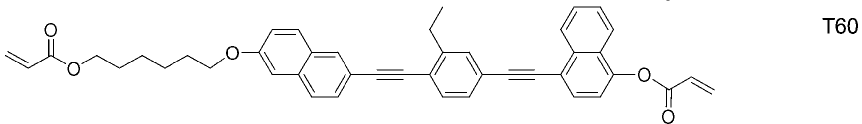

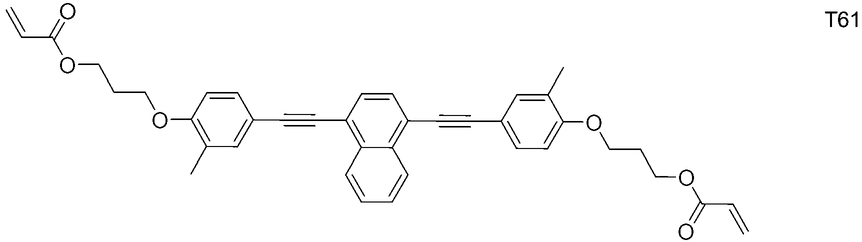

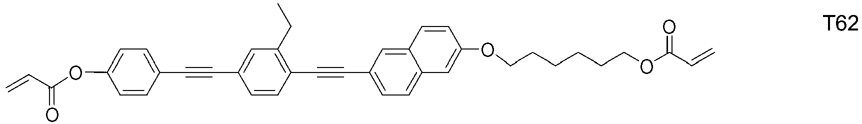

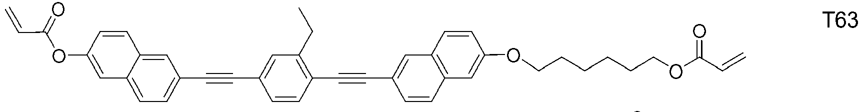

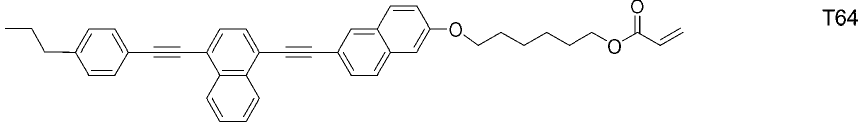

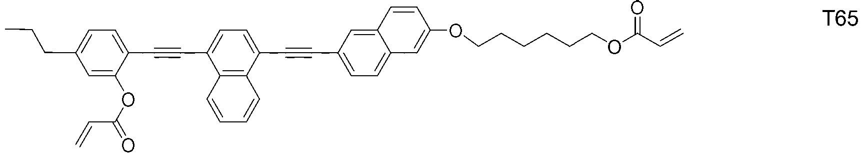

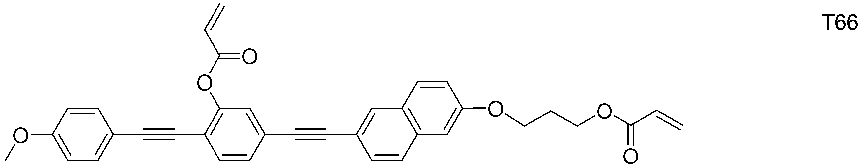

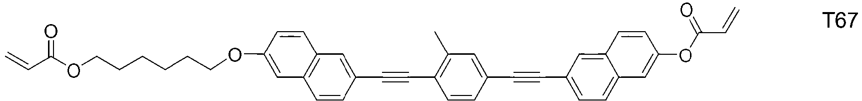

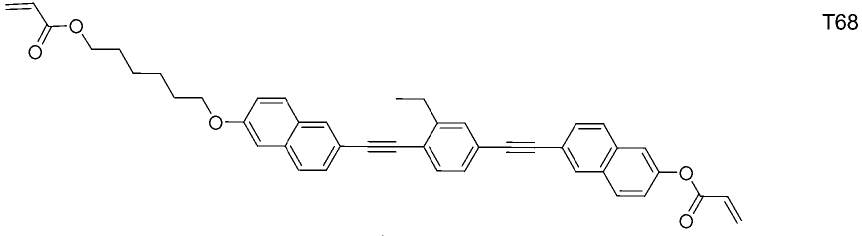

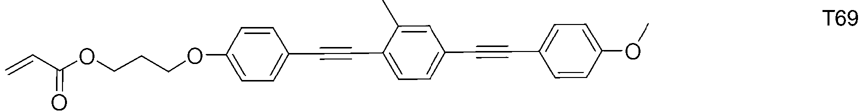

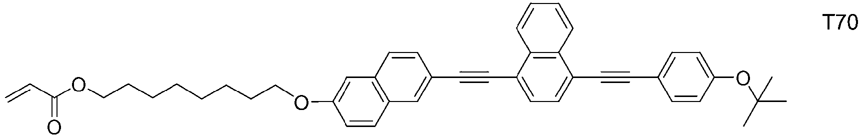

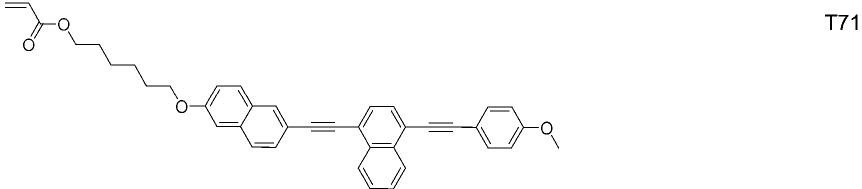

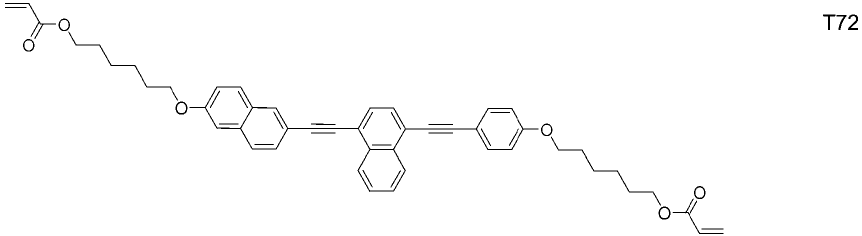

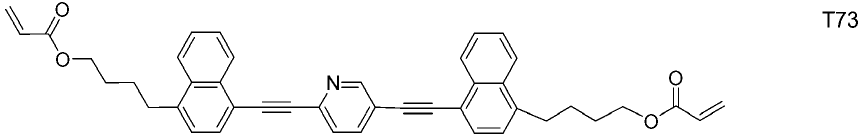

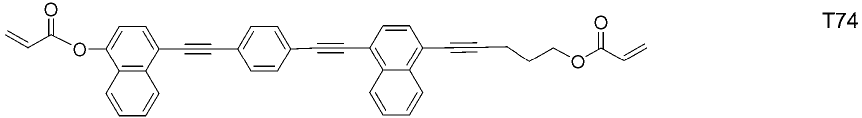

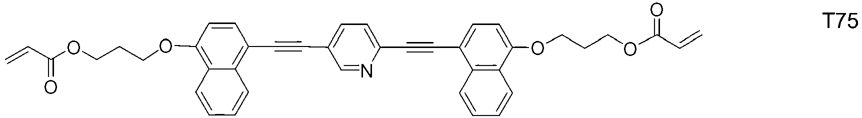

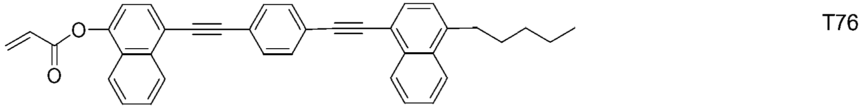

Especially preferred are the compounds of formula T-3, T-19, T-21, T-24, T-25, T-30, T-47, T-50, T-53, T-59, T-60, T-68, T-70, T-71, T-73 and T-75.

Very preferred compounds of formula A are listed below:

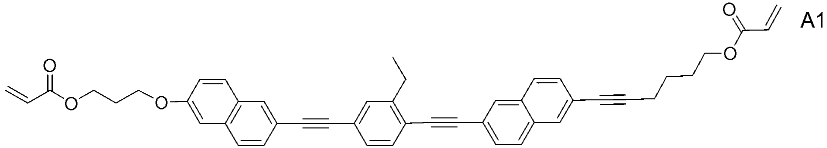

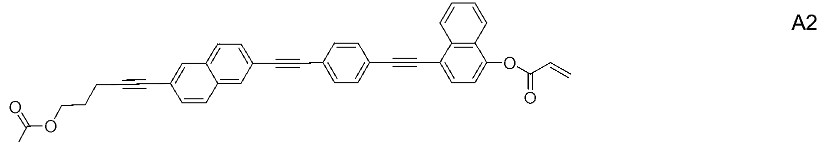

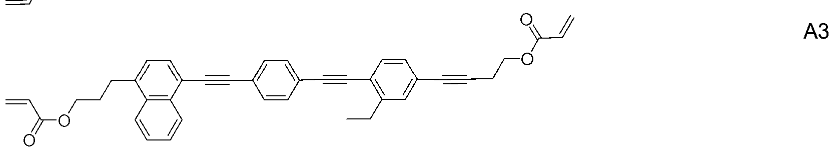

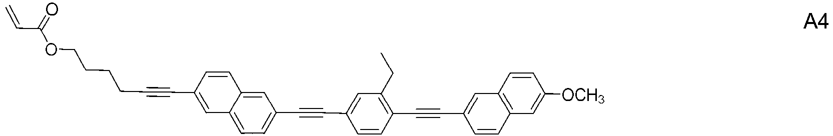

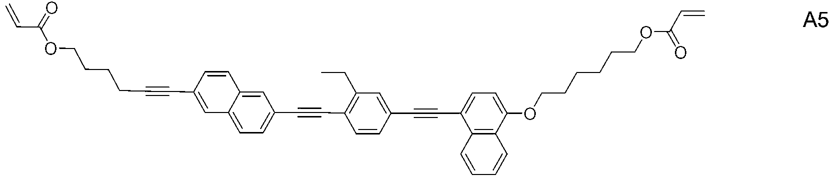

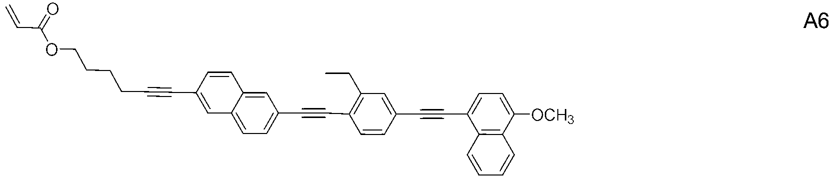

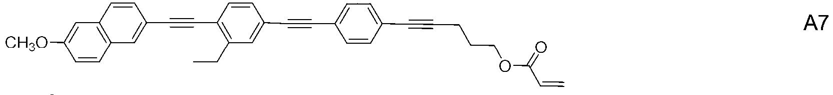

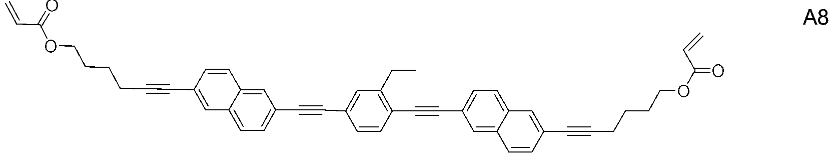

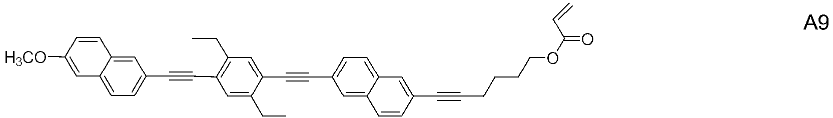

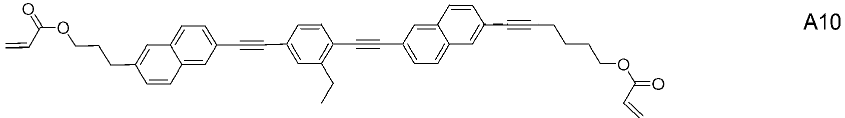

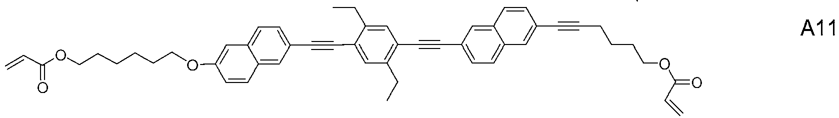

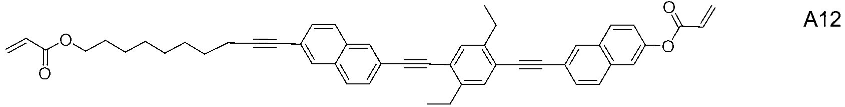

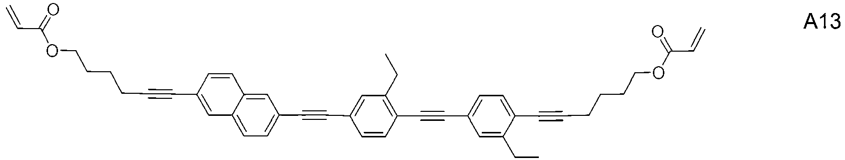

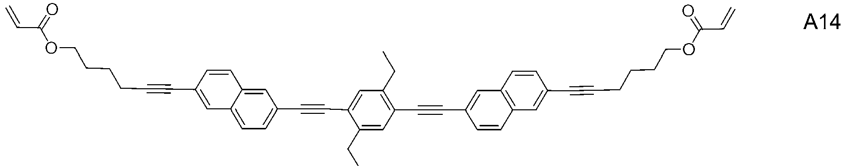

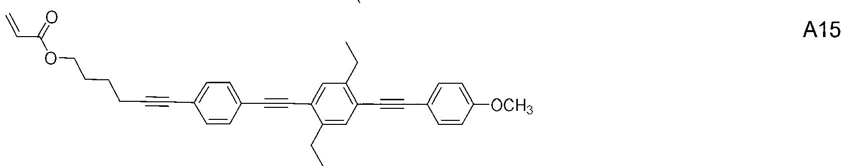

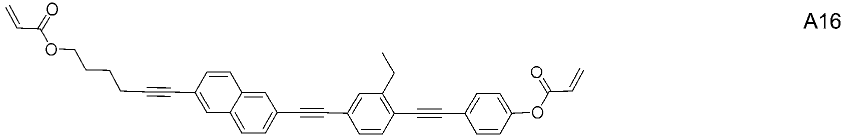

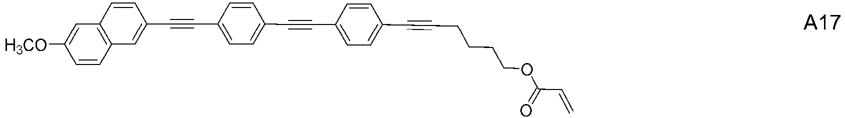

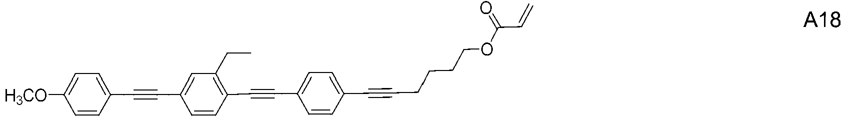

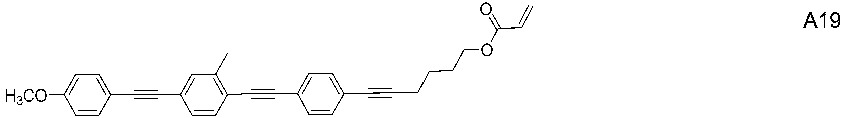

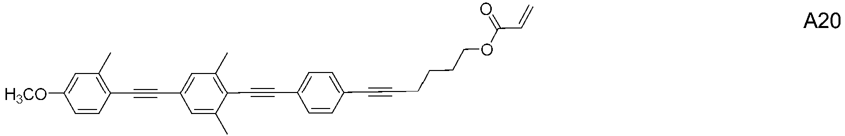

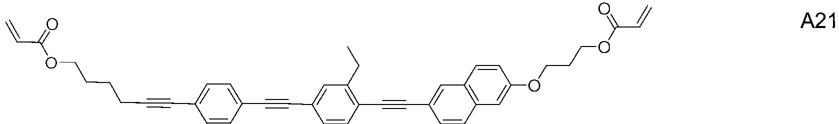

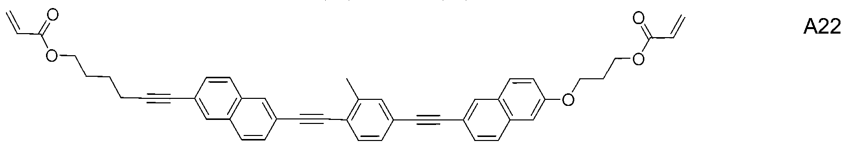

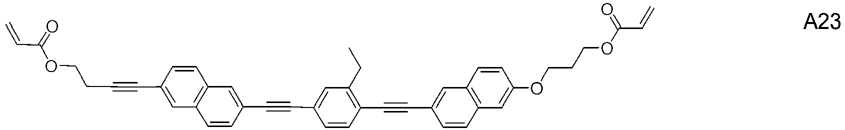

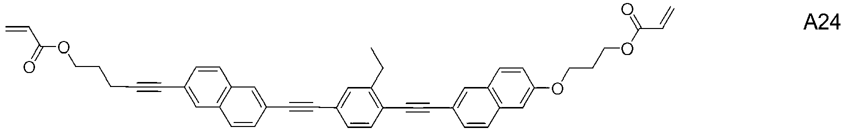

The compounds of formula D, M, T, A and their subformulae either taken alone or in combination with other RMs in an RM formulation, exhibit in particular and preferably at the same time, a high birefringence, exhibit a good solubility in commonly known organic solvents used in mass production, show an improved alignment, have favorable transition temperatures, and show high resistance against yellowing after being exposed to UV light.

Preferably the RM formulation contains one or more compounds selected from formulae D, M, T, A and their subformulae.

Very preferably the RM formulation contains, preferably 1 to 6, very preferably 1 to 4, RMs, preferably selected from D, M, T, A and their subformulae.

If the RM formulation contains one or more di- or multireactive RMs of formula D or its subformulae, their concentration is preferably from 1 to 50%, very preferably from 5 to 30% of total solids.

If the RM formulation contains one or more monoreactive RMs of formula M or its subformulae, their concentration is preferably from 1 to 70%, very preferably from 10 to 50% of total solids.

If the RM formulation contains one or more RMs of formula T or its subformulae, their concentration is preferably from 1 to 70%, very preferably from 10 to 50% of total solids.

If the RM formulation contains one or more RMs of formula A or its subformulae, their concentration is preferably from 1 to 70%, very preferably from 10 to 50% of total solids.

In another preferred embodiment, the RM formulation further comprises one or more chiral compounds which are optionally polymerizable and/or isomerizable.

In another preferred embodiment the RM formulation contains one or more, preferably exactly one, chiral compounds, preferably selected from polymerizable chiral compounds, very preferably selected from mono- or direactive chiral polymerizable compounds.

Suitable polymerizable chiral compounds preferably comprise one or more ring elements, linked together by a direct bond or via a linking group and, where two of these ring elements optionally may be linked to each other, either directly or via a linking group, which may be identical to or different from the linking group mentioned. The ring elements are preferably selected from the group of four-, five-, six- or seven-, preferably of five- or six-, membered rings.

Preferred polymerizable chiral compounds are selected from the formulae C1, C2 and C3: 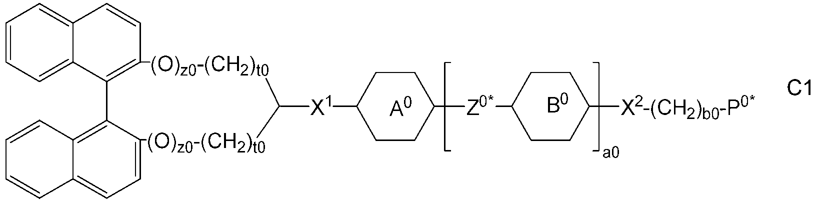 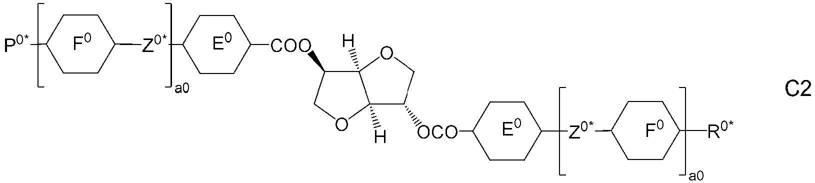 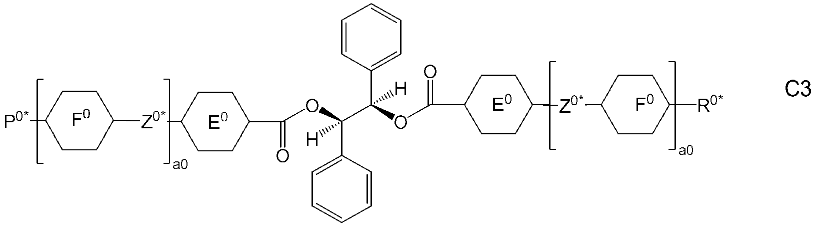 wherein the individual radicals, independently of each other and on each occurrence identically or differently, have the following meanings
- P⁰*: a polymerizable group,
- Sp⁰*: a spacer group or a single bond
- R⁰*: F, Cl, CN, alkyl, alkoxy, thioalkyl, alkylcarbonyl, alkoxycarbonyl, alkylcarbonyloxy or alkoxycarbonyloxy with 1 to 15, preferably 1 to 6 C atoms, P⁰*- or P⁰*-Sp*-,
- A⁰, B⁰, E⁰, F⁰: 1,4-phenylene that is unsubstituted or substituted with 1, 2, 3 or 4 groups L, or trans-1,4-cyclohexylene,
- L: F, Cl, CN, P-Sp-, or alkyl, alkoxy, thioalkyl, alkylcarbonyl, alkoxycarbonyl, alkylcarbonyloxy or alkoxycarbonyloxy with 1 to 5 C atoms that is optionally fluorinated,
- X¹, X²: -O-, -COO-, -OCO-, -O-CO-O- or a single bond,
- Z⁰*: -COO-, -OCO-, -O-CO-O-, -OCH₂-, -CH₂O-, -CF₂O-, -OCF₂-, -CH₂CH₂-, - (CH₂)₄-, -CF₂CH₂-, -CH₂CF₂-, -CF₂CF₂-, -C≡C-, -CH=CH-, -CH=CH-COO-, - OCO-CH=CH- or a single bond, preferably -COO-, -OCO- or a single bond,
- a0: 0, 1 or 2, preferably 0 or 1,
- b0: 0 or an integer from 1 to 12, preferably 1 to 6,
- t0: 0, 1, 2 or 3,
- z0: 0 or 1, preferably 1,
and wherein the naphthalene rings can additionally be substituted with one or more identical or different groups L.

Further preferred are the stereoisomers of formula C2 wherein the central isosorbide unit is replaced by an isomannide or isoidide unit.

The compounds of formula C1 are preferably selected from the following formula:

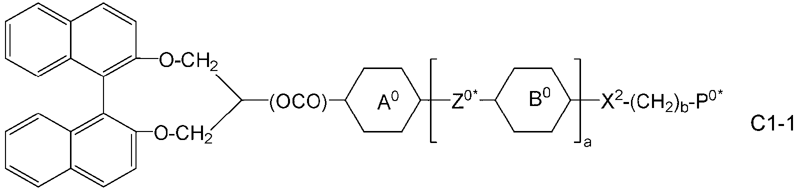

wherein A⁰, B⁰, Z⁰*, X², P⁰*, a and b have the meanings given in formula Ca or one of the preferred meanings given above and below, and (OCO) denotes -O-CO- or a single bond.

Especially preferred compounds of formula C are selected from the group consisting of the following subformulae: 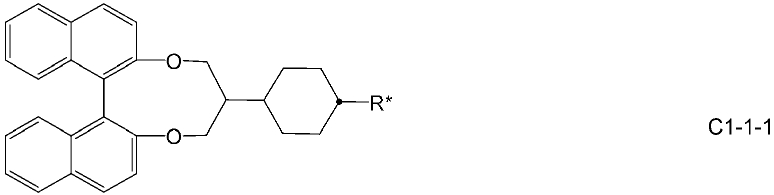 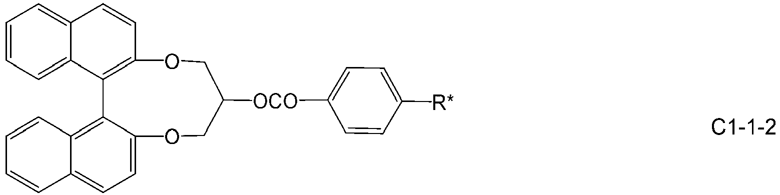 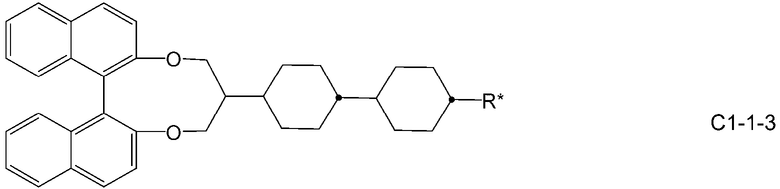 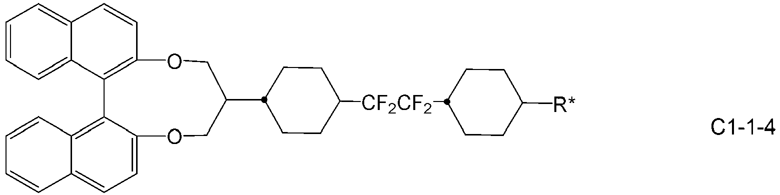 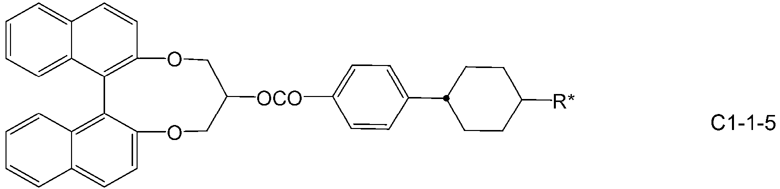 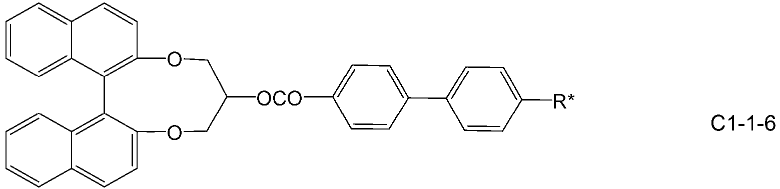 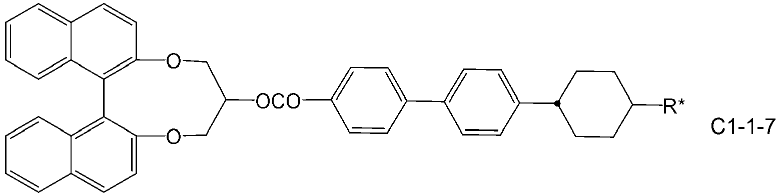 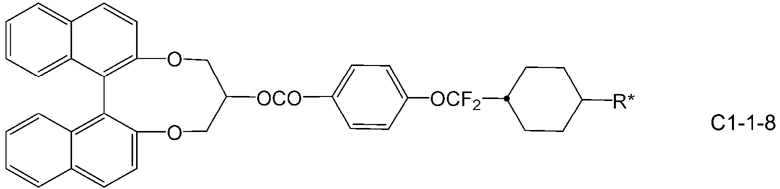 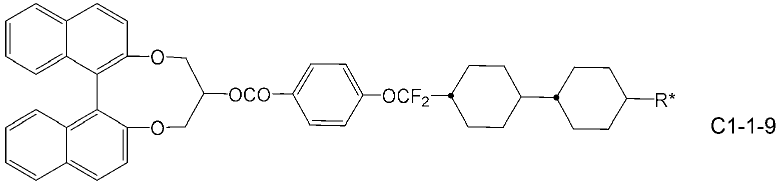 wherein R* is -X²-(CH₂)ₜ-P⁰* as defined in formula C1-1, and the benzene and naphthalene rings are unsubstituted or substituted with 1, 2, 3 or 4 groups L as defined above and below.

In case one or more polymerizable chiral compounds are present, their concentration in the RM formulation is preferably from 0.1 to 10 %, more preferably from 0.5 to 8 % by weight of total solids.

Preferably the polymerizable chiral compounds have alone or in combination with each other an absolute value of the helical twisting power (IHTPₜₒₜₐₗI) of 20 µm⁻¹ or more, preferably of 40 µm⁻¹ or more, more preferably in the range of 60 µm⁻¹ or more, most preferably in the range of 80 µm⁻¹ or more to 260 µm⁻¹ .

In another preferred embodiment the RM formulation contains, in addition or alternatively to the chiral compounds as described above and below, one or more chiral compounds which are isomerizable, preferably photoisomerizable, very preferably photoisomerizable and polymerizable. Very preferably these compounds are photoisomerizable by UV irradiation.

Further preferably the RM formulation contains only chiral isomerizable compounds which are polymerizable, preferably selected from mono- or direactive chiral isomerizable compounds.

In another preferred embodiment the RM formulation comprises at least two, more preferably exactly two, chiral compounds with opposite handedness, one of which contains an isomerizable group, and the other of which does not contain an isomerizable group, and wherein one or both, preferably both, chiral compounds are polymerizable. Photoirradiation of the isomerizable chiral compound changes its twisting power, while the twisting power of the non-isomerizable chiral compound remains unchanged. Thereby it is possible to control and adjust the twist profile in the final RM layer accordingly.

Suitable polymerizable chiral isomerizable compounds preferably comprise one or more ring elements, linked together by a direct bond or via a linking group and, where two of these ring elements optionally may be linked to each other, either directly or via a linking group, which may be identical to or different from the linking group mentioned. The ring elements are preferably selected from the group of four-, five-, six- or seven-, preferably of five- or six-, membered rings.

Preferred chiral isomerizable compounds are selected of formula I*:

R³-(A³-Z³)ₘ-G(-(Z⁴-A⁴)l-R⁴)ₖ I*

wherein the individual radicals, independently of each other and on each occurrence identically or differently, have the following meanings
- R³, R⁴: H, F, Cl, CN, P-Sp- or an alkyl radical with up to 25 C atoms which may be unsubstituted, mono- or polysubstituted by halogen or CN, it being also possible for one or more non-adjacent CH₂ groups to be replaced, in each case independently from one another, by -O-, -S-, -NH-, -N(CH₃)-, -CO-, - COO- -OCO-, -OCO-O-, -S-CO-, -CO-S- or -C≡C- in such a manner that oxygen atoms are not linked directly to one another,
- P: a polymerizable group,
- Sp: a spacer group or a single bond,
- Z³, Z⁴: -CO-O-, -O-CO-, -CH₂CH₂-, -OCH₂-, -CH₂O-, -CH=CH-, -CH=CH-CO-O-, - O-CO-CH=CH-, -CH=C(CN)-CO-O-, -O-CO-C(CN)=CH-, -N=N-, -CH=N-, - N=CH-, -C≡C-, or a single bond,
- A³, A⁴: an alicyclic, heterocyclic, aromatic or heteroaromatic group with 4 to 20 ring atoms, which is monocyclic or polycyclic and which is optionally substituted by one or more groups L or P-Sp-,
- G: a chiral group,
- L: F, Cl, -CN, -SCN, P-Sp-, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 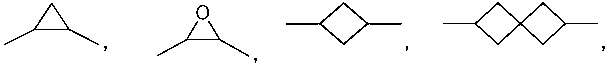 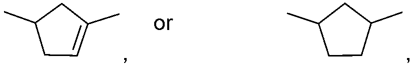 in such a manner that O- and/or S-atoms are not directly connected with each other, and wherein one or more H atoms are each optionally replaced by P-Sp-, F or Cl, or two substituents L that are connected to directly adjacent C atoms may also form a cycloalkyl or cycloalkenyl group with 5, 6, 7 or 8 C atoms,
- m, l: independently of each other 0, 1, 2 or 3,
- k: 0, 1 or 2,
wherein the compound contains at least one isomerizable group, which is preferably a photoisomerizable group, and preferably at least one of R³ and R⁴ denotes P-Sp-.

Preferred compounds of formula I* and its subformulae are those wherein at least one of R³ and R⁴, preferably both R³ and R⁴, denote P-Sp-.

Further preferred compounds of formula I* and its subformulae are those wherein at least one of R³ and R⁴, preferably both R³ and R⁴, is different from P-Sp-, and preferably denotes alkyl or alkoxy with 1 to 12, more preferably 1 to C atoms, and one of R³ and R⁴ may also denote F, Cl or CN.

Preferred compounds of formula I* and its subformulae are those wherein A³ and A⁴ are selected from the group consisting of 1,4-phenylene, naphthalene-1,4-diyl, naphthalene 2,6-diyl, 1,4-cyclohexylene in which, in addition, one or two non-adjacent CH₂ groups may be replaced by O and/or S, 1,4-cyclohexenylene, 1,4-bicyclo(2,2,2)octylene, piperidine-1,4-diyl, naphthalene-2,6-diyl, decahydronaphthalene-2,6-diyl, or 1,2,3,4-tetrahydro-naphthalene-2,6-diyl, very preferably 1,4-phenylene or 1,4-cyclohexylene, all of which are optionally substituted by one or more groups L or P-Sp.

Further preferred compounds of formula I* and its subformulae are those wherein Z³ and Z⁴ independently of each other denote -CO-O-, -O-CO- or a single bond.

Further preferred compounds of formula I* and its subformulae are those wherein L is selected from F, Cl, CN, CH₃, C₂H₅, OCH₃, OC₂H₅, COCH₃, COC₂H₅, CF₃, OCF₃, P-Sp-, in particular F, Cl, CN, CH₃, C₂H₅, OCH₃, COCH₃ or OCF₃, most preferably F, CH₃, OCH₃ or COCH₃.

Further preferred compounds of formula I* and its subformulae are those wherein P is selected from the group consisting of vinyloxy, acrylate, methacrylate, fluoroacrylate, chloroacrylate, oxetane and epoxide, very preferably from acrylate and methacrylate, most preferably acrylate.

Further preferred compounds of formula I* and its subformulae are those wherein Sp denotes a single bond or -(CH₂)ₚ₁-, -O-(CH₂)ₚ₁-, -O-CO-(CH₂)ₚ₁, or -CO-O-(CH₂)ₚ₁, wherein p1 is an integer from 2 to 10, preferably 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

Further preferred compounds of formula I* and its subformulae are those wherein all polymerisable groups P that are present in the compound have the same meaning, and very preferably denote acrylate or methacrylate, most preferably acrylate.

Further preferred compounds of formula I* and its subformulae are those which contain one, two, three or four groups P-Sp, very preferably two or three groups P-Sp.

Further preferred compounds of formula I* and its subformulae are those wherein at least one group Sp is a single bond.

Further preferred compounds of formula I* and its subformulae are those wherein at least one group Sp is a single bond and at least one group Sp is different from a single bond.

Further preferred compounds of formula I* and its subformulae are those wherein at least one group Sp is different from a single bond, and is selected from -(CH₂)ₚ₁-, - O-(CH₂)ₚ₁-, -O-CO-(CH₂)ₚ₁, or -CO-O-(CH₂)ₚ₁, wherein p1 is an integer from 2 to 10, preferably 2, 3, 4, 5 or 6, and, if Sp is -O-(CH₂)ₚ₁-, -O-CO-(CH₂)ₚ₁ or -CO-O-(CH₂)ₚ₁ the O-atom or CO-group, respectively, is linked to the benzene ring.

In the event that R³ or R⁴ is a group of formula P-Sp-, the spacer groups on each side of the mesogenic core may be identical or different.

In the compounds of formula I*, m and l are preferably 0 or 1.

Preferred compounds of formula I* and its subformulae are those wherein G denotes or contains a photoisomerizable group.

Further preferred compounds of formula I* and its subformulae are those wherein Z³ and/or Z⁴ independently of each other denote -CH=CH-CO-O-, -O-CO-CH=CH-, - CH=C(CN)-CO-O-, -O-CO-C(CN)=CH-, -CH=N-, -N=CH- or -N=N-.

Further preferred compounds of formula I* and its subformulae are those containing an isomerizable group selected from stilbene, (1,2-difluoro-2-phenyl-vinyl)-benzene, cinnamate, α-cyanocinnamate, 4-phenylbut-3-en-2-one, Schiff base, 2-benzyliden-1-indanone, chalcone, coumarin, chromone, pentalenone or azobenzene.

Further preferred compounds of formula I* and its subformulae are those wherein the chiral group G is selected or derived from dianhydrohexitol, preferably isosorbide, isomannide or isoidide, 1,1'-bi-2-naphthol (binol), 1,2-diphenyl-1,2-ethanediol (hydrobenzoin), 2-benzylidene-p-menthan-3-one and menthyl cinnamate *((1R,2S,5R)-5-Methyl-2-(1-methylethyl)cyclohexyl* (2*E*)-3-phenyl-2-propenoate).

Very preferred compounds of formula I* are those wherein the chiral group G is selected of formula A: 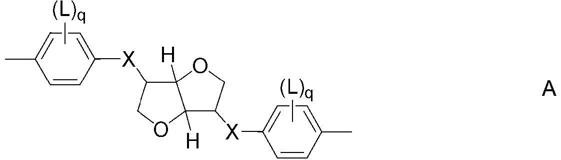 wherein X is -CO-O-, -CH=CH-CO-O-, -CH=C(CN)-CO-O-, in each of which the ester O-atom is linked to the furan ring, or -N=N-, q is 0, 1, 2, 3 or 4, and L has the meaning of formula I* or one of its preferred meanings as given above and below.

Formula A includes the following stereoisomers based on the corresponding dianhydrohexitols: 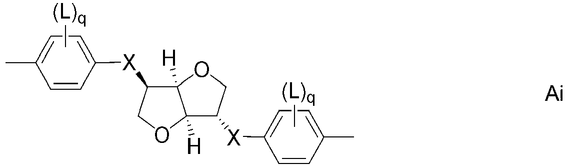 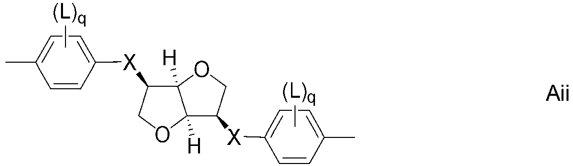 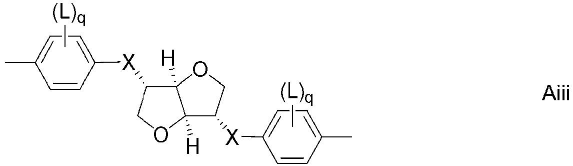 wherein X, L and q have the meanings given in formula A, and wherein Ai is based on isosorbide, Aii is based on isomannide and Aiii is based on isoidide. Especially preferred is Ai.

Further preferred compounds of formula I* and its subformulae are those wherein one or both of Z³ and Z⁴ independently of each other denote -CH=CH-CO-O-, -O-CO-CH=CH-, -CH=C(CN)-CO-O-, -O-CO-C(CN)=CH-, -CH=N-, -N=CH- or -N=N-, and/or wherein G is of formula A, preferably Ai, and X denotes -CH=CH-CO-O-, - CH=C(CN)-CO-O- or -N=N-.

Further preferred compounds of formula I* and its subformulae are those wherein G is of formula A, preferably formula Ai, and X denotes -CH=CH-CO-O-, -CH=C(CN)-CO-O- or -N=N-, very preferably -CH=CH-CO-O-.

Further preferred compounds of formula I* and its subformulae are those wherein the chiral group G is selected from the following formulae 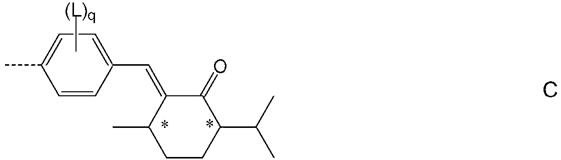 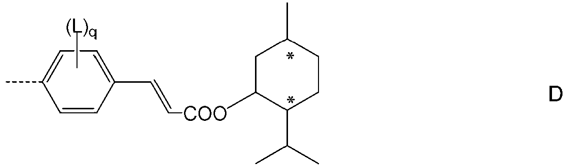 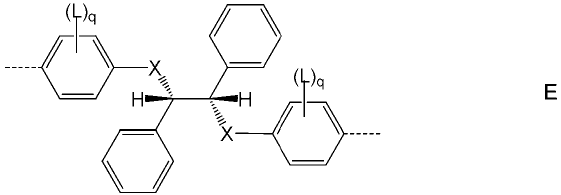 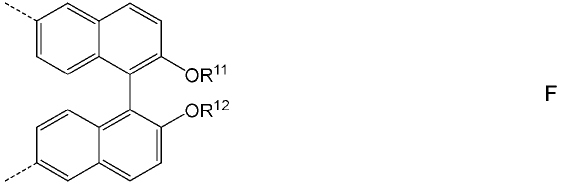 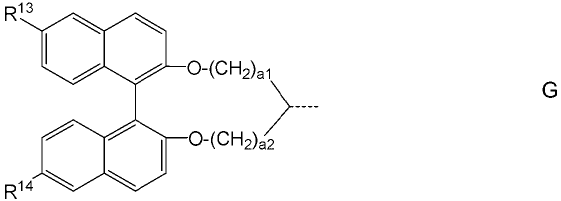 wherein
X, L and q have the meanings given in formula A or one of the preferred meanings as given above and below,
R¹¹ and R¹² independently of each other denote -(Z⁴-A⁴)ₗ-R⁴ as defined in formula I*, or R¹¹ and R¹² together with the O atoms form a cyclic group or a spirocyclic group which is optionally substituted by a group -(Z⁴-A⁴)ₗ-R⁴ as defined in formula I*,
R¹³ and R¹⁴ independently of each other denote R³-(A³-Z³)ₘ- as defined in formula I*, a1 and a2 independently of each other are 0, 1 or 2,
and the dashed lines represent a linkage to the adjacent group(s) in formula I*.

Preferred compounds of formula I* are selected from the following formulae: 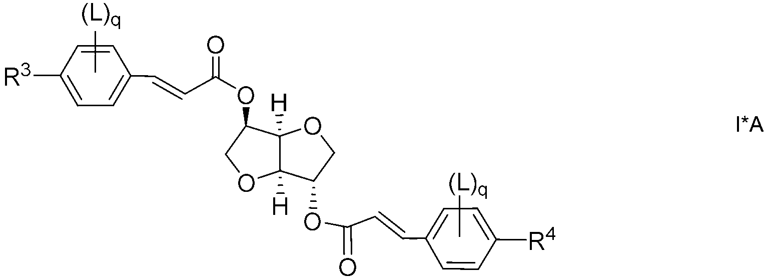 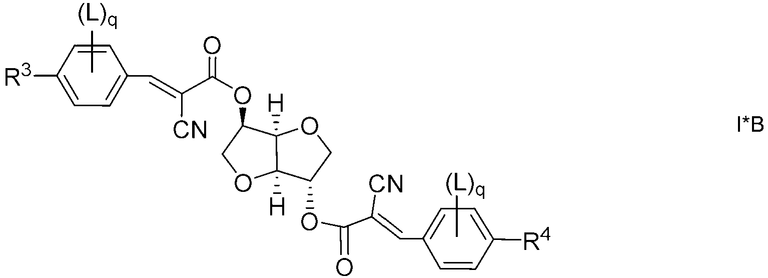 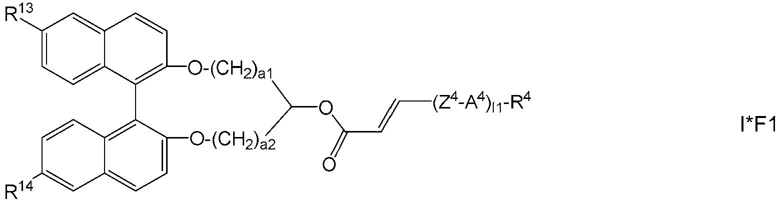 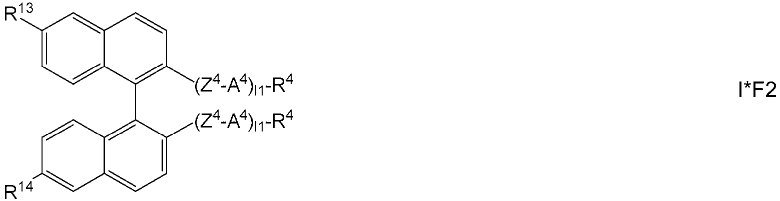 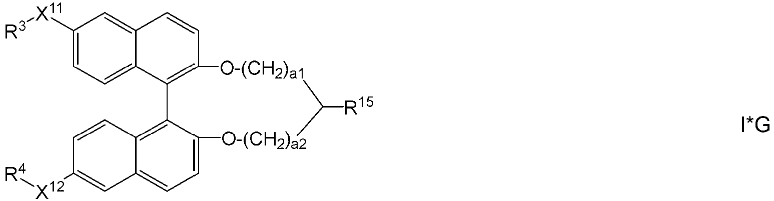 wherein R³, R⁴, Z⁴, A⁴, L and q have, independently of each other and on each occurrence identically or differently, the meanings given in formula I* or one of the preferred meanings as given above and below, I1 is 0, 1 or 2, R¹³, R¹⁴, a1 and a2 have the meanings given in formula G or one of the preferred meanings as given above and below, R¹⁵ denotes -(Z⁴-A⁴)ₗ-R⁴ as defined in formula I* and X¹¹ and X¹² denote -O-CO-CH=CH-.

Very preferred compounds of formula I*A are selected from the following subformulae: 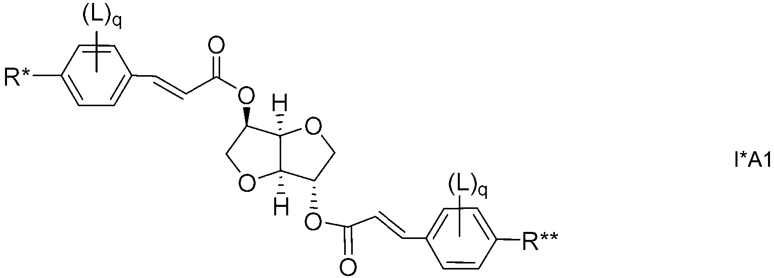 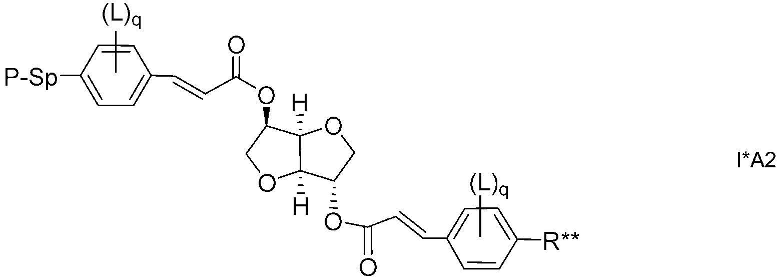 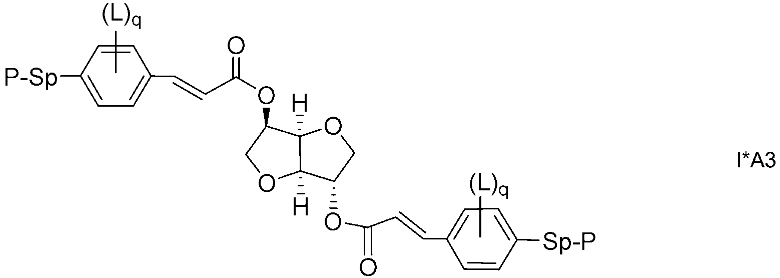 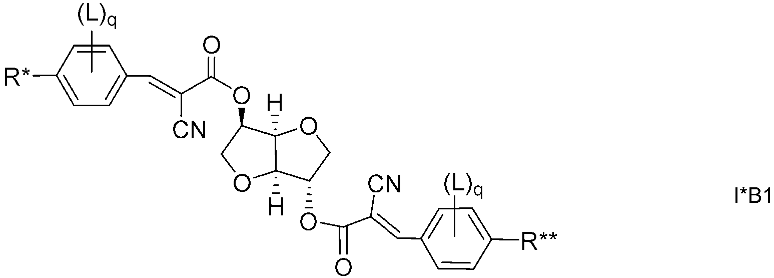 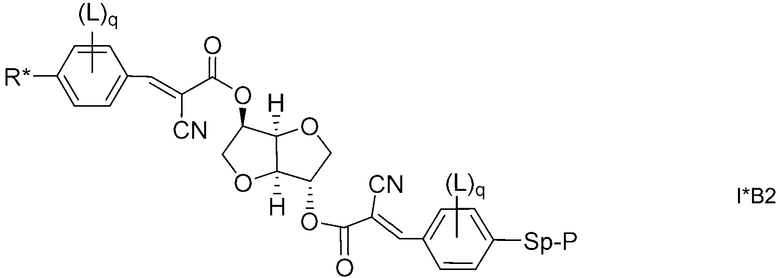 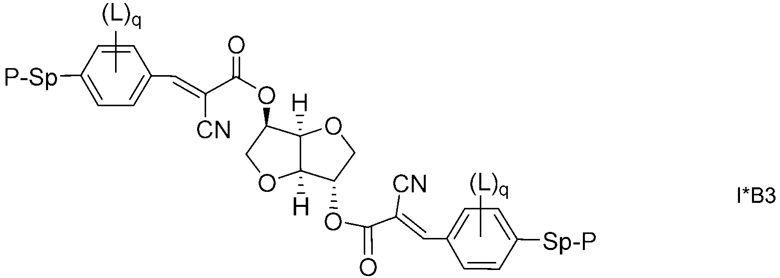 wherein P, Sp, L and q have the meanings given in formula I* or one of the preferred meanings as given above and below, R* has one of the meanings of R³ in formula I* which is different from P-Sp-, and R** has one of the meanings of R⁴ in formula I* which is different from P-Sp-.

Especially preferred are the compounds of formula I*A3.

Further preferred are the stereoisomers of formula I*A, I*B, I*A1, I*A2 and I*A3 wherein the central isosorbide unit is replaced by an isomannide or isoidide unit.

In the compounds of formula I*A, I*B, I*A1, I*A2 and I*A3, P is preferably acrylate or methacrylate, very preferably acrylate, Sp is preferably -O-(CH₂)ₚ₁-, -O-CO-(CH₂)ₚ₁-or -CO-O-(CH₂)ₚ₁-,, very preferably -O-(CH₂)ₚ₁-, wherein the O-atom or CO-group, respectively, is linked to the benzene ring, p1 is an integer from 1 to 6, more preferably 2, 3, 4, 5 or 6, and R⁴ is preferably P-Sp-.

Further preferred compounds of formula I* and its subformulae are selected from the following formulae: 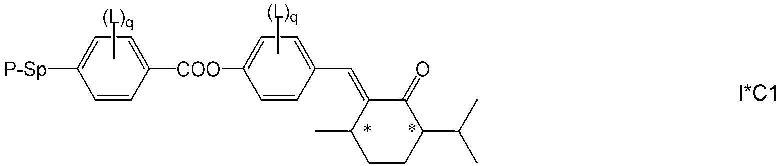 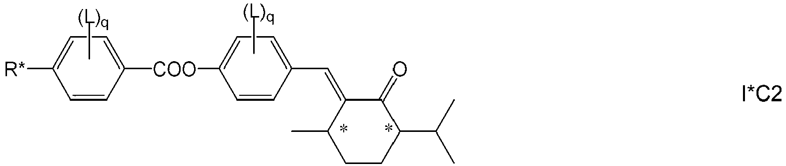 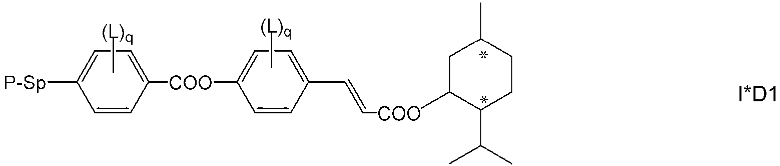 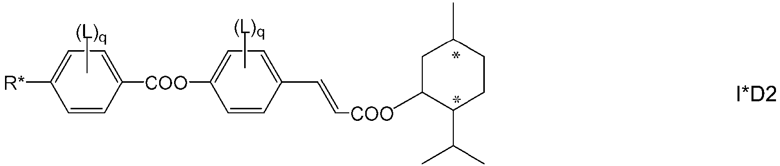 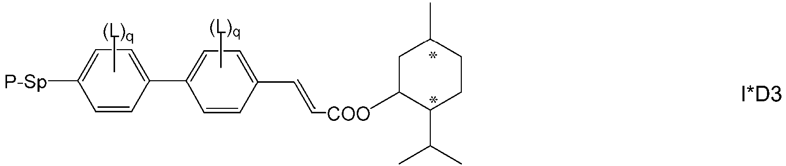 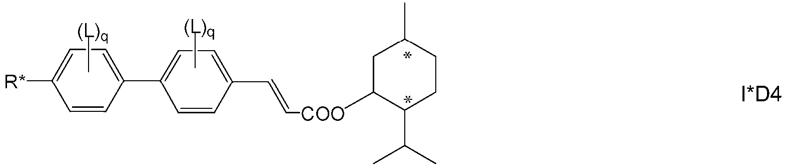 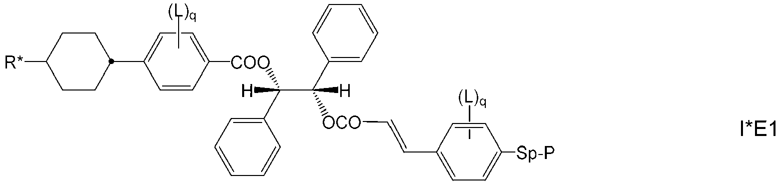 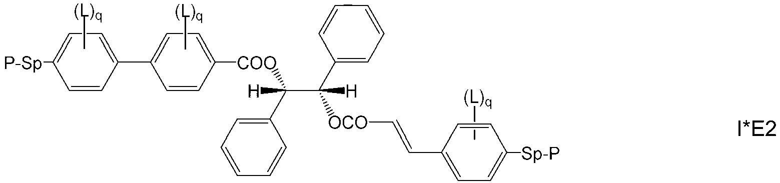 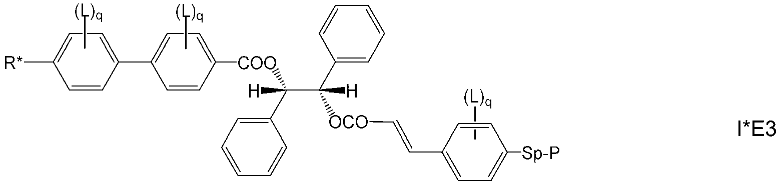 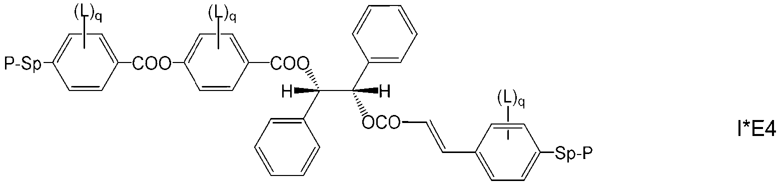 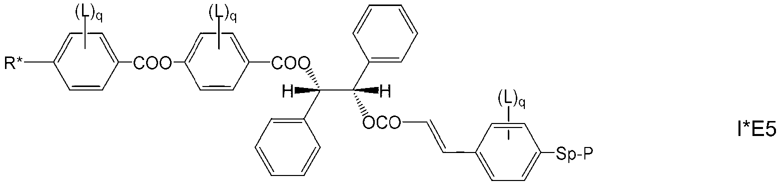 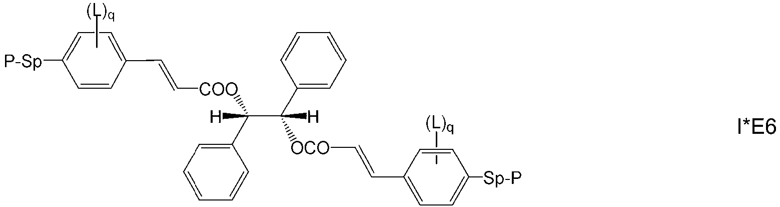 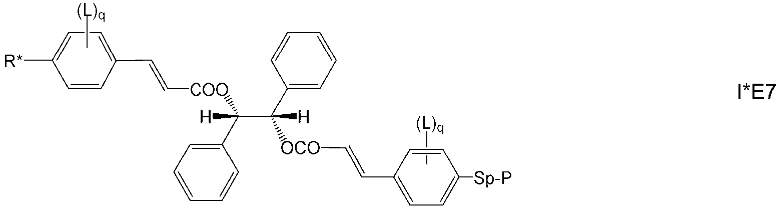 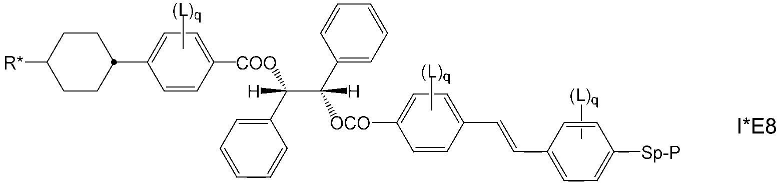 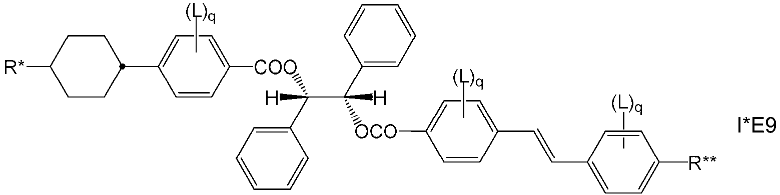 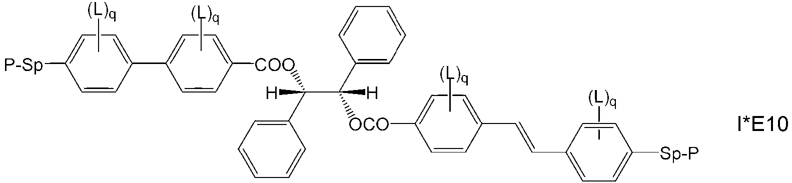 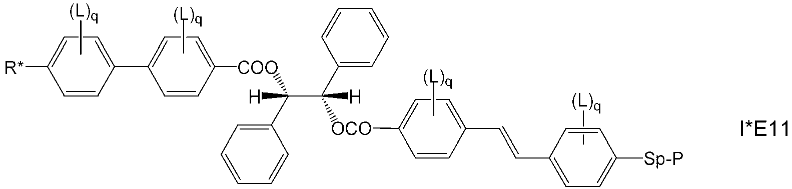 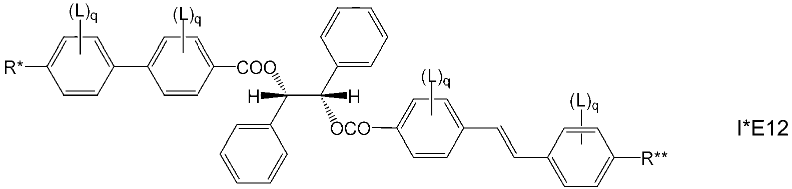 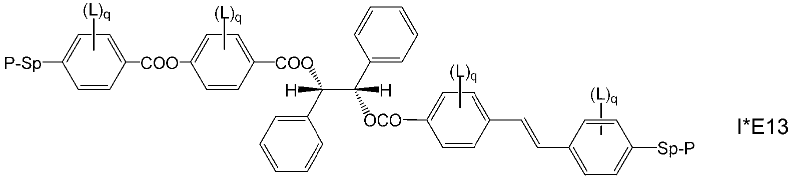 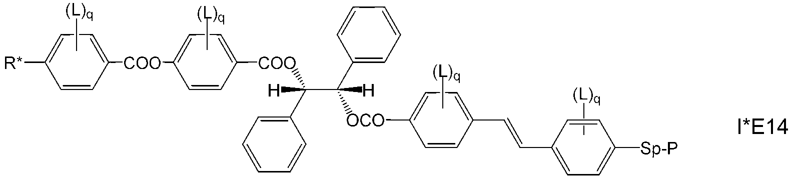 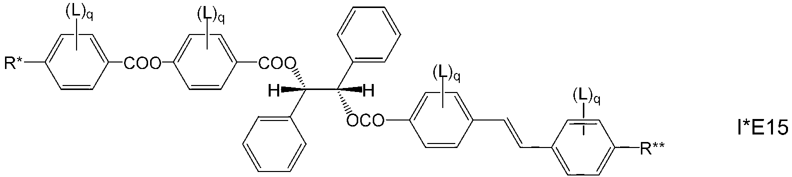 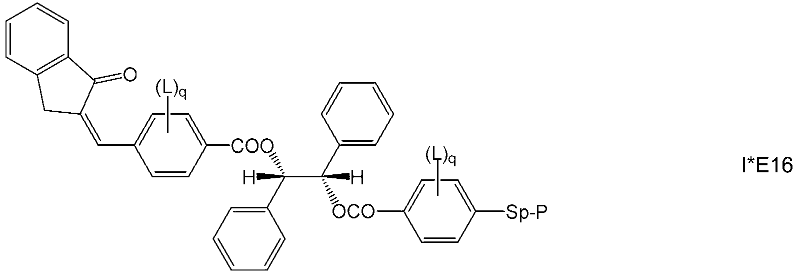 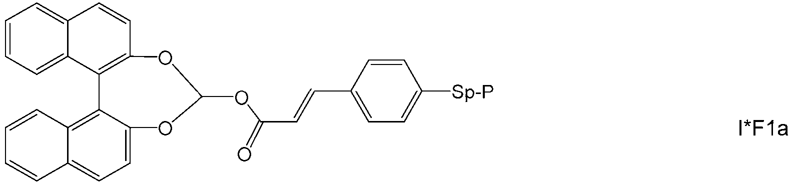 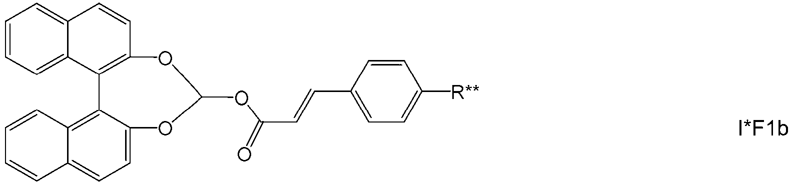 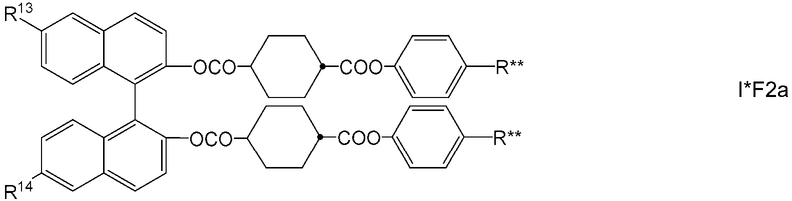 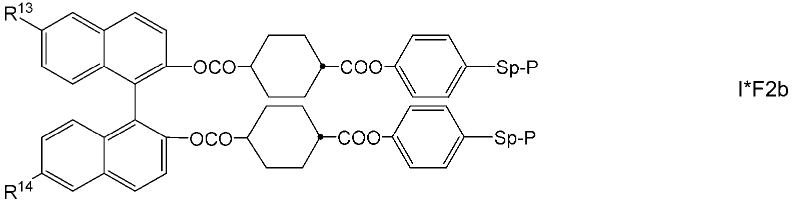 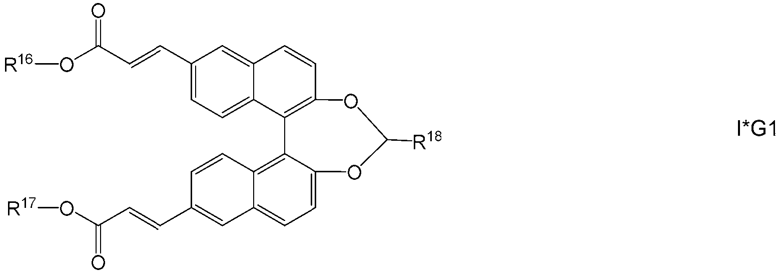 wherein P, Sp, R*, R**, L and q have the meanings given in formula I* and I*A1 or one of the preferred meanings as given above and below, R¹⁶ and R¹⁷ independently of each other denote alkyl with 1 to 12, preferably 1 to 6 C atoms, very preferably methyl, ethyl or propyl, and R¹⁸ denotes P-Sp-, H or alkyl with 1 to 12, preferably 1 to 6 C atoms, very preferably H.

In the compounds of formulae I*C1 to I*G1, P is preferably acrylate or methacrylate, very preferably acrylate, Sp is preferably -O-(CH₂)ₚ₁-, -O-CO-(CH₂)ₚ₁- or -CO-O-(CH₂)ₚ₁-, very preferably -O-(CH₂)ₚ₁-, wherein the O-atom or CO-group, respectively, is linked to the benzene ring, p1 is an integer from 1 to 6, more preferably 2, 3, 4, 5 or 6, R* and R** are preferably, independently of each other, alkyl or alkoxy with 1 to 12, very preferably 1 to 6, C atoms.

The compounds of formula IA* can be prepared for example according to or in analogy to the method described in GB 2314839 A. The compounds of formulae I*E1 to I*E15 can be prepared for example according to or in analogy to the method described in WO 02/40614 A1.

Preferably the utilized chiral isomerizable compounds have each alone or in combination with each other an absolute value of the helical twisting power (IHTPₜₒₜₐₗI) of 20 µm⁻¹ or more, preferably of 40 µm⁻¹ or more, more preferably in the range of 60 µm⁻¹ or more, most preferably in the range of 80 µm⁻¹ or more to 260 µm⁻¹ .

Preferably the proportion of the chiral isomerizable compounds, especially those selected from formula I* or its subformulae, in the RM mixture according to the present invention as a whole is in the range from 0.1 to 4 % by weight, very preferably in the range from 0.2 to 3 % by weight, most preferably in the range from 0.3 to 2 % by weight.

In another preferred embodiment the RM formulation contains one or more, preferably exactly one, chiral dopants which are not polymerizable.

Preferred chiral dopants are selected from the group consisting of compounds of formulae C-I to C-III, 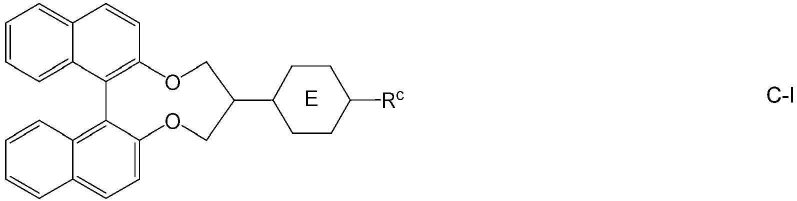 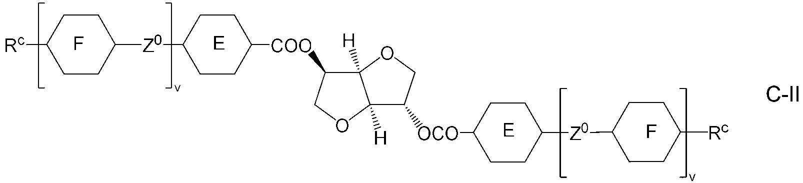 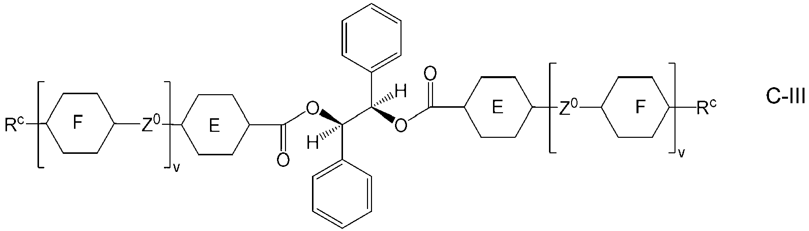
wherein formula C-II and C-III include the respective (S,S) enantiomers, and
wherein E and F are each independently 1,4-phenylene or trans-1,4-cyclohexylene, v is 0 or 1, Z⁰ is -COO-, -OCO-, -CH₂CH₂- or a single bond, and R^{c} is alkyl, alkoxy or alkanoyl with 1 to 12 C atoms.

Further preferred are the stereoisomers of formula C-II wherein the central isosorbide unit is replaced by an isomannide or isoidide unit.

The compounds of formula C-I and their synthesis are described in EP1389199 A1. The compounds of formula C-II and their synthesis are described in WO98/00428 A1. The compounds of formula C-III and their synthesis are described in GB2328207 A.

Further preferred chiral dopants are e.g. the commercially available R/S-6011, R/S-5011, R/S-4011, R/S-3011, R/S-2011, R/S-1011, R/S-811 and CB-15 (from Merck KGaA, Darmstadt, Germany).

The amount of the non-polymerizable chiral dopants in the RM formulation is preferably from 0.1 to 10 %, more preferably from 0.5 to 8 % by weight of all solids.

In another preferred embodiment the RM formulation according to the present invention does not contain any chiral compounds.

The RM mixture contained in the RM formulation preferably exhibits a nematic phase or, in case a chiral compound is present, a chiral nematic (also referred to as "cholesteric") LC phase, or a chiral smectic LC phase and a chiral nematic LC phase, very preferably a nematic or chiral nematic LC phase at room temperature.

The RM mixture contained in the RM formulation preferably has a birefringence (Δn) in the range from 0.18 to 0.8, more preferably in the range from 0.20 to 0.7 and even more preferably in the range from 0.25 to 0.6.

The proportion of the RM mixture in the RM formulation is preferably from 85 to 100%, more preferably from 85 to 99%, very preferably from 90 to 99% of total solids and liquid additives, i.e., excluding the solvents.

The total proportion of the compounds selected from formula D, M, T, A and their subformulae and optionally from formulae C1, C2, C3, D, M, I* and their subformulae, in the RM formulation according to the present invention is preferably from 85 to 100%, more preferably from 85 to 99%, very preferably from 90 to 99% of total solids, i.e., excluding the solvents.

The RM formulation preferably exhibits a chiral nematic LC phase, or a chiral smectic LC phase and a chiral nematic LC phase, very preferably a chiral nematic LC phase at room temperature.

The RM formulation preferably has a birefringence (Δn) in the range from 0.10 to 0.8, more preferably in the range from 0.12 to 0.7 and even more preferably in the range from 0.12 to 0.6.

Preferably the RM formulation comprises an achiral host mixture and a chiral component. The achiral host mixture preferably comprises, very preferably consists of, one or more mono- and/or direactive achiral RMs, which are preferably selected from formulae D, M, T and A and their subformulae, but does not contain a chiral compound. The chiral component preferably comprises, very preferably consists of, one or more chiral compounds, which are preferably selected from formula C1, C2 and C3 and their subformulae.

The proportion of the achiral host mixture in the RM formulation is preferably from 90 to 99.7%, very preferably from 94 to 99.5%. The proportion of the chiral component in the chiral RM mixure is preferably from 0.3 to 10%, very preferably from 0.5 to 6%.

In another preferred embodiment, the RM formulation is prepared by blending an achiral host mixture which comprises, very preferably consists of, one or more mono- and/or direactive achiral RMs, preferably selected from formulae D, M, T and A and their subformulae, but does not contain a chiral compound, with another RM formulation containing a chiral compound in a higher amount than the final RM formulation after blending.

In another preferred embodiment the RM formulation comprises optionally one or more additives selected from the group consisting of polymerization initiators, surfactants, stabilisers, catalysts, sensitizers, inhibitors, chain-transfer agents, co-reacting monomers, reactive thinners, surface-active compounds, lubricating agents, wetting agents, dispersing agents, hydrophobing agents, adhesive agents, flow improvers, degassing or defoaming agents, deaerators, diluents, reactive diluents, auxiliaries, colourants, dyes, pigments and nanoparticles.

In another preferred embodiment the present invention, the RM formulation does not contain a compound with at least one CF₃ or CF₂ group (PFAS), and very preferably the RM formulation does not contain a compound with a polyfluorinated alkyl or aryl group or a perfuorocarbon group. More preferably the RM formulation do not contain a compound with a fluorinated aliphatic C atom, most preferably the RM mixture and/or RM formulation do not contain a compound with a fluorinated C atom. The RM formulations according to this preferred embodiment do thus enable a reduction of perfluorocarbons.

The RM formulation as described above and below, which does not contain a PFAS, more preferably do not contain a perfluorocarbon compound, very preferably do not contain compound with a polyfluorinated C atom, and most preferably do not contain a compound with a fluorinated C atom, are another object of the invention.

In another preferred embodiment RM formulation comprises one or more specific antioxidant additives, preferably selected from the Irganox^{®} series, e.g. the commercially available antioxidants Irganox^{®}1076 and Irganox^{®}1010, from Ciba, Switzerland.

In another preferred embodiment, the RM formulation comprises a photoinitiator or a combination of one or more, more preferably of two or more photoinitiators, for example, selected from the commercially available Omnirad^{®} or Darocur^{®} series (from IGM Resins), in particular, Omnirad 127, Omnirad 184, Omnirad 369, Omnirad 651, Omnirad 817, Omnirad 907, Omnirad 1300, Omnirad, Omnirad 2022, Omnirad 2100, Omnirad 2959, or Darocur TPO, further selected from the commercially available OXE02 (Ciba AG), NCI 930, N1919T (Adeka), SPI-03 or SPI-04 (Samyang), TR-PBG 304 or TR-PBG 345 (Tronly).

The concentration of the polymerization initiator(s) as a whole in the RM formulation is preferably from 0.1 to 6%, very preferably from 0.3 to 4%, more preferably from 0.7 to 2% of total solids

In another preferred embodiment, the ratio between the concentration of the photoinitiator and the concentration of the chiral compounds as a whole is in the range from 2:1 to 1:5, more preferably in the range from 2:1 to 1:4, even more preferably in the range from 2:1 to 1:3.

In another preferred embodiment the RM formulation optionally comprises one or more additives selected from polymerizable non-mesogenic compounds (reactive thinners). The amount of these additives in the RM formulation is preferably from 0 to 30 %, very preferably from 0 to 25 % of total solids.

The reactive thinners used are not only substances which are referred to in the actual sense as reactive thinners, but also auxiliary compounds already mentioned above which contain one or more complementary reactive units, for example hydroxyl, thiol-, or amino groups, via which a reaction with the polymerizable units of the liquid-crystalline compounds can take place.

The substances which are usually capable of photopolymerization include, for example, mono-, bi- and polyfunctional compounds containing at least one olefinic double bond. Examples thereof are vinyl esters of carboxylic acids, for example of lauric, myristic, palmitic and stearic acid, and of dicarboxylic acids, for example of succinic acid, adipic acid, allyl and vinyl ethers and methacrylic and acrylic esters of monofunctional alcohols, for example of lauryl, myristyl, palmityl and stearyl alcohol, and diallyl and divinyl ethers of bifunctional alcohols, for example ethylene glycol and 1,4-butanediol.

Also suitable are, for example, methacrylic and acrylic esters of polyfunctional alcohols, in particular those which contain no further functional groups, or at most ether groups, besides the hydroxyl groups. Examples of such alcohols are bifunctional alcohols, such as ethylene glycol, propylene glycol and their more highly condensed representatives, for example diethylene glycol, triethylene glycol, dipropylene glycol, tripropylene glycol etc., butanediol, pentanediol, hexanediol, neopentyl glycol, alkoxylated phenolic compounds, such as ethoxylated and propoxylated bisphenols, cyclohexanedimethanol, trifunctional and polyfunctional alcohols, such as glycerol, trimethylolpropane, butanetriol, trimethylolethane, pentaerythritol, ditrimethylolpropane, dipentaerythritol, sorbitol, mannitol, and the corresponding alkoxylated, in particular ethoxylated and propoxylated alcohols.

Other suitable reactive thinners are polyester (meth)acrylates, which are the (meth)acrylic ester of polyesterols.

Examples of suitable polyesterols are those which can be prepared by esterification of polycarboxylic acids, preferably dicarboxylic acids, using polyols, preferably diols. The starting materials for such hydroxyl-containing polyesters are known to the person skilled in the art. Dicarboxylic acids which can be employed are succinic, glutaric acid, adipic acid, sebacic acid, o-phthalic acid and isomers and hydrogenation products thereof, and esterifiable and transesterifiable derivatives of said acids, for example anhydrides and dialkyl esters. Suitable polyols are the abovementioned alcohols, preferably ethyleneglycol, 1,2- and 1,3-propylene glycol, 1,4-butanediol, 1,6-hexanediol, neopentyl glycol, cyclohexanedimethanol and polyglycols of the ethylene glycol and propylene glycol type.

Suitable reactive thinners are furthermore 1,4-divinylbenzene, triallyl cyanurate, acrylic esters of tricyclodecenyl alcohol of the following formula 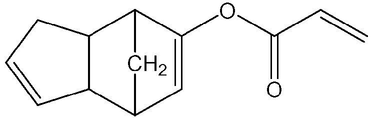 also known under the name dihydrodicyclopentadienyl acrylate, and the allyl esters of acrylic acid, methacrylic acid and cyanoacrylic acid.

Of the reactive thinners which are mentioned by way of example, those containing photopolymerizable groups are used in particular and in view of the abovementioned preferred compositions.

This group includes, for example, dihydric and polyhydric alcohols, for example ethylene glycol, propylene glycol and more highly condensed representatives thereof, for example diethylene glycol, triethylene glycol, dipropylene glycol, tripropylene glycol etc., butanediol, pentanediol, hexanediol, neopentyl glycol, cyclohexanedimethanol, glycerol, trimethylolpropane, butanetriol, trimethylolethane, pentaerythritol, ditrimethylolpropane, dipentaerythritol, sorbitol, mannitol and the corresponding alkoxylated, in particular ethoxylated and propoxylated alcohols.

The group furthermore also includes, for example, alkoxylated phenolic compounds, for example ethoxylated and propoxylated bisphenols.

These reactive thinners may furthermore be, for example, epoxide or urethane (meth)acrylates.

Epoxide (meth)acrylates are, for example, those as obtainable by the reaction, known to the person skilled in the art, of epoxidized olefins or poly- or diglycidyl ether, such as bisphenol A diglycidyl ether, with (meth)acrylic acid.

Urethane (meth)acrylates are, in particular, the products of a reaction, likewise known to the person skilled in the art, of hydroxylalkyl (meth)acrylates with poly- or diisocyanates.

Such epoxide and urethane (meth)acrylates are included amongst the compounds listed above as "mixed forms".

If reactive thinners are used, their amount and properties must be matched to the respective conditions in such a way that, on the one hand, a satisfactory desired effect, for example the desired colour of the composition according to the invention, is achieved, but, on the other hand, the phase behaviour of the liquid-crystalline composition is not excessively impaired. The low-crosslinking (high-crosslinking) liquid-crystalline compositions can be prepared, for example, using corresponding reactive thinners which have a relatively low (high) number of reactive units per molecule.

The group of diluents include, for example:
C1-C4-alcohols, for example methanol, ethanol, n-propanol, isopropanol, butanol, isobutanol, sec-butanol and, in particular, the C5-C12-alcohols n-pentanol, n-hexanol, n-heptanol, n-octanol, n-nonanol, n-decanol, n-undecanol and n-dodecanol, and isomers thereof, glycols, for example 1,2-ethylene glycol, 1,2- and 1,3-propylene glycol, 1,2-, 2,3- and 1,4-butylene glycol, di- and triethylene glycol and di- and tripropylene glycol, ethers, for example methyl tert-butyl ether, 1,2-ethylene glycol mono- and dimethyl ether, 1,2-ethylene glycol mono- and -diethylether, 3-methoxypropanol, 3-isopropoxypropanol, tetrahydrofuran and dioxane, ketones, for example acetone, methyl ethyl ketone, methyl isobutyl ketone and diacetone alcohol (4-hydroxy-4-methyl-2-pentanone), C1-C5-alkyl esters, for example methyl acetate, ethyl acetate, propyl acetate, butyl acetate and amyl acetate, aliphatic and aromatic hydrocarbons, for example pentane, hexane, heptane, octane, isooctane, petroleum ether, toluene, xylene, ethylbenzene, tetralin, decalin, dimethylnaphthalene, white spirit, Shellsol^{®} and Solvesso^{®} mineral oils, for example gasoline, kerosine, diesel oil and heating oil, but also natural oils, for example olive oil, soya oil, rapeseed oil, linseed oil and sunflower oil.

It is of course also possible to use mixtures of these diluents in the compositions according to the invention.

So long as there is at least partial miscibility, these diluents can also be mixed with water. Examples of suitable diluents here are C1-C4-alcohols, for example methanol, ethanol, n-propanol, isopropanol, butanol, isobutanol and sec-butanol, glycols, for example 1,2-ethylene glycol, 1,2- and 1,3-propylene glycol, 1,2-, 2,3-and 1,4-butylene glycol, di- and triethylene glycol, and di- and tripropylene glycol, ethers, for example tetrahydrofuran and dioxane, ketones, for example acetone, methyl ethyl ketone and diacetone alcohol (4-hydroxy-4-methyl-2-pentanone), and C1-C4-alkyl esters, for example methyl, ethyl, propyl and butyl acetate.

The diluents are optionally employed in a proportion of from about 0 to 10.0% by weight, preferably from about 0 to 5.0% by weight, based on the total weight of the RM formulation.

The antifoams and deaerators (c1)), lubricants and flow auxiliaries (c2)), thermally curing or radiation-curing auxiliaries (c3)), substrate wetting auxiliaries (c4)), wetting and dispersion auxiliaries (c5)), hydrophobicizing agents (c6)), adhesion promoters (c7)) and auxiliaries for promoting scratch resistance (c8)) cannot strictly be delimited from one another in their action.

For example, lubricants and flow auxiliaries often also act as antifoams and/or deaerators and/or as auxiliaries for improving scratch resistance. Radiation-curing auxiliaries can also act as lubricants and flow auxiliaries and/or deaerators and/or as substrate wetting auxiliaries. In individual cases, some of these auxiliaries can also fulfil the function of an adhesion promoter (c8)).

Corresponding to the above-said, a certain additive can therefore be classified in a number of the groups c1) to c8) described below.

The antifoams in group c1) include silicon-free and silicon-containing polymers. The silicon-containing polymers are, for example, unmodified or modified polydialkylsiloxanes or branched copolymers, comb or block copolymers comprising polydialkylsiloxane and polyether units, the latter being obtainable from ethylene oxide or propylene oxide.

The deaerators in group c1) include, for example, organic polymers, for example polyethers and polyacrylates, dialkylpolysiloxanes, in particular dimethylpolysiloxanes, organically modified polysiloxanes, for example arylalkyl-modified polysiloxanes, and fluorosilicones.

The action of the antifoams is essentially based on preventing foam formation or destroying foam that has already formed. Antifoams essentially work by promoting coalescence of finely divided gas or air bubbles to give larger bubbles in the medium to be deaerated, for example the compositions according to the invention, and thus accelerate escape of the gas (of the air). Since antifoams can frequently also be employed as deaerators and vice versa, these additives have been included together under group c1).

Such auxiliaries are, for example, commercially available from Tego as TEGO^{®} Foamex 800, TEGO^{®} Foamex 805, TEGO^{®} Foamex 810, TEGO^{®} Foamex 815, TEGO^{®} Foamex 825, TEGO^{®} Foamex 835, TEGO^{®} Foamex 840, TEGO^{®} Foamex 842, TEGO^{®} Foamex 1435, TEGO^{®} Foamex 1488, TEGO^{®} Foamex 1495, TEGO^{®} Foamex 3062, TEGO^{®} Foamex 7447, TEGO^{®} Foamex 8020, Tego^{®} Foamex N, TEGO^{®} Foamex K 3, TEGO^{®} Antifoam 2-18,TEGO^{®} Antifoam 2-18, TEGO^{®} Antifoam 2-57, TEGO^{®} Antifoam 2-80, TEGO^{®} Antifoam 2-82, TEGO^{®} Antifoam 2-89, TEGO^{®} Antifoam 2-92, TEGO^{®} Antifoam 14, TEGO^{®} Antifoam 28, TEGO^{®} Antifoam 81, TEGO^{®} Antifoam D 90, TEGO^{®} Antifoam 93, TEGO^{®} Antifoam 200, TEGO^{®} Antifoam 201, TEGO^{®} Antifoam 202, TEGO^{®} Antifoam 793, TEGO^{®} Antifoam 1488, TEGO^{®} Antifoam 3062, TEGOPREN^{®} 5803, TEGOPREN^{®} 5852, TEGOPREN^{®} 5863, TEGOPREN^{®} 7008, TEGO^{®} Antifoam 1-60, TEGO^{®} Antifoam 1-62, TEGO^{®} Antifoam 1-85, TEGO^{®} Antifoam 2-67, TEGO^{®} Antifoam WM 20, TEGO^{®} Antifoam 50, TEGO^{®} Antifoam 105, TEGO^{®} Antifoam 730, TEGO^{®} Antifoam MR 1015, TEGO^{®} Antifoam MR 1016, TEGO^{®} Antifoam 1435, TEGO^{®} Antifoam N, TEGO^{®} Antifoam KS 6, TEGO^{®} Antifoam KS 10, TEGO^{®} Antifoam KS 53, TEGO^{®} Antifoam KS 95, TEGO^{®} Antifoam KS 100, TEGO^{®} Antifoam KE 600, TEGO^{®} Antifoam KS 911, TEGO^{®} Antifoam MR 1000, TEGO^{®} Antifoam KS 1100, TEGO^{®} Twin 4000, Tego^{®} Airex 900, Tego^{®} Airex 910, Tego^{®} Airex 931, Tego^{®} Airex 935, Tego^{®} Airex 936, Tego^{®} Airex 960, Tego^{®} Airex 970, Tego^{®} Airex 980 and Tego^{®} Airex 985 and from BYK as BYK^{®}-011, BYK^{®}-019, BYK^{®}-020, BYK^{®}-021, BYK^{®}-022, BYK^{®}-023, BYK^{®}-024, BYK^{®}-025, BYK^{®}-027, BYK^{®}-031, BYK^{®}-032, BYK^{®}-033, BYK^{®}-034, BYK^{®}-035, BYK^{®}-036, BYK^{®}-037, BYK^{®}-045, BYK^{®}-051, BYK^{®}-052, BYK^{®}-053, BYK^{®}-055, BYK^{®}-057, BYK^{®}-065, BYK^{®}-066, BYK^{®}-070, BYK^{®}-080, BYK^{®}-088, BYK^{®}-141 and BYK^{®}-A 530.

The auxiliaries in group c1) are optionally employed in a proportion of from about 0 to 3.0% by weight, preferably from about 0 to 2.0% by weight, based on the total weight of the RM formulation.

In group c2), the lubricants and flow auxiliaries typically include silicon-free, but also silicon-containing polymers, for example polyacrylates or modifiers, low-molecular-weight polydialkylsiloxanes. The modification consists in some of the alkyl groups having been replaced by a wide variety of organic radicals. These organic radicals are, for example, polyethers, polyesters or even long-chain alkyl radicals, the former being used the most frequently.

The polyether radicals in the correspondingly modified polysiloxanes are usually built up from ethylene oxide and/or propylene oxide units. Generally, the higher the proportion of these alkylene oxide units in the modified polysiloxane, the more hydrophilic is the resultant product.

Such auxiliaries are, for example, commercially available from Tego as TEGO^{®} Glide 100, TEGO^{®} Glide ZG 400, TEGO^{®} Glide 406, TEGO^{®} Glide 410, TEGO^{®} Glide 411, TEGO^{®} Glide 415, TEGO^{®} Glide 420, TEGO^{®} Glide 435, TEGO^{®} Glide 440, TEGO^{®} Glide 450, TEGO^{®} Glide A 115, TEGO^{®} Glide B 1484 (can also be used as antifoam and deaerator), TEGO^{®} Flow ATF, TEGO^{®} Flow 300, TEGO^{®} Flow 460, TEGO^{®} Flow 425 and TEGO^{®} Flow ZFS 460. Suitable radiation-curable lubricants and flow auxiliaries, which can also be used to improve the scratch resistance, are the products TEGO^{®} Rad 2100, TEGO^{®} Rad 2200, TEGO^{®} Rad 2500, TEGO^{®} Rad 2600 and TEGO^{®} Rad 2700, which are likewise obtainable from TEGO.

Such-auxiliaries are available, for example, from BYK as BYK^{®}-300 BYK^{®}-306, BYK^{®}-307, BYK^{®}-310, BYK^{®}-320, BYK^{®}-333, BYK^{®}-341, Byk^{®} 354, Byk^{®}361, Byk^{®}361N, BYK^{®}388.

The auxiliaries in group c2) are optionally employed in a proportion of from about 0 to 3.0% by weight, preferably from about 0 to 2.0% by weight, based on the total weight of the RM formulation.

In group c3), the radiation-curing auxiliaries include, in particular, polysiloxanes having terminal double bonds which are, for example, a constituent of an acrylate group. Such auxiliaries can be crosslinked by actinic or, for example, electron radiation. These auxiliaries generally combine a number of properties together. In the uncrosslinked state, they can act as antifoams, deaerators, lubricants and flow auxiliaries and/or substrate wetting auxiliaries, while, in the crosslinked state, they increase, in particular, the scratch resistance, for example of coatings or films which can be produced using the compositions according to the invention. The improvement in the gloss properties, for example of precisely those coatings or films, is regarded essentially as a consequence of the action of these auxiliaries as antifoams, deaerators and/or lubricants and flow auxiliaries (in the uncrosslinked state).

Examples of suitable radiation-curing auxiliaries are the products TEGO^{®} Rad 2100, TEGO^{®} Rad 2200, TEGO^{®} Rad 2500, TEGO^{®} Rad 2600 and TEGO^{®} Rad 2700 available from TEGO and the product BYK^{®}-371 available from BYK.

Thermally curing auxiliaries in group c3) contain, for example, primary OH groups which are able to react with isocyanate groups, for example of the binder.

Examples of thermally curing auxiliaries which can be used are the products BYK^{®}-370, BYK^{®}-373 and BYK^{®}-375 available from BYK.

The auxiliaries in group c3) are optionally employed in a proportion of from about 0 to 5.0% by weight, preferably from about 0 to 3.0% by weight, based on the total weight of the RM formulation.

The substrate wetting auxiliaries in group c4) serve, in particular, to increase the wettability of the substrate to be printed or coated, for example, by printing inks or coating compositions, for example compositions according to the invention. The generally attendant improvement in the lubricant and flow behaviour of such printing inks or coating compositions has an effect on the appearance of the finished (for example crosslinked) print or coating.

A wide variety of such auxiliaries are commercially available, for example from Tego as TEGO^{®} Wet KL 245, TEGO^{®} Wet 250, TEGO^{®} Wet 260 and TEGO^{®} Wet ZFS 453 and from BYK as BYK^{®}-306, BYK^{®}-307, BYK^{®}-310, BYK^{®}-333, BYK^{®}-344, BYK^{®}-345, BYK^{®}-346, Byk^{®}-348 and Byk^{®}-3550.

The auxiliaries in group c4) are optionally employed in a proportion of from about 0 to 3.0% by weight, preferably from about 0 to 1.5% by weight, based on the total weight of the liquid-crystalline composition.

The wetting and dispersion auxiliaries in group c5) serve, in particular, to prevent the flooding and floating and the sedimentation of pigments and are therefore, if necessary, suitable in particular in pigmented compositions according to the invention.

These auxiliaries stabilize pigment dispersions essentially through electrostatic repulsion and/or steric hindrance of the pigment particles containing these additives, where, in the latter case, the interaction of the auxiliary with the ambient medium (for example binder) plays a major role.

Since the use of such wetting and dispersion auxiliaries is common practice, for example in the technical area of printing inks and paints, the selection of a suitable auxiliary of this type generally does not present the person skilled in the art with any difficulties, if they are used.

Such wetting and dispersion auxiliaries are commercially available, for example from Tego, as TEGO^{®} Dispers 610, TEGO^{®} Dispers 610 S, TEGO^{®} Dispers 630, TEGO^{®} Dispers 700, TEGO^{®} Dispers 705, TEGO^{®} Dispers 710, TEGO^{®} Dispers 720 W, TEGO^{®} Dispers 725 W, TEGO^{®} Dispers 730 W, TEGO^{®} Dispers 735 W and TEGO^{®} Dispers 740 W and from BYK as Disperbyk^{®}, Disperbyk^{®}-107, Disperbyk^{®}-108, Disperbyk^{®}-110, Disperbyk^{®}-111, Disperbyk^{®}-115, Disperbyk^{®}-130, Disperbyk^{®}-160, Disperbyk^{®}-161, Disperbyk^{®}-162, Disperbyk^{®}-163, Disperbyk^{®}-164, Disperbyk^{®}-165, Disperbyk^{®}-166, Disperbyk^{®}-167, Disperbyk^{®}-170, Disperbyk^{®}-174, Disperbyk^{®}-180, Disperbyk^{®}-181, Disperbyk^{®}-182, Disperbyk^{®}-183, Disperbyk^{®}-184, Disperbyk^{®}-185, Disperbyk^{®}-190, Anti-Terra^{®}-U, Anti-Terra^{®}-U 80, Anti-Terra^{®}-P, Anti-Terra^{®}-203, Anti-Terra^{®}-204, Anti-Terra^{®}-206, BYK^{®}-151, BYK^{®}-154, BYK^{®}-155, BYK^{®}-P 104 S, BYK^{®}-P 105, Lactimon^{®}, Lactimon^{®}-WS and Bykumen^{®}.

The amount of the auxiliaries in group c5) used on the mean molecular weight of the auxiliary. In any case, a preliminary experiment is therefore advisable, but this can be accomplished simply by the person skilled in the art.

Another preferred group of auxiliaries, which can be allocated to group c2), c4) or c5), includes wetting-, flow- and leveling agents, in particular based on non-ionic fluorosurfactants, which are commercially available from Synthomer under the Polyfox^{™} series, for example Polyfox^{™}PF-656.

The hydrophobicizing agents in group c6) can be used to give water-repellent properties to prints or coatings produced, for example, using compositions according to the invention. This prevents or at least greatly suppresses swelling due to water absorption and thus a change in, for example, the optical properties of such prints or coatings. In addition, when the composition is used, for example, as a printing ink in offset printing, water absorption can thereby be prevented or at least greatly reduced.

Such hydrophobicizing agents are commercially available, for example, from Tego as Tego^{®} Phobe WF, Tego^{®} Phobe 1000, Tego^{®} Phobe 1000 S, Tego^{®} Phobe 1010, Tego^{®} Phobe 1030, Tego^{®} Phobe 1010, Tego^{®} Phobe 1010, Tego^{®} Phobe 1030, Tego^{®} Phobe 1040, Tego^{®} Phobe 1050, Tego^{®} Phobe 1200, Tego^{®} Phobe 1300, Tego^{®} Phobe 1310 and Tego^{®} Phobe 1400.

The auxiliaries in group c6) are optionally employed in a proportion of from about 0 to 5.0% by weight, preferably from about 0 to 3.0% by weight, based on the total weight of the RM formulation.

Adhesion promoters from group c7) serve to improve the adhesion of two interfaces in contact. It is directly evident from this that essentially the only fraction of the adhesion promoter that is effective is that located at one or the other or at both interfaces. If, for example, it is desired to apply liquid or pasty printing inks, coating compositions or paints to a solid substrate, this generally means that the adhesion promoter must be added directly to the latter or the substrate must be pre-treated with the adhesion promoters (also known as priming), i.e. this substrate is given modified chemical and/or physical surface properties.

If the substrate has previously been primed with a primer, this means that the interfaces in contact are that of the primer on the one hand and of the printing ink or coating composition or paint on the other hand. In this case, not only the adhesion properties between the substrate and the primer, but also between the substrate and the printing ink or coating composition or paint play a part in adhesion of the overall multilayer structure on the substrate.

Adhesion promoters in the broader sense which may be mentioned are also the substrate wetting auxiliaries already listed under group c4), but these generally do not have the same adhesion promotion capacity.

In view of the widely varying physical and chemical natures of substrates and of printing inks, coating compositions and paints intended, for example, for their printing or coating, the multiplicity of adhesion promoter systems is not surprising.

Adhesion promoters based on silanes are, for example, 3-aminopropyltrimethoxysilane, 3-aminopropyltriethoxysilane, 3-aminopropylmethyldiethoxysilane, N-aminoethyl-3-aminopropyltrimethoxysilane, N-aminoethyl-3-aminopropylmethyldimethoxysilane, N-methyl-3-aminopropyltrimethoxysilane, 3-ureidopropyltriethoxysilane, 3-methacryloyloxypropyltrimethoxysilane, 3-glycidyloxypropyltrimethoxysilane, 3-mercaptopropyltrimethoxysilane, 3-chloropropyltrimethoxysilane and vinyltrimethoxysilane. These and other silanes are commercially available from Hüls, for example under the tradename DYNASILAN^{®}.

Corresponding technical information from the manufacturers of such additives should generally be used or the person skilled in the art can obtain this information in a simple manner through corresponding preliminary experiments.

However, if these additives are to be added as auxiliaries from group c7) to the RM formulations according to the invention, their proportion optionally corresponds to from about 0 to 5.0% by weight, based on the total weight of the RM formulation. These concentration data serve merely as guidance, since the amount and identity of the additive are determined in each individual case by the nature of the substrate and of the printing/coating composition. Corresponding technical information is usually available from the manufacturers of such additives for this case or can be determined in a simple manner by the person skilled in the art through corresponding preliminary experiments.

The auxiliaries for improving the scratch resistance in group c8) include, for example, the abovementioned products TEGO^{®} Rad 2100, TEGO^{®} Rad 2200, TEGO^{®} Rad 2500, TEGO^{®} Rad 2600 and TEGO^{®} Rad 2700, which are available from Tego.

For these auxiliaries, the amount data given for group c3) are likewise suitable, i.e. these additives are optionally employed in a proportion of from about 0 to 5.0% by weight, preferably from about 0 to 3.0% by weight, based on the total weight of the liquid-crystalline composition.

Examples which may be mentioned of light, heat and/or oxidation stabilizers are the following:
alkylated monophenols, such as 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which have a linear or branched side chain, for example 2,6-dinonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures of these compounds, alkylthiomethylphenols, such as 2,4-dioctylthiomethyl-6-tertbutylphenol, 2,4-dioctylthiomethyl-6-methylphenol, 2,4-dioctylthiomethyl-6-ethylphenol and 2,6-didodecylthiomethyl-4-nonylphenol,
Hydroquinones and alkylated hydroquinones, such as 2,6-di-tert-butyl-4-methoxyphenol, 2,5-di-tert-butylhydroquinone, 2,5-di-tert-amylhydrocrainone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate and bis(3,5-di-tert-butyl-4-hydroxyphenyl)adipate,
Tocopherols, such as α-tocopherol, β-tocopherol, γ-tocopherol, δ-tocopherol and mixtures of these compounds, and tocopherol derivatives, such as tocopheryl acetate, succinate, nicotinate and polyoxyethylenesuccinate ("tocofersolate"),
hydroxylated diphenyl thioethers, such as 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol) and 4,4'-bis(2,6-dimethyl-4-hydroxyphenyl)disulfide,
Alkylidenebisphenols, such as 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tertbutylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecyl-mercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methylphenyl]terephthalate, 1,1-bis(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecyl-mercaptobutane and 1,1,5,5-tetrakis(5-tert-butyl-4-hydroxy-2-methylphenyl)pentane,
O-, N- and S-benzyl compounds, such as 3,5,3',5'-tetra-tert-butyl-4,4'-dihydroxydibenzyl ether, octadecyl 4-hydroxy-3,5-dimethylbenzylmercaptoacetate, tridecyl 4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide and isooctyl-3,5-di-tert-butyl-4-hydroxybenzylmercaptoacetate, aromatic hydroxybenzyl compounds, such as 1,3,5-tris(3,5-di-tert-butyl-4-hydroxybenzyl)-2,4,6-trimethyl-benzene, 1,4-bis(3,5-di-tert-butyl-4-hydroxybenzyl)-2,3,5,6-tetramethyl-benzene and 2,4,6-tris(3,5-di-tert-butyl-4-hydroxybenzyl)phenol,
Triazine compounds, such as 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris-(3,5-di-tert-butyl-4-hydroxyphenylpropionyl)hexahydro-1,3,5-triazine, 1,3,5-tris(3,5-dicyclohexyl-4-hydroxybenzyl)isocyanurate and 1,3,5-tris(2-hydroxyethyl)isocyanurate,
Benzylphosphonates, such as dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate and dioctadecyl 5-tert-butyl-4-hydroxy-3-methylbenzylphosphonate,
Acylaminophenols, such as 4-hydroxylauroylanilide, 4-hydroxystearoylanilide and octyl N-(3,5-di-tert-butyl-4-hydroxyphenyl)carbamate,
Propionic and acetic esters, for example of monohydric or polyhydric alcohols, such as methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxalamide, 3-thiaundecanol, 3-thiapentadecanol, trimethylhexanediol, trimethylolpropane and 4-hydroxymethyl-1-phospha-2,6,7-trioxabicyclo[2.2.2]-octane,
Propionamides based on amine derivatives, such as N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine and N,N'-bis(3,5-di-tert-butyl-4-hydroxyphenylpropionyl)hydrazine,
Ascorbic acid (Vitamin C) and ascorbic acid derivatives, such as ascorbyl palmitate, laurate and stearate, and ascorbyl sulfate and phosphate,
Antioxidants based on amine compounds, such as N,N'-diisopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octyl-substituted diphenylamine, such as p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis[4-methoxyphenyl)amine, 2,6-di-tert-butyl-4-dimethylaminomethylphenol, 2,4-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octyl-substituted N-phenyl-1-naphthylamine, a mixture of mono- and dialkylated tert-butyl/tert-octyldiphenylamine, a mixture of mono- and dialkylated nonyldiphenylamine, a mixture of mono- and dialkylated dodecyldiphenylamine, a mixture of mono- and dialkylated isopropyl/isohexyldiphenylamine, a mixture of mono- and dialkylated tert-butyldiphenylamine, 2,3-dihydro-3,3-dimethyl-4H-1,4-benzothiazine, phenothiazine, a mixture of mono- and dialkylated tert-butyl/tert-octylphenothiazine, a mixture of mono- and dialkylated tert-octylphenothiazine, N-allylphenothiazine, N,N,N',N'-tetraphenyl-1,4-diaminobut-2-ene, N,N-bis(2,2,6,6-tetramethylpiperidin-4-yl)hexamethylenediamine, bis(2,2,6,6-tetramethylpiperidin-4-yl)sebacate, 2,2,6,6-tetramethylpiperidin-4-one and 2,2,6,6-tetramethylpiperidin-4-ol,
Phosphines, phosphites and phosphonites, such as triphenylphosnine triphenylphosphite, diphenyl alkyl phosphite, phenyl dialkyl phosphite, tris(nonylphenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, bis(2,4-di-tert-butylphenyl)pentaerythritol diphosphite, bis(2,6-di-tert-butyl-4-methylphenyl)pentaerythritol diphosphite, diisodecyloxy pentaerythritol diphosphite, bis(2,4-di-tert-butyl-6-methylphenyl)pentaerythritol diphosphite, bis(2,4,6-tris(tert-butylphenyl))pentaerythritol diphosphite, tristearyl sorbitol triphosphite, tetrakis(2,4-di-tert-butylphenyl)4,4'-biphenylenediphosphonite, 6-isooctyloxy-2,4,8,10-tetra-tert-butyl-12H-dibenz[d,g]-1,3,2-dioxaphosphocine, 6-fluoro-2,4,8,10-tetra-tert-butyl-12-methyl-dibenz[d,g]-1,3,2-dioxaphosphocine, bis(2,4-di-tert-butyl-6-methylphenyl)methyl phosphite and bis(2,4-di-tert-butyl-6-methylphenyl)ethyl phosphite,
2-(2'-Hydroxyphenyl)benzotriazoles, such as 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3,5'-bis-(α,α-dimethylbenzyl)-2'-hydroxyphenyl)benzotriazole, a mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxy phenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxy phenyl)benzotriazole, 2-(3'-dodecyl-2'-hydroxy-5'-methylphenyl)benzotriazole and 2-(3'-tert-butyl-2'-hydroxy-5'-(2-isooctyloxycarbonylethyl)phenyl benzotriazole, 2,2'-methylenebis[4-(1,1,3,3-tetramethylbutyl)-6-benzotriazol-2-ylphenol]; the product of complete esterification of 2-[3'-tert-butyl-5'-(2-methoxycarbonylethyl)-2'-hydroxyphenyl]-2H-benzotriazole with polyethylene glycol 300;
sulfur-containing peroxide scavengers and sulfur-containing antioxidants, such as esters of 3,3'-thiodipropionic acid, for example the lauryl, stearyl, myristyl and tridecyl esters, mercaptobenzimidazole and the zinc salt of 2-mercaptobenzimidazole, dibutylzinc dithiocarbamates, dioctadecyl disulfide and pentaerythritol tetrakis(β-dodecylmercapto)propionate,
2-hydroxybenzophenones, such as the 4-hydroxy, 4-methoxy, 4-octyloxy, 4-decycloxy, 4-dodecyloxy, 4-benzyloxy, 4,2',4'-trihydroxy and 2'-hydroxy-4,4'-dimethoxy derivatives,
Esters of unsubstituted and substituted benzoic acids, such as 4-tert-butylphenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl-3,5-di-tert-butyl-4-hydroxybenzoate, octadecyl-3,5-di-tert-butyl-4-hydroxybenzoate and 2-methyl-4,6-di-tert-butylphenyl-3,5-di-tert-butyl-4-hydroxybenzoate,
Acrylates, such as ethyl α-cyano-β,β-diphenylacrylate, isooctyl α-cyano-β,β-diphenylacrylate, methyl α-methoxycarbonylcinnamate, methyl α-cyano-β-methyl-p-methoxycinnamate, butyl-α-cyano-β-methyl-p-methoxycinnamate and methyl-α-methoxycarbonyl-p-methoxycinnamate, sterically hindered amines, such as bis(2,2,6,6-tetramethylpiperidin-4-yl)sebacate, bis(2,2,6,6-tetramethylpiperidin-4-yl)succinate, bis(1,2,2,6,6-pentamethylpiperidin-4-yl)sebacate, bis(1-octyloxy-2,2,6,6-tetramethylpiperidin-4-yl)sebacate, bis(1,2,2,6,6-pentamethylpiperidin-4-yl)-n-butyl-3,5-di-tert-butyl-4-hydroxybenzylmalonate, the condensation product of 1-(2-hydroxyethyl)-2,2,6,6-tetramethyl-4-hydroxypiperidine and succinic acid, the condensation product of N,N'-bis(2,2,6,6-tetramethylpiperidin-4-yl)hexamethylenediamine and 4-tert-octylamino-2,6-dichloro-1,3,5-triazine, tris(2,2,6,6-tetramethylpiperidin-4-yl)nitrilotriacetate, tetrakis(2,2,6,6-tetramethylpiperidin-4-yl)1,2,3,4-butanetetracarboxylate, 1,1'-(1,2-ethylene)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidin-4-yl)2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidin-4-yl)sebacate, bis(1-octyloxy-2,2,6,6-tetramethylpiperidin-4-yl)succinate, the condensation product of N,N'-bis(2,2,6,6-tetramethylpiperidin-4-yl)hexamethylenediamine and 4-morpholino-2,6-dichloro-1,3,5-triazine, the condensation product of 2-chloro-4,6-bis(4-n-butylamino-2,2,6,6-tetramethylpiperidin-4-yl)-1,3,5-triazine and 1,2-bis(3-aminopropylamino)ethane, the condensation product of 2-chloro-4,6-di(4-n-butylamino-1,2,2,6,6-pentamethylpiperidin-4-yl)-1,3,5-triazine and 1,2-bis(3-aminopropylamino)ethane, 8-acetyl-3-dodecyl-7,7,9,9-tetramethyl-1,3,8-triazaspiro[4.5]-decane-2,4-dione, 3-dodecyl-1-(2,2,6,6-tetramethylpiperidin-4-yl)pyrrolidine-2,5-dione, 3-dodecyl-1-(1,2,2,6,6-pentamethylpiperidin-4-yl)pyrrolidine-2,5-dione, a mixture of 4-hexadecyloxy- and 4-stearyloxy-2,2,6,6-tetramethylpiperidine, the condensation product of N,N'-bis(2,2,6,6-tetramethylpiperidin-4-yl)hexamethylenediamine and 4-cyclohexylamino-2,6-dichloro-1,3,5-triazine, the condensation product of 1,2-bis(3-aminopropylamino)ethane and 2,4,6-trichloro-1,3,5-triazine, 4-butylamino-2,2,6,6-tetramethylpiperidine, N-(2,2,6,6-tetramethylpiperidin-4-yl)-n-dodecylsuccinimide, N-(1,2,2,6,6-pentamethylpiperidin-4-yl)-n-dodecylsuccinimide, 2-undecyl-7,7,9,9-tetramethyl-1-oxa-3,8-diaza-4-oxo-spiro[4.5]-decane, the condensation product of 7,7,9,9-tetramethyl-2-cycloundecyl-1-oxa-3,8-diaza-4-oxospiro-[4.5]decane and epichlorohydrin, the condensation products of 4-amino-2,2,6,6-tetramethylpiperidine with tetramethylolacetylenediureas and poly(methoxypropyl-3-oxy)-[4(2,2,6,6-tetramethyl)piperidinyl]-siloxane,
Oxalamides, such as 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxalamide, 2-ethoxy-5-tert-butyl-2'-ethoxanilide and its mixture with 2-ethoxy-2'-ethyl-5,4'-di-tert-butoxanilide, and mixtures of ortho-, para-methoxy-disubstituted oxanilides and mixtures of ortho- and para-ethoxy-disubstituted oxanilides, and
2-(2-hydroxyphenyl)-1,3,5-triazines, such as 2,4,6-tris-(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropoxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis-(2,4-dimethylphenyl)-1,3,5-triazine, 2-(2-hydroxy-4-hexyloxyphenyl)-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine and 2-(2-hydroxyphenyl)-4-(4-methoxyphenyl)-6-phenyl-1,3,5-triazine.

In another preferred embodiment the RM formulation contains an additive selected from formula IA: 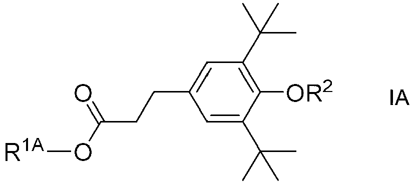 wherein R^{1A} denotes alkyl with 12 to 25, preferably 14 to 22, C atoms, which is preferably straight-chain, very preferably n-octadecyl, and R² denotes alkyl with 1 to 6 Catoms, preferably methyl or ethyl, very preferably methyl.

Very compounds of formula IA are those of formula IA1:

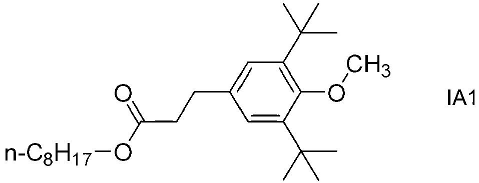

The compounds of formula IA and IA1 improve the alignment of RM layers, especially CLC RM layers, while not decreasing the surface tension too much. This allows coating multiple RM or chiral RM layers on top of one another without coating defects.

The concentration of the compounds of formula IA and IA1 in the RM formulation is preferably from 0.05 to 2%, very preferably from 0.1 to 1%, most preferably from 0.2 to 0.7% of total solids.

Preferably, the RM formulation comprises one or more components selected from the group consisting of the following components or any combination thereof:
a) one or more multi - or direactive polymerizable mesogenic compounds, preferably selected from compounds of formula D and its subformulae, and/or
b) one or more monoreactive polymerizable mesogenic compounds, preferably selected from compounds of formula M and its subformulae, and/or
c) one or more polymerizable mesogenic compounds selected from compounds of formula T and A and their subformulae, and/or
d) one or more polymerizable chiral compounds, preferably selected from formula C or its subformulae, and/or
e) one or more chiral isomerizable compounds, which can be polymerizable or non-polymerizable, preferably selected from formula I*,
f) one or more non-polymerizable and non-isomerizable chiral compounds, preferably selected from formulae C-I, C-II and C-III, and/or
g) one or more photoinitiators, and/or
h) one or more antioxidative additives, and/or
i) one or more adhesion promotors, and/or
j) one or more surfactants, and/or
k) one or more mono-, di- or multireactive polymerizable non-mesogenic compounds, and/or
l) one or more dyes showing an absorption maximum at the wavelength used to initiate photo polymerization, and/or
m) one or more chain transfer agents, and/or
n) one or more (UV) stabilizers, and/or
o) one or more lubricants and flow auxiliaries, and
p) one or more diluents, and/or
q) a non-polymerizable nematic component, and
r) three or more organic solvents as described above and below.

More preferably, the RM formulation comprises:
1) one or more, preferably two or more, direactive polymerizable mesogenic compounds, preferably selected from formula Da-1, and/or
2) one or more, preferably two or more, monoreactive polymerizable mesogenic compounds, preferably selected from formulae M-1, M-4, M-6 and M-8 to M10, and/or
3) one or more compounds of formula T or A, or their preferred subformulae,
4) optionally one or more polymerizable chiral compounds, preferably selected from formulae C or its subformulae,
5) optionally one or more chiral isomerizable compounds, preferably selected from formula I*, more preferably from formula I*A, or their corresponding preferred subformulae,
6) optionally one or more non-polymerizable and non-isomerizable chiral compounds, preferably selected from formulae C-I, C-II and C-III,
7) optionally one or more antioxidative additives,
8) one or more photoinitiators,
9) three or more organic solvents as described above and below.
or any combination of the aforementioned components 1) to 9), provided that component 9) and at least one of components 1) to 3) are present.

The RM mixtures and RM formulations can be prepared in a manner conventional per se, for example by mixing one or more of the above-mentioned RMs as defined above, and optionally with further additives and dissolving these RMs and additives in a solvent or solvent blend.

The invention further relates to a process of preparing a polymer or polymer film from an RM formulation as described above and below, comprising the steps of depositing a layer of the RM formulation onto a substrate, optionally removing the solvents, optionally annealing the layer containing the RMs, preferably aligning the RMs into uniform orientation, and polymerizing the RMs, preferably at a temperature where the RMs exhibit a liquid crystal phase, and wherein the RM formulation is deposited onto the substrate by a printing method, very preferably by inkjet printing.

Preferably the RMs are aligned into uniform orientation. Further preferably alignment and polymerization of the RMs are carried out at a temperature where the RMs or the RM mixture exhibit a liquid crystal phase, preferably a nematic or a cholesteric (chiral nematic) phase.

A preferred embodiment of the invention relates to a process of preparing a polymer film, comprising, preferably consisting of, the steps of
- depositing a layer of an RM formulation as described above and below onto a substrate, which is optionally provided with an alignment layer and/or a surface grating or pattern, by a printing method, very preferably by inkjet printing,
- removing the solvents,
- optionally annealing the RM layer (i.e., without solvents), preferably at a temperature where the RM mixture exhibit a nematic or cholesteric phase,
- irradiating the RM layer with actinic radiation, preferably with UV radiation, causing polymerization of the RMs and formation of a polymer film,
- optionally removing the polymer film from the substrate.

In another preferred embodiment of the present invention, especially if the RM formulation contains a photoisomerizable chiral compound which is preferably also polymerizable as described above and below, the process of preparing the polymer film comprises two UV irradiation steps, and more precisely comprises, preferably consists of, the steps of
- depositing a layer of the RM formulation as described above and below onto a substrate, which is optionally provided with an alignment layer and/or a surface grating or pattern, by a printing method, very preferably by inkjet printing,
- removing the solvents,
- optionally annealing the RM layer (i.e., without solvents), preferably at a temperature where the RM mixture is in the cholesteric phase,
- a first step of irradiation of the RM layer with actinic radiation, preferably with UV radiation, in air (1^{st} UV step),
- optionally annealing the RM layer, preferably at a temperature where the RM mixture is in the cholesteric phase, and
- a second step of irradiation of the RM layer with actinic radiation, preferably with UV radiation, in an inert gas atmosphere (2^{nd} UV step),
- optionally removing the formed polymer film from the substrate.

The invention further relates to a polymer or polymer film obtainable by one of the processes as described above and below.

Preferably in the processes according to the present invention all printing, irradiation or UV exposure steps are carried out at room temperature.

In case of the two-step irradiation process according to the second preferred embodiment, the first irradiation or 1^{st} UV step causes photoisomerization of the chiral compound comprising the photoisomerizable group and provides the chiral structure with the biased helical pitch. The second irradiation or 2^{nd} UV step causes photopolymerization of the polymerizable mesogenic compounds and thereby fixes the chiral structure. This process can be advantageously used to obtain a chiral pitch gradient in the film thickness direction, wherein the chiral rotation angle increases or decreases incrementally through the film thickness.

After the RM formulation is deposited onto the substrate, the solvents are evaporated off before polymerization. In most cases, it is suitable to heat the mixture in order to facilitate the evaporation of the solvent.

The RM formulation can be deposited onto the substrate by conventional coating or printing techniques which are known to the expert, including but not limited to spin coating, bar coating, slot die coating, inkjet printing, nozzle printing, screen printing, flexographic printing, offset printing, reel-to-reel printing, letter press printing, gravure printing, rotogravure printing, intaglio printing, pad printing, heat-seal printing, or printing by means of a stamp or printing plate. Very preferred are printing methods, especially inkjet printing.

Suitable substrate mediums and substrates are known to the expert and described in the literature, as for example conventional substrates used in the optical films industry, such as glass or plastic. Especially suitable and preferred substrates for polymerization are polyester such as polyethyleneterephthalate (PET) or polyethylenenaphthalate (PEN), polyvinylalcohol (PVA), polycarbonate (PC), triacetylcellulose (TAC), cyclo-olefin polymers (COP), or commonly known color filter materials, preferably triacetylcellulose (TAC), cyclo-olefin polymers (COP), or commonly known colour filter materials.

In another preferred embodiment the substrate has a surface grating or surface pattern, preferably a periodic diffraction grating, very preferably a PB deflector grating or PB lens grating. In another preferred embodiment the substrate is prepared from a photoalignment layer (PAL) which can be patterned by laser interferometry to create a grating pattern with a defined pitch.

In another preferred embodiment the substrate comprises an alignment layer, preferably a PAL, containing a cinnamate material, onto which the RM formulation is printed. Suitable and preferred cinnamate (P)AL materials are commercially available, for example from Nissan Chemical.

If the RMs do not align spontaneously on the chosen substrate into the desired orientation, an additional alignment layer capable of inducing the desired alignment can be used adjacent to the RM layer. For example, planar alignment can be promoted by coating the substrate with a polyimide layer, and then rubbing the alignment layer with a velvet cloth.

Other suitable planar alignment layers are known in the art, like for example rubbed polyimide or alignment layers prepared by photoalignment as described in US 5,602,661, US 5,389,698 or US 6,717,644.

In general, reviews of alignment techniques are given for example by I. Sage in "Thermotropic Liquid Crystals", edited by G. W. Gray, John Wiley & Sons, 1987, pages 75-77; and by T. Uchida and H. Seki in "Liquid Crystals - Applications and Uses Vol. 3", edited by B. Bahadur, World Scientific Publishing, Singapore 1992, pages 1-63. A further review of alignment materials and techniques is given by J. Cognard, Mol. Cryst. Liq. Cryst. 78, Supplement 1 (1981), pages 1-77.

In a preferred embodiment, the process according to the invention contains a process step where the RM mixture or RM formulation is allowed to rest for a period of time in order to evenly redistribute the polymerizable LC medium on the substrate (herein referred to as "annealing").

In a preferred embodiment, after providing the RM formulation onto the substrate, the RM layer is annealed for a given period of time and at a given temperature.

The annealing time is preferably between 10 seconds and 1 hour, preferably between 20 seconds and 10 minutes and most preferably between 30 seconds and 5 minutes.

The annealing is preferably performed at a temperature from room temperature to 100°C, very preferably from room temperature to 80°C.

The RM mixture preferably consists of compounds that align spontaneously when being deposited as a mixture onto the substrate. Therefore, preferably the RM mixture is not subjected to heat treatment to align the mesogenic or liquid-crystalline compounds before the UV exposure.

If necessary, the layer can be cooled down to room temperature after annealing at an elevated temperature. The cooling can be performed actively with the help of cooling aids or passively just by letting the layer stack rest for a given time.

Photopolymerization of the RM layer (hereinafter also referred to as "curing") is preferably achieved by exposing it to actinic radiation. Actinic radiation means irradiation with light, like UV light, IR light or visible light, irradiation with X-rays or gamma rays, or irradiation with high-energy particles, such as ions or electrons. Preferably, polymerization is carried out by photo irradiation, in particular with UV light. As a source for actinic radiation, for example a single UV lamp or a set of UV lamps can be used. When using a high lamp power the curing time can be reduced. Another possible source for photo radiation is a laser, like e.g. a UV laser, an IR laser, or a visible laser.

The curing time is dependent, inter alia, on the reactivity of the RMs and other polymerizable components, the thickness of the RM layer, and the power and selected wavelength of the UV lamp.

By optimizing the curing time and the curing temperature it is also possible to improve the alignment quality of the polymer film.

The curing time is preferably ≤ 5 minutes, very preferably ≤ 3 minutes, more preferably ≤ 90 seconds, most preferably from 30 to 90 seconds. For mass production, curing times of ≤ 60 seconds or even ≤ 30 seconds are preferred.

The curing temperature is preferably from room temperature to 50°C, very preferably from 35 to 45°C. For curing at 35°C or higher temperature the curing time is preferably at least 50 seconds, more preferably from 50 to 90 seconds.

A suitable UV radiation power in the 1^{st} UV step is preferably in the range from 5 to 300 mWcm⁻², more preferably in the range from 50 to 250 mWcm⁻² and most preferably in the range from 100 to 180 mWcm⁻².

In connection with the applied UV radiation and as a function of time, a suitable UV dose is preferably in the range from 20 to 1000 mJcm⁻², more preferably in the range from 30 to 800 mJcm⁻², very preferably in the range from 40 to 500 mJcm⁻², most preferably in the range from 40 to 200 mJcm⁻².

In case of the two-step irradiation process according to the second preferred embodiment, the first irradiation step or 1^{st} UV step for isomerizing the chiral compound is preferably performed in air. Preferably the first irradiation step or 1^{st} UV step is preferably performed at room temperature.

A suitable UV radiation power for the photopolymerization is preferably in the range from 100 to 1000 mWcm-2, more preferably in the range from 200 to 800 mWcm⁻² and most preferably in the range from 300 to 600 mWcm⁻².

In connection with the applied UV radiation and as a function of time, a suitable UV dose is preferably in the range from 25 to 16500 mJcm⁻², more preferably in the range from 50 to 7200 mJcm⁻², very preferably in the range from 100 to 3500 mJcm⁻² and most preferably in the range from 200 to 2000 mJcm⁻².

Photopolymerization (or the second irradiation step or 2^{nd} UV step of the two-step process) is preferably performed under an inert gas atmosphere, preferably in a nitrogen atmosphere. Further preferably photopolymerization (or the second irradiation step or 2^{nd} UV step in the two-step process) is preferably performed at room temperature.

The preferred thickness and retardation of a polymer film according to the present invention is determined by the optical properties desired from the film or the final product.

For optical applications of the polymer film, it preferably has a thickness of from 0.1 to 10 µm, very preferably from 0.1 to 2 µm, in particular from 0.1 to 1 µm.

In a preferred embodiment, the polymer film according to the present invention shows planar alignment, i.e., the LC molecules are oriented parallel to the film plane and the helical axis is oriented substantially perpendicular to the film plane.

In another preferred embodiment the polymer film according to the present invention shows tilted alignment, i.e., the LC molecules are oriented at an angle to the film plane and the helical axis is oriented at an angle to the film plane, also referred as tilt angle. In a tilted film, the tilt angle between the helix axis and the axis normal to the film plane is from 5° to 45°, very preferably from 15° to 45°. In another preferred embodiment, the tilt angle between the helix axis and the axis normal to the film plane is from 0 to 15°, very preferably from 0 to 5°.

Planar alignment can be induced for example by providing an alignment layer on the substrate, for example a polyimide alignment layer, as described above. Tilted alignment can be achieved for example by adding an alignment additive to the RM mixture, or by using a substrate with a surface grating or pattern, e.g. a PB grating.

The birefringence (Δn) of the polymer film according to the present invention is preferably in the range from 0.1 to 0.8, more preferably from 0.2 to 0.7.

After photopolymerization, the resulting polymer film can be removed from the substrate and combined with other substrates or optical films by a laminating process known by the skilled person. Suitable substrates and optical films are given above and include especially polarisers, in particular linear polarisers, photoalignment layers, or diffraction gratings, for example PB gratings.

The polymer film according to the present invention has good adhesion to plastic substrates, in particular to TAC, COP, and colour filters. Accordingly, it can be used as adhesive or base coating for subsequent polymerized RM layers or LC layers which otherwise would not well adhere to the substrates.

In a preferred embodiment the substrate contains a cinnamate photoalignment layer onto which the RM formulation is printed.

The polymer film of the present invention can also be used as alignment film or substrate for other liquid-crystalline or RM materials. The inventors have found that the polymer film obtainable from a RM formulation as described above and below, is in particular useful for multilayer applications due to its improved dewetting characteristics. In this way, stacks of optical films or preferably polymerized LC films can be prepared.

A preferred embodiment of the present invention relates to a process of preparing an optical element, comprising the steps of:
A1) providing a first layer of an RM formulation according to the invention onto a substrate, which is optionally provided with an alignment layer and/or a surface grating or pattern, by a printing method, preferably by inkjet printing,
A2) removing any solvents present,
A3) optionally annealing the first RM layer (i.e., without solvents), preferably at a temperature where it is in the nematic or chiral nematic phase,
A4) polymerising the RM layer, preferably by exposure to UV light, under an inert atmosphere,
B1) providing a second layer of an RM formulation according to the invention on to the first RM layer by a printing method, very preferably by inkjet printing,
B2) removing any solvents present,
B3) optionally annealing the second RM layer (i.e., without solvents), preferably at a temperature where it is in the nematic or chiral nematic phase,
B4) polymerising the RM layer, preferably by exposure to UV light, under an inert atmosphere.

A third, fourth or further RM layers can be prepared by repeating process steps B1) to B4) using the same or a different RM formulation.

The RM formulation of the first layer and the RM formulation of the second layer are preferably different from each other. In a preferred embodiment the RM formulations used for preparation of the first and second layer, respectively, contain different amounts of a chiral compound(s) and/or contain chiral compounds with different HTP. As a consequence, the helical pitch of the first and second layer will be different from each other. Alternatively, an RM mixture or RM formulation containing a chiral dopant (chiral mixture) is blended with an RM mixture or RM formulation that does not contain a chiral compound (achiral mixture), which allows to easily vary the amount of the chiral dopant in the blend of the chiral and achiral mixture, and thereby to easily adjust the helical pitch of the final layer and polymer film. First and second layers can then be prepared from such RM mixtures or blended RM mixtures. Very preferably the RM mixture or formulation of the second layer contains a higher amount of the same chiral compound than the RM mixture or formulation of the first layer, and/or the RM mixture or formulation of the second layer contains a chiral compound with a higher HTP than the RM mixture or formulation of the first layer. Preferably the helical pitch in the first layer is longer than the helical pitch in the second layer.

The RM formulations and methods of the present invention do thus allow a simple way of preparing a multilayer of two or more chiral LC polymer films, by using an achiral RM host mixture comprising, or consisting of, one or more compounds selected from formulae D, M, A and T. This achiral RM host mixture can be used for the preparation of each individual layer. Chiral RM mixtures for use in the first, second or further layers, respectively, are prepared by adding different amounts of the same chiral compound to the RM host mixture, or by adding chiral compounds with differing HTP to the RM host mixture.

The polymer film according to the present invention has good adhesion to plastic substrates, in particular to TAC, COP, and colour filters. Accordingly, it can be used as adhesive or base coating for subsequent LC layers which otherwise would not well adhere to the substrates.

The polymer films of the present invention can also be used as alignment film or substrate for other liquid-crystalline or RM materials. The inventors have found that the polymer film obtainable from a RM formulation as described above and below, is in particular useful for multilayer applications due to its improved dewetting characteristics. In this way, stacks of optical films or preferably polymer films can be prepared.

The invention further relates to an optical, electrooptical or electronic device or a component comprising an RM mixture, RM formulation or polymer film as described above and below.

Said components include, without limitation, optical retardation films like quarter-wave plates (QWP) or half-wave plates (HWP), polarizers, optical compensators, reflective films, diffraction or surface gratings such as Bragg polarization gratings (Bragg PG), polarization volume gratings (PVG), polarization volume holograms (PVH), Pancharatnam Berry (PB) gratings, furthermore nonmechanical beam steering elements, optical waveguides, optical couplers, deflectors or combiners, polarization beam splitters, partial mirrors, reflective films, alignment layers, colour filters, antistatic protection sheets, electromagnetic interference protection sheets, lenses for light guides, focusing and optical effects, polarization controlled lenses, PB deflectors, PB lenses and IR reflection films; for example for use in LC displays (LCDs), organic light emitting diodes (OLEDs), autostereoscopic 3D displays, see-through near-eye displays, augmented reality( AR) or virtual reality (VR) systems, switchable windows, spatial light modulators, optical data storage, remote optical sensing, holography, spectroscopy, optical telecommunications, polarimetry or front/back-lighting.

Said devices include, without limitation, electro optical displays, especially LCDs, OLEDs, non-linear optic (NLO) devices, autostereoscopic 3D displays, see-through near-eye displays, head-up-displays, AR/VR systems, goggles for AR/VR applications, switchable windows, spatial light modulators, optical data storage devices, optical sensors, holographic devices, spectrometers, optical telecommunication systems, polarimeters or front-/backlights.

Preferably, the component is a diffraction grating, very preferably a PBG, PBL or Bragg PG, comprising one or more waveplates according to the present invention as described above and below, optionally together with further waveplates, polarizers and/or other components .

The waveplate according to the present invention is especially suitable for use in OLED displays or LC displays, head-up displays, e.g. for automotive use, NLO devices, autostereoscopic 3D displays, see-through near-eye displays, AR/VR systems, or goggles for AR/VR applications.

The present invention is described above and below with particular reference to the preferred embodiments. It should be understood that various changes and modifications might be made therein without departing from the spirit and scope of the invention.

Many of the compounds or mixtures thereof mentioned above and below are commercially available. All of these compounds are either known or can be prepared by methods which are known per se, as described in the literature (for example in the standard works such as Houben-Weyl, Methoden der Organischen Chemie [Methods of Organic Chemistry], Georg-Thieme-Verlag, Stuttgart), to be precise under reaction conditions which are known and suitable for said reactions.

Use may also be made here of variants which are known per se, but are not mentioned here.

It will be appreciated that variations to the foregoing embodiments of the invention can be made while still falling within the scope of the invention. Alternative features serving the same, equivalent, or similar purpose may replace each feature disclosed in this specification, unless stated otherwise. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

It will be appreciated that many of the features described above, particularly of the preferred embodiments, are inventive in their own right and not just as part of an embodiment of the present invention. Independent protection may be sought for these features in addition to or alternative to any invention presently claimed.

Unless explicitly noted otherwise, all temperature values indicated in the present application, such as, for example, for the melting point T(K,N), the transition from the smectic (S) to the nematic (N) phase T(S,N) and the clearing point T(N,I), are quoted in degrees Celsius (°C). Furthermore, K denotes the crystalline state, N denotes the nematic phase, and I denotes the isotropic phase. The data between these symbols represent the transition temperatures.

Unless explicitly noted otherwise, all physical properties have been and are determined according to "Merck Liquid Crystals, Physical Properties of Liquid Crystals", Status Nov. 1997, Merck KGaA, Germany and are given for a temperature of 20°C, unless explicitly stated otherwise.

Above and below, percentages are per cent by weight unless stated otherwise. All temperatures are given in degrees Celsius. All boiling points are given for atmospheric pressure.

Above and below, m.p. denotes the melting point, T_{NI} and cl.p. denote the nematic-isotropic phase transition temperature (or clearing point), T_{g} denotes glass transition temperature. Furthermore, C denotes the crystalline state, N denotes the nematic phase, S_{A}, S_{B} etc. denotes the smectic A phase, smectic B phase etc., S_{X} denotes an unidentified smectic phase, X denotes an unidentified mesophase and I denotes the isotropic phase. The values between these symbols represent the transition temperature in °C. Unless stated otherwise, the onset temperature is given for T_{NI}. Δ n denotes the optical anisotropy or birefringence (Δn = nₑ - nₒ, where nₒ denotes the refractive index perpendicular to the longitudinal molecular axes and nₑ denotes the refractive index parallel thereto) at 589 nm and room temperature. The optical and electro optical data are measured at 20°C, unless expressly stated otherwise.

"Clearing point" and "clearing temperature" mean the temperature of the transition from an LC phase into the isotropic phase.

Unless stated otherwise, the percentages of individual solid compounds in an RM mixture as described above and below refer to the total amount of solids in the mixture, i.e., without any solvents.

Unless stated otherwise, all optical, electro-optical properties and physical parameters like birefringence, permittivity, electrical conductivity, electrical resistivity and sheet resistance, refer to a temperature of 20°C.

The invention will now be described in more detail by reference to the following working examples, which are illustrative only and do not limit the scope of the invention.

### Example 1

### 1.1 RM Formulations

To test the wetting properties and inkjet printing performance, the RM mixture R1 is formulated as follows:

| **R1** | **% Composition** |
|---|---|
| Irganox^{®}1076 | 0.08% |
| TR-PBG 345 | 1.50% |
| IA1 | 0.39% |
| A17 | 26.41% |
| M10a | 15.14% |
| A1 | 46.48% |
| C1-1-6a | 10.00% |
| Total | 100% |

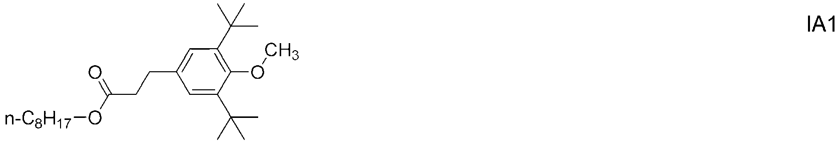

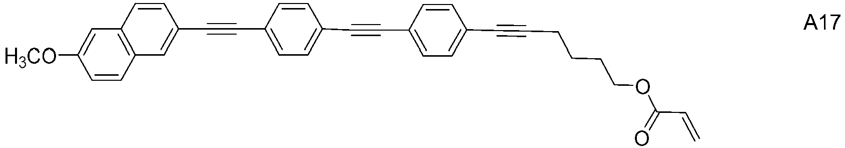

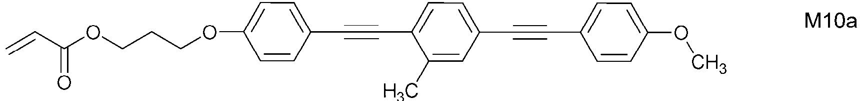

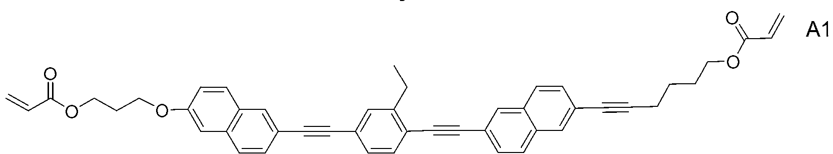

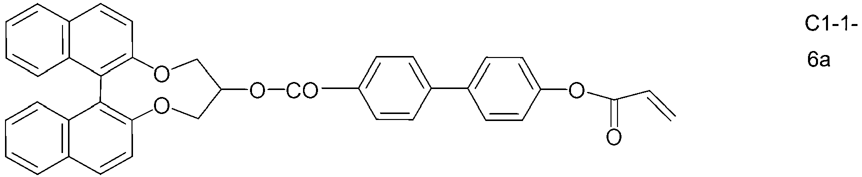

RM formulation F1 according to the present invention is prepared by dissolving mixture R1 at 15 wt.% of solids in the ternary solvent blend Cyclohexanone (first solvent) : Isobutyrophenone (second solvent) : 2-Undecanone (third solvent) with a ratio of 60:30:10.

For comparison purposes, reference RM formulations C1 and C2 are prepared by dissolving mixture R1 at 15 wt.% of solids in the binary solvent blends Cyclohexanone : Isobutyrophenone 30:70 (C1) and Cyclohexanone : 2-Undecanone 60:40 (C2), respectively.

### 1.2 Contact Angle Measurements

Typically, the wetting properties of a liquid on a specific substrate can be estimated by measuring the contact angle of the corresponding liquid on the corresponding substrate. When a droplet of the liquid is placed on the surface of the substrate, the contact angle formed at the liquid-solid interface provides insights into the liquid/solid affinity. A low contact angle (generally less than 90 degrees, but often less than 60 degrees) indicates good wetting, meaning the liquid spreads readily on the surface. A high contact angle (greater than 90 degrees) suggests poor wetting, where the liquid tends to bead up. When this is applied in inkjet printing, contact angles above 60 degrees can lead to the liquid not forming a continuous film.

A cinnamate photoalignment layer (PAL) is prepared by spin-coating a layer of a cinnamate precursor material (from Nissan Chemical) onto a glass substrate at 2000 rm for 25 sec, annealing on a hotplate at 70°C for 2 min, irradiating the layer through a wire grid polarizer with linearly polarized UV light using a UV LED lamp (365 nm) , and annealing again on a hotplate at 140°C for 3 min.

For each of formulations C1, C2 and F1 the contact angle on the cinnamate PAL is measured as follows: A drop of a formulation dispensed onto a substrate and a contact angle between solid, liquid, and air interface is measured with drop shape analyser. The measurement is repeated on four different droplets and the average value is reported in Table 1.

**Table 1: Contact Angle (CA) of RM formulations C1, C2 and F1 on cinnamate PAL**

| **Formulation** | **Solvent Blend (wt.% ratio)** | **CA [°]** |
|---|---|---|
| C1 | Cyclohexanone : Isobutyrophenone | 5.02 |
| | 30:70 | |
| C2 | Cyclohexanone : 2-Undecanone | 6.59 |
| | 60:40 | |
| F1 | Cyclohexanone : Isobutyrophenone : 2-Undecanone | 7.78 |
| | 60:30:10 | |

All RM formulations C1, C2 and F1 show low contact angles, which is an indicator for very good wetting on the cinnamate PAL substrate.

### 1.3 Inkjet Printing and Wetting

Reference RM formulation C3 is prepared by dissolving mixture R1 at 15 wt.% of solids in pure cyclohexanone.

The reference formulations C1, C2 and C3 and the formulation F1 according to the invention are each deposited on top of the cinnamate PAL by inkjet printing at RT using an LP50 inkjet printer and a Dimatix Samba cartridge. The printed RM layer is then annealed at 80°C for 3 min, and cured by UV irradiation using a high-pressure mercury vapor lamp (100 mW·cm⁻²) for 60 sec at 40°C to form a polymer film.

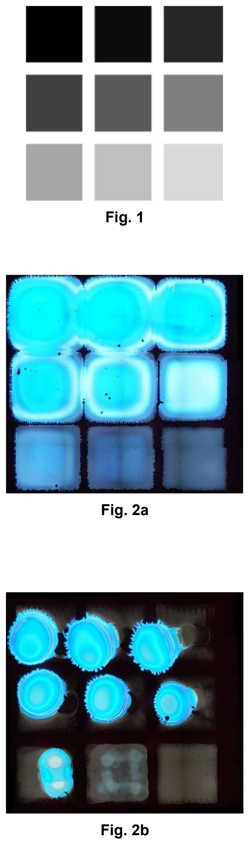

The wetting quality and film formation of the RM formulations C1, C2, C3 and F1 on the cinnamate PAL are then investigated by microscopy. A test pattern of 9 squares as shown in **Fig. 1** with different amount of deposited material is chosen to test the quality of the printed films in terms of shape.

**Fig. 2a****-d** show the stitched microscope images (x2 magnification) of the polymerized patterns prepared from inkjet printed RM formulations C1 **(a),** C2 **(b),** C3 **(c)** and F1 **(d),** respectively, between crossed polarizers.

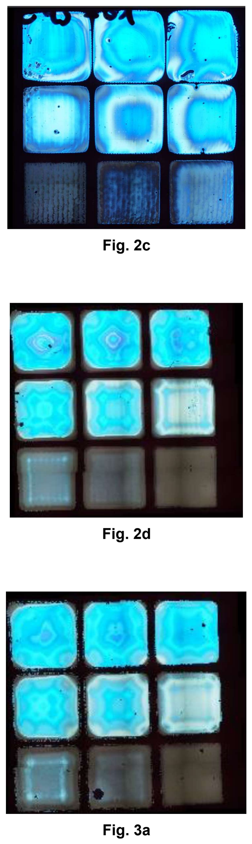

From **Fig. 2a** it can be seen that the polymerized patterns prepared from formulation C1 show good layer homogeneity but strong spreading and overflow of the formulation. From **Fig. 2b** it can be seen that the polymerized patterns prepared from formulation C2 show partial dewetting. From **Fig. 2c** it can be seen that the polymerized patterns prepared from reference formulation C3 in pure cyclohexanone show very pronounced stripe effects due to fast solvent evaporation.

Thus, although both the pure solvent cyclohexanone, and its binary blends with either a second or a third solvent as defined above, show low contact angle values on the tested photoalignment layer (<10 degrees, see Table 1), which is indicating good wetting properties, the inkjet-printed films deposited from the blend of cyclohexanone and 2-undecanone (C2) show poor wetting and film formation, while samples prepared by inkjet printing from a mixture of cyclohexanone and isobutyrophenone (C1) show good wetting, but a poor shape retention. As used herein, the expression "shape retention" refers to the correlation between the shape of intended printing pattern shown in **Fig. 1** and the resulting pattern as shown in **Fig. 2** etc.

In contrast thereto, from **Fig. 2d** it can be seen that the polymerized patterns prepared from formulation F1 according to the invention, which contains a ternary solvent blend with cyclohexanone as first solvent and a blend of the second solvent isobutyrophenone with better wetting and the third solvent 2-undecanone with less wetting (as determined by inket printing above) show both good wetting and good shape retention.

By further varying the ratio between the second solvent (with good wetting) and the third solvent (with less wetting) the solvent blend can be further optimized, as will be shown below.

### Example 2

RM formulations F2 and F3 according to the present invention are prepared by dissolving polymerizable mixture R1 of Example 1 at 15 wt.% of solids in a ternary solvent blend consisting of 60% of cyclohexanone and 40% of a blend of isobutyrophenone and 2-undecanone in different ratios as shown in Table 2.

**Table 2: Ratios of second and third solvent in RM formulations F2 and F3**

| **Formulation** | **Solvent Blend Isobutyrophenone : 2-Undecanone** |
|---|---|
| F2 | 4:1 |
| F3 | 5:1 |

The formulations F2 and F3 are inkjet printed on top of the cinnamate PAL and polymerized patterns are prepared as described in Example 1.

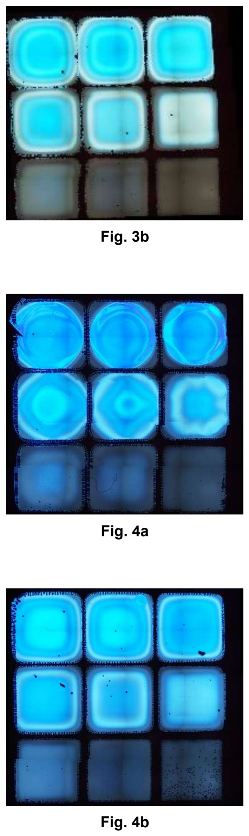

**Fig. 3a****&b** show the stitched microscope images (x2 magnification) of the polymerized patterns prepared from inkjet printed RM formulation **F2(a)** and F3 **(b)** according to the invention, respectively, between crossed polarizers. It can be seen that the polymerized patterns prepared from the printed formulations show improvement of shape retention at different ratios of the second and third solvent.

### Example 3

Optimization of wetting behavior can be achieved also by using other preferred ternary solvent blends containg an aromatic ketone as the second solvent and an aliphatic ketone as the third solvent.

RM formulations F4 and F5 according to the present invention are prepared by dissolving polymerizable mixture R1 of Example 1 at 15 wt.% of solids in a ternary solvent blend consisting of 60% of cyclohexanone and 40% of a blend of butyrophenone and 2-decanone in different ratios as shown in Table 3.

**Table 3: Ratios of second and third solvent in RM formulations F4 and F5**

| **Formulation** | **Solvent Blend Butyrophenone : 2-Decanone** |
|---|---|
| F4 | 2:1 |
| F5 | 3:1 |

The formulations F4 and F5 are inkjet printed on top of the cinnamate PAL and polymerized patterns are prepared as described in Example 1.

**Fig. 4a****&b** show the stitched microscope images (x2 magnification) of the polymerized patterns prepared from inkjet printed RM formulation F4 **(a)** and F5 **(b),** respectively, between crossed polarizers. It can be seen that that the polymerized patterns prepared from the printed formulations show very good wetting and shape retention at different ratios of the second and third solvent.

### Example 4

Similar wetting behaviour can be achieved when using solvent blends including one of the solvents of formula S2D, for example diethylene glycol monoethyl ether acetate (DEGMEA) .

Reference RM formulation C4 is prepared by dissolving polymerizable mixture mixture R1 of Example 1 at 15 wt.% of solids in a binary solvent blend consisting of 70% of cyclohexanone and 30% DEGMEA.

RM formulations F6 and F7 according to the present invention are prepared by dissolving polymerizable mixture R1 of Example 1 at 15 wt.% of solids in a ternary solvent blend consisting of 60% of cyclohexanone and 40% of a blend of isobutyrophenone and DEGMEA in different ratios as shown in Table 4.

**Table 4: Ratios of second and third solvent in RM formulations F6 and F7**

| **Formulation** | **Solvent Blend Isobutyrophenone : Diethylene glycol monoethyl ether acetate (DEGMEA)** |
|---|---|
| F6 | 1.5:1 |
| F7 | 3:1 |

The formulations C4, F6 and F7 are inkjet printed on top of the cinnamate PAL and polymerized patterns are prepared as described in Example 1.

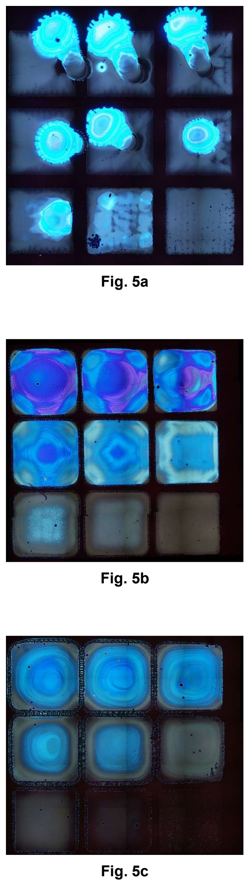

**Fig. 5a****-c** show the stitched microscope images (x2 magnification) of the polymerized patterns prepared from inkjet printed RM formulation C4 **(a),** F6 (b) and F7 **(c),** respectively, between crossed polarizers. From **Fig. 5a** it can be seen that reference formulation C4 with the binary solvent blend of cyclohexanone and DEGMEA shows strong dewetting. From **Fig. 5b****&c** it can be seen that formulations F6 and F7 according to the invention with a ternary solvent blend including cyclohexanone (first solvent), isobutyrophenone (second solvent) and DEGMEA (third solvent) allow for optimizing wetting behavior and shape retention.

## Claims

1. A formulation comprising a reactive mesogen (RM) or an RM mixture of two or more RMs, and further comprising a solvent blend consisting of three or more, preferably three, organic solvents,
wherein the solvent blend comprises a first solvent which is a cycloalkanone with 5, 6, 7 or 8 C atoms, a second solvent which is an aromatic ketone or an aromatic ester, and a third solvent which is an aliphatic ketone, an aliphatic or aromatic alcohol or a glycol.

2. The formulation according to Claim 1, **characterized in that** the first solvent is a cycloalkanone with 5, 6, 7 or 8 C atoms, preferably cyclohexanone or cycloheptanone, the second solvent is selected from formulae S1A and S1B, and the third solvent is selected from formulae S2A, S2B, S2C and S2D:
Ar^{S1}-(CH₂)ₐ-CO-R^{S1} S1A
Ar^{S2}-(CH₂)_{b}-Z^{S}-R^{S2} S1B
R^{S3}-CO-R^{S4} S2A
R^{S3}-C(OH)R^{S4}R^{S5} S2B
R^{S6}-OH S2C
R^{S7}-O-(CHR^{S8}-CHR^{S9}-O)_{c}-R^{S10} S2D
wherein the individual radicals, independently of each other and on each occurrence identically or differently, have the following meanings
Ar^{S1}, Ar^{S2} aryl or heteroaryl with 5 or 6 ring atoms, which optionally contains one or two hetero atoms selected from N, O and S, preferably phenyl, and which is optionally substituted by one or more groups L^{S},
L^{S} F, Cl, or optionally halogenated alkyl, alkoxy, alkylcarbonyl, alkoxycarbonyl, alkylcarbonyloxy or alkoxycarbonyloxy with 1 to 5 C atoms, preferably alkyl with 1 to 5 C-atoms,
R^{S1} alkyl with 1 to 8, preferably 1 to 6, C atoms, very preferably methyl, ethyl, n-propyl, sec-propyl, isopropyl, n-butyl, sec-butyl, isobutyl or tert-butyl, most preferably ethyl or isobutyl,
Z^{S} -CO-O- or -O-CO-,
R^{S2} alkyl with 1 to 8, preferably 1 to 6, C atoms, very preferably methyl, ethyl, propyl or butyl, most preferably methyl or ethyl,
R^{S3} alkyl with 1 to 7, preferably 1 to 5, C atoms, very preferably methyl, ethyl, propyl or butyl, most preferably methyl or ethyl,
R^{S4} alkyl with 1 to 15, preferably 8 to 12, C atoms,
and R^{S3} and R^{S4} may also together with the hydroxy-C-atom form an optionally substituted cycloalkyl group with 5 to 8, preferably 5 or 6, ring atoms,
R^{S5} H or alkyl with 1 to 6 C atoms, preferably H,
wherein the total number of C atoms in in formula S2A and S2B is from 5 to 16, very preferably from 5 to 12,
R^{S6} alkyl with 1 to 12, preferably 4 to 11, C atoms, or phenylalkyl with 1 to 4 alkyl-C-atoms, preferably phenylmethyl, 2-phenylethyl or 3-phenylpropyl,
R^{S7} H, methyl, acetyl or phenyl, very preferably H, acetyl or phenyl,
R^{S8}, R^{S9} methyl or ethyl, very preferably methyl,
R^{S10} H, methyl or ethyl,
a 0 or 1,
b 0 or 1,
c 1, 2 or 3.

3. The formulation according to Claim 1 or 2, **characterized in that** the second solvent is selected from the following formulae: 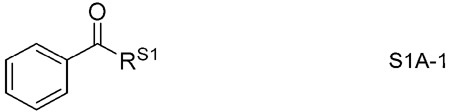 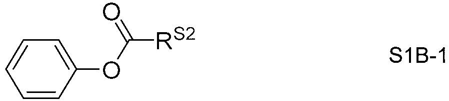 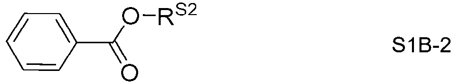 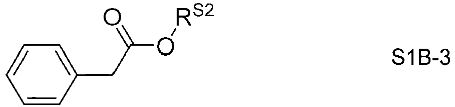 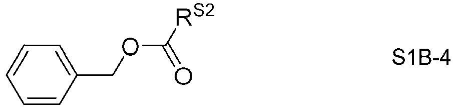 wherein R^{S1} has the meaning given in Claim 2 and is preferably selected from methyl, ethyl, n-propyl, isopropyl, n-butyl, sec-butyl, isobutyl and tert-butyl, very preferably from ethyl and isopropyl, and R^{S2} has the meaning given in Claim 2 and is preferably methyl or ethyl.

4. The formulation according to one or more of Claims 1 to 3, **characterized in that** the second solvent is selected from acetophenone, propiophenone, butyrophenone, isobutyrophenone, methyl benzoate, ethyl benzoate, methyl phenylacetate, butyl benzoate, benzyl propionate and phenyl proprionate, preferably from propiophenone, butyrophenone, isobutyrophenone, methyl benzoate, methyl phenylacetate and ethyl benzoate.

5. The formulation according to one or more of Claims 1 to 4, **characterized in that** the third solvent is selected from 2-nonanone, 2-decanone, 2-undecanone, 2-heptanol, 2-octanol, 2-nonanol, cyclopentanol, cyclohexanol, 1-hexanol, 1-heptanol, 1-octanol, 1-nonanol, 2-phenylethanol, phenylmethanol, 3-phenyl-1-propanol, PGME, DPM, TPM, PGMEA, DPMA, DEGMEA, TEGME and phenoxyethanol, preferably from 2-decanone, 2-undecanone, cyclopentanol, cyclohexanol, 2-phenylethanol, PGME, PGMEA, DEGMEA, TEGME and phenoxyethanol.

6. The formulation according to one or more of Claims 1 to 5, **characterized in that** the ratio (by weight) of the first solvent and the sum of the second and third solvent in the solvent blend is from 5:1 to 1:2, preferably from 4:1 to 1:1.

7. The formulation according to one or more of Claims 1 to 6, **characterized in that** the ratio (by weight) of the second and the third solvent in the solvent blend is preferably from 1:1 to 8:1, preferably from 1.5:1 to 7:1.

8. The formulation according to one or more of Claims 1 to 7, **characterized in that** it comprises one or more RMs selected from formulae D and M
P¹-Sp¹-MG-Sp²-P² D
P¹-Sp¹-MG-R²² M
wherein the individual radicals, independently of each other and on each occurrence identically or differently, have the following meanings
P¹, P² a polymerizable group,
Sp¹, Sp² a spacer group or a single bond,
MG a rod-shaped mesogenic group, which is preferably selected of formula MG
-(A¹-Z¹)ₙ-A²- MG
A¹ and A² an aromatic or alicyclic group, which optionally contains one or more heteroatoms selected from N, O and S, and is optionally mono- or polysubstituted by L,
L P-Sp-, F, Cl, Br, I, -CN, -NO₂ , -NCO, -NCS, -OCN, -SCN, - C(=O)NR^{x}R^{y}, -C(=O)OR^{x}, -C(=O)R^{x}, -NR^{x}R^{y}, -OH, -SF₅, optionally substituted silyl, aryl or heteroaryl with 1 to 12, preferably 1 to 6 C atoms, and straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl, and in formula M L is different from P-Sp-,
R^{x} and R^{y} H or alkyl with 1 to 12 C-atoms,
Z¹ -O-, -S-, -CO-, -COO-, -OCO-, -S-CO-, -CO-S-, -O-COO-, -CO-NR⁰⁰-, -NR⁰⁰-CO-, -NR⁰⁰-CO-NR⁰⁰⁰, -NR⁰⁰-CO-O-, -O-CO-NR⁰⁰-, - OCH₂-, -CH₂O-, -SCH₂-, -CH₂S-, -CF₂O-, -OCF₂-, -CF₂S-, -SCF₂-, - CH₂CH₂-, -(CH₂)ₙ₁, -CF₂CH₂-, -CH₂CF₂-, -CF₂CF₂-, -CH=N-, - N=CH-, -N=N-, -CH=CR⁰⁰-, -CY¹=CY²-, -C≡C-, -CH=CH-COO-, - OCO-CH=CH- or a single bond, preferably -COO-, -OCO- or a single bond,
R⁰⁰, R⁰⁰⁰ H or alkyl having 1 to 12 C atoms,
Y¹ and Y² H, F, Cl or CN,
R²² P-Sp-, F, Cl, Br, I, -CN, -NO₂ , -NCO, -NCS, -OCN, -SCN, - C(=O)NR^{x}R^{y}, -C(=O)X, -C(=O)OR^{x}, -C(=O)R^{y}, -NR^{x}R^{y}, -OH, -SF₅, optionally substituted silyl, straight chain or branched alkyl, alkoxy, alkylcarbonyl, alkoxycarbonyl, alkylcarbonyloxy or alkoxycarbonyloxy with 1 to 12, preferably 1 to 6 C atoms, wherein one or more H atoms are optionally replaced by F or Cl,
X halogen, preferably F or Cl,
n 1, 2, 3 or 4, preferably 1 or 2, most preferably 2,
n1 an integer from 1 to 10, preferably 1, 2, 3 or 4.

9. The formulation according to one or more of Claims 1 to 8, **characterized in that** it comprises one or more RMs selected from formulae T and A 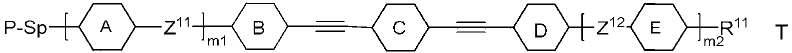 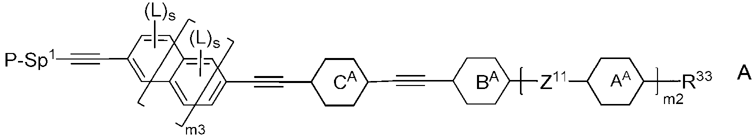 wherein the individual radicals, independently of each other and on each occurrence identically or differently, have the following meanings
P a polymerizable group,
Sp a spacer group or a single bond,
Sp¹ a spacer group or a single bond, preferably alkylene with 1 to 12, more preferably with 3 to 6, C atoms,
R¹¹ H, F, Cl, CN, alkyl, alkoxy, thioalkyl, alkylcarbonyl, alkoxycarbonyl, alkylcarbonyloxy or alkoxycarbonyloxy with 1 to 15, preferably with 1 to 5, C atoms which is optionally optionally fluorinated, or P-Sp,
R³³ H, F, Cl, CN, CH=CH₂, alkyl, alkoxy, thioalkyl, alkylcarbonyl, alkoxycarbonyl, alkylcarbonyloxy or alkoxycarbonyloxy with 1 to 6, preferably with 1 to 3, C atoms which is optionally fluorinated or chlorinated, or P-Sp,
A, B, D, and E are selected from the group consisting of 1,4-phenylene, naphthalene-1,4-diyl, naphthalene-2,6-diyl, phenanthrene-2,7-diyl, anthracene-9,10-diyl, fluorene-2,7-diyl, dibenzothiophene-2,7-diyl, dibenzofuran-2,7-diyl, benzo[1,2-b:4,5-b']dithiophene-2,5-diyl, indole-4,7-diyl, benzothiophene-4,7-diyl, 9,10-dihydro-phenanthrene-2,7-diyl, 1,2,3,4-tetrahydronaphthalene-5,8-diyl or indane-2,5-diyl, where, in addition, one or more CH groups in these groups may be replaced by N, all of which are optionally substituted by one or more groups L or P-Sp-,
C is selected from the group consisting of benzene-1,4-diyl, naphthalene-1,4-diyl, anthracene-9,10-diyl, fluorene-2,7-diyl, dibenzofuran-2,7-diyl, dibenzothiophene-2,7-diyl, benzo[1,2-b:4,5-b']dithiophene-2,5-diyl, indole-4,7-diyl, benzothiophene-4,7-diyl, all of which are optionally substituted by one or more groups L or P-Sp, and one of rings C and D may also denote a single bond,
A^{A}, B^{A} phenylene-1,4-diyl, naphthalene-1,4-diyl, naphthalene-2,6-diyl, fluorene-2,7-diyl, dibenzothiophene-2,7-diyl, dibenzofuran-2,7-diyl, benzo[1,2-b:4,5-b']dithiophene-2,5-diyl, indole-4,7-diyl, benzothiophene-4,7-diyl, 9,10-dihydro-phenanthrene-2,7-diyl or 1,2,3,4-tetrahydronaphthalene-5,8-diyl where, in addition, one or more CH groups in these groups may be replaced by N, all of which are optionally substituted by one or more groups L or P-Sp-.
C^{A} phenylene-1,4-diyl, naphthalene-1,4-diyl, or naphthalene-2,6-diyl, preferably phenylene-1,4-diyl or naphthalene-2,6-diyl, in which, in addition, one or more CH groups in these groups may be replaced by N, and which are optionally substituted by one or more groups L or P-Sp-, wherein preferably not more than one of A^{A}, B^{A} and C^{A} denote naphthalene-1,4-diyl,
L F, Cl, -CN, -SCN, P-Sp-, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O-, CR⁰=CR⁰⁰-, -C≡C-, 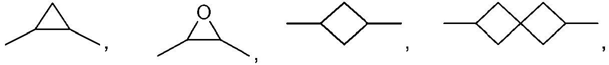 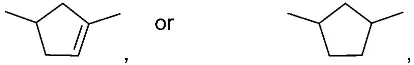 in such a manner that O- and/or S-atoms are not directly connected with each other, and wherein one or more H atoms are each optionally replaced by P-Sp-, F or Cl, or two substituents L that are connected to directly adjacent C atoms may also form a cycloalkyl or cycloalkenyl group with 5, 6, 7 or 8 C atoms,
Z¹¹, Z¹² -O-, -S-, -CO-, -COO-, -OCO-, -S-CO-, -CO-S-, -O-COO-, -CO-NR⁰-, -NR⁰-CO-, -NR⁰-CO-NR⁰⁰, -NR⁰-CO-O-, -O-CO-NR⁰-, -OCH₂-, -CH₂O-, -SCH₂-, -CH₂S-, -CF₂O-, -OCF₂-, -CF₂S-, -SCF₂-, -CH₂CH₂-, -(CH₂)ₙ₁, -CF₂CH₂-, -CH₂CF₂-, -CF₂CF₂-, -CH=N-, -N=CH-, -N=N-, -CH=CR⁰-, -CY¹=CY²-, -C≡C-, -CH=CH-COO-, -OCO-CH=CH- or a single bond, preferably -COO-, -OCO-, -C≡C-, or a single bond, most preferably a single bond,
R⁰, R⁰⁰ H or alkyl having 1 to 12 C atoms,
Y¹, Y² H, F, Cl, NCS, or CN,
m1, m2 0, 1, 2, 3 or 4, preferably 0, 1 or 2, very preferably 0 or 1, most preferably 0,
m3 0 or 1,
n1 1, 2, 3 or 4,
s 0, 1, 2 or 3, preferably 0, 1 or 2.

10. The formulation according to one or more of Claims 1 to 9, **characterized in that** it further comprises one or more chiral compounds which are optionally polymerizable and/or isomerizable.

11. The formulation according to one or more of Claims 1 to 10, **characterized in that** it further comprises one or more additives, preferably selected from the group consisting of polymerization initiators, surfactants, stabilisers, catalysts, sensitizers, inhibitors, chain-transfer agents, co-reacting monomers, reactive thinners, surface-active compounds, lubricating agents, wetting agents, dispersing agents, hydrophobing agents, adhesive agents, flow improvers, degassing or defoaming agents, deaerators, diluents, reactive diluents, auxiliaries, colourants, dyes, pigments and nanoparticles.

12. A polymer or polymer film obtainable or obtained from a formulation according to one or more of Claims 1 to 11.

13. A process of preparing a polymer or polymer film according to Claim 12, comprising the steps of depositing a layer of the formulation according to one or more of Claims 1 to 11 onto a substrate, preferably removing the solvents, optionally annealing the layer, and polymerizing the RM or RM mixture, preferably at a temperature where it exhibits a liquid crystal phase, and wherein the formulation is preferably deposited onto the substrate by a printing method, very preferably by inkjet printing.

14. The process according to Claim 13, **characterized in that** the substrate comprises a cinnamate alignment layer onto which the RM formulation is printed.

15. Use of the formulation, polymer or polymer film according to one or more of Claims 1 to 14 in optical, electrooptical or electronic components or devices.

16. An optical, electrooptical or electronic device or a component thereof, comprising a formulation, polymer or polymer film according to one or more of Claims 1 to 12.

17. The component of Claim 16, which is selected from optical retardation films like quarter-wave plates (QWP) or half-wave plates (HWP), polarizers, optical compensators, reflective films, diffraction or surface gratings such as Bragg polarization gratings (Bragg PG), polarization volume gratings (PVG), polarization volume holograms (PVH), Pancharatnam Berry (PB) gratings, furthermore nonmechanical beam steering elements, optical waveguides, optical couplers, deflectors or combiners, polarization beam splitters, partial mirrors, reflective films, alignment layers, colour filters, antistatic protection sheets, electromagnetic interference protection sheets, lenses for light guides, focusing and optical effects, polarization controlled lenses, PB deflectors, PB lenses and IR reflection films.

18. The device of Claim 16, which is selected from liquid crystal displays, organic light emitting diodes, non-linear optic (NLO) devices, autostereoscopic 3D displays, head-up-displays, see-through near-eye displays, AR/VR systems, goggles for AR/VR applications, switchable windows, spatial light modulators, optical data storage devices, optical sensors, holographic devices, spectrometers, optical telecommunication systems, polarimeters or front-/backlights.
